(19) Europäisches Patentamt
European Patent Office
Office européen des brevets

(11) EP 1 576 629 B1

(12) # FASCICULE DE BREVET EUROPEEN

(45) Date de publication et mention de la délivrance du brevet:
**02.11.2016 Bulletin 2016/44**

(21) Numéro de dépôt: **03799652.7**

(22) Date de dépôt: **19.12.2003**

(51) Int Cl.:
***H01G 4/32*** (2006.01) ***B65H 23/195*** (2006.01)
***H01M 10/04*** (2006.01) ***H01M 10/28*** (2006.01)

(86) Numéro de dépôt international:
**PCT/FR2003/003821**

(87) Numéro de publication internationale:
**WO 2004/059669 (15.07.2004 Gazette 2004/29)**

(54) **DISPOSITIF DE REALISATION D'UN ENSEMBLE DE STOCKAGE D'ENERGIE ELECTRIQUE COMPRENANT UN MANDRIN D'ENROULEMENT PERFECTIONNE**

VORRICHTUNG ZUR HERSTELLUNG EINER SPEICHEREINHEIT FÜR ELEKTRISCHE ENERGIE ENTHALTEND EINE VERBESSERTE WICKELHÜLSE

DEVICE FOR PRODUCTION OF AN ELECTRICAL ENERGY STORAGE DEVICE COMPRISING AN IMPROVED ROLLING SPOOL

(84) Etats contractants désignés:
**CH IT LI**

(30) Priorité: **23.12.2002 FR 0216501**

(43) Date de publication de la demande:
**21.09.2005 Bulletin 2005/38**

(73) Titulaire: **Blue Solutions**
**29500 Ergué Gabéric (FR)**

(72) Inventeur: **LE GAL, Guy**
**F-29000 Quimper (FR)**

(74) Mandataire: **Regimbeau**
**20, rue de Chazelles**
**75847 Paris Cedex 17 (FR)**

(56) Documents cités:
**EP-A- 0 034 662** **GB-A- 810 959**
**GB-A- 2 213 322** **SU-A- 1 292 055**
**SU-A- 1 363 315** **US-A- 1 385 379**
**US-A- 4 265 410**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 576 629 B1

## Description

La présente invention concerne le domaine des ensembles de stockage d'énergie électrique.

Plus précisément encore, la présente invention concerne en particulier les ensembles électrochimiques multi-couches à base de matériaux polymères comprenant un électrolyte encadré par deux électrodes formant respectivement cathode et anode.

L'invention s'applique notamment, mais non exclusivement, aux dispositifs comprenant une anode à base de lithium.

La présente invention s'applique à la réalisation de condensateurs, super-condensateurs et générateurs ou batteries.

Des exemples de tels ensembles électrochimiques pourront être trouvés dans les documents FR-A-2737339, FR-A-2759087, FR-A-2759211, FR-A-2808622.

La présente invention a pour objet un dispositif permettant la réalisation, en automatique et en continu, de tels ensembles de stockage d'énergie électrique, sous la forme de galettes généralement planes, afin de permettre un empilement aisé et un raccordement sous forme série/parallèle, de plusieurs de tels ensembles.

Les inventeurs ont constaté qu'il est particulièrement avantageux de réaliser de tels ensembles de stockage d'énergie électrique sous forme d'un enroulement multi-couches généralement plan dès l'origine, afin d'éviter la réalisation de plis ou défauts équivalents dans la structure desdits ensembles.

En effet, les inventeurs ont constaté que la réalisation de tels ensembles sous forme d'un enroulement circulaire de révolution, ultérieurement aplani, conduit fréquemment à des défauts tels que plis ou bosses dans les différentes couches, et un mauvais interface entre celles-ci, le cas échéant un décollement local entre les différentes couches entraînant un affaiblissement de la capacité de stockage, en raison des contraintes générées dans les spires qui ont un développé différent d'une spire à l'autre.

Les inventeurs ont également constaté que ces problèmes, liés à l'état de la technique, peuvent accélérer le vieillissement des éléments, en diminuant le nombre de cycles charges/décharges tolérés par les éléments, dans le cas de batteries, voire aller jusqu'à l'autodécharge des éléments.

Plus précisément encore, dans ce contexte, la présente invention a pour but de proposer un dispositif de fabrication d'ensembles multi-couches à fonction de stockage d'énergie électrique présentant des qualités supérieures à l'art antérieur.

Ce but est atteint dans le cadre de la présente invention grâce à un dispositif de réalisation d'ensembles de stockage d'énergie électrique comprenant un mandrin adapté pour enrouler des films superposés sous forme d'un ensemble multi-couches, caractérisé par le fait que la section droite du mandrin a une section générale en fuseau et qu'il comprend des moyens aptes à modifier sur commande la section droite du mandrin, la modification de section du mandrin comprenant une réduction de la longueur du grand axe du mandrin.

Comme on l'exposera par la suite, la modification de section du mandrin peut notamment être utilisée pour pincer une extrémité des films à enrouler, à l'origine de l'enroulement et/ou pour provoquer un desserrage général de l'enroulement par rapport au mandrin, c'est à dire créer un certain jeu entre l'enroulement et la surface externe du mandrin, afin de faciliter l'extraction de l'enroulement.

La présente invention concerne également un procédé de réalisation d'ensembles de stockage d'énergie électrique par enroulement de films superposés, sur un mandrin, sous forme d'un ensemble multi-couches, caractérisé par le fait qu'il comprend au moins une étape consistant à modifier sur commande la section droite du mandrin, présentant une section générale en fuseau, par réduction de la longueur du grand axe du mandrin.

D'autres caractéristiques, buts et avantages de la présente invention apparaîtront à la lecture de la description détaillée qui va suivre et en regard des dessins annexés donnés à titre d'exemples non limitatifs et sur lesquels :

- la figure 1 représente une vue générale schématique des moyens principaux composant le dispositif conforme à la présente invention,
- la figure 2 représente une vue en bout partielle à échelle agrandie d'un mandrin d'enroulement conforme à un mode de réalisation préférentiel de la présente invention,
- la figure 3 représente une vue schématique des moyens d'enroulement conformes à la présente invention, composés de la combinaison d'un tel mandrin d'enroulement et d'un rouleau presseur associé,
- les figures 4, 5 et 6 représentent des vues similaires des moyens d'enroulement dans trois positions successives de leur cinématique,
- la figure 7 représente une vue partielle de moyens conformes à la présente invention situés en amont d'un ensemble de complexage,
- la figure 8 représente une vue partielle similaire de moyens conformes à la présente invention situés en aval de cet ensemble de complexage et en amont d'un module d'enroulement,
- les figures 9 à 16, qui seront décrites plus en détail par la suite, illustrent schématiquement, en coupe transversale, les structures multi-couches mises en oeuvre à différents stades de l'alimentation du dispositif conforme à la présente invention,
- les figures 17 à 20, qui seront également décrites plus en détail par la suite, représentent des vues en coupe transversale des trois structures multi-couches de base utilisées dans le cadre de l'invention et de la structure multi-couche résultante, avant pelliculage, destinée à l'alimentation du mandrin, les figures 17 à 20 illustrant plus précisément le positionnement relatif des bords latéraux longitudinaux des différentes couches impliquées,

- la figure 21 représente schématiquement un enroulement conforme à la présente invention (la figure 21 représente un nombre de spires inférieur à la réalité pour simplifier l'illustration),
- la figure 22 représente schématiquement des moyens d'entraînement d'un mandrin d'enroulement et d'un rouleau presseur associé, conformes à la présente invention,
- la figure 23 représente schématiquement des moyens de coupe localisée d'un collecteur de courant,
- la figure 24 représente schématiquement le collecteur de courant résultant comportant des coupes localisées,
- la figure 25 représente schématiquement un enroulement comportant de telles coupes,
- la figure 26 représente schématiquement le déploiement d'un collecteur de courant obtenu grâce à de telles coupes,
- la figure 27 représente les courbes d'évolution de vitesse du mandrin d'enroulement conforme à la présente invention et d'un rouleau presseur associé, à l'origine de l'enroulement, pour une rotation complète sur 360°, en fonction de leur position angulaire,
- la figure 28 représente des courbes similaires de variation de vitesse du mandrin et du rouleau presseur à la fin d'un enroulement, en fonction de leur position angulaire,
- la figure 29 représente la variation du rayon d'enroulement en fonction de l'angle du mandrin ainsi qu'une courbe de variation d'un facteur de correction en fonction de cet angle,
- la figure 30 représente un tableau qui illustre les données utilisées pour piloter l'évolution de la vitesse de rotation du mandrin d'enroulement,
- la figure 31 représente une vue schématique du bord tranchant d'une lame de coupe conforme à un mode de réalisation préférentiel de la présente invention,
- la figure 32 représente schématiquement un mode de réalisation préférentiel d'un dépelliculeur conforme à la présente invention,
- la figure 33 représente un synoptique général du dispositif conforme à la présente invention.
- la figure 34 représente une vue en coupe horizontale, selon le plan de coupe référencé XXXIV-XXXIV sur la figure 8, de moyens de commande de mors du mandrin,
- la figure 35 représente, en position juxtaposée deux demi-axes de commande de déplacement relatif des mors du mandrin,
- la figure 36 représente une vue en coupe transversale d'un tronçon de l'un de ces deux demi-axes, selon un plan de coupe référencé XXXVI-XXXVI sur la figure 38,
- la figure 37 représente une vue axiale en bout des deux demi-axes précités,
- les figures 38 et 39 représentent des vues respectives latérales des deux demi-axes,
- la figure 40 représente une vue en plan, selon une vue orthogonale aux figures 38 et 39, d'un tel demi-axe,
- la figure 41 représente une vue latérale des moyens mécaniques de commande des demi-axes assurant l'orientation relative des deux mors du mandrin,
- la figure 42 représente une vue selon l'orientation référencée XXXXII sur la figure 41 des mêmes moyens,
- la figure 43 représente une vue partielle des mêmes moyens, notamment des vérins de commande, selon l'orientation référencée XXXXIII sur la figure 41,
- les figures 44A à 44F représentent six positions successives des mors du mandrin au cours d'une séquence de fermeture du mandrin,
- la figure 45 représente les mors du mandrin en position initiale pour la rotation du mandrin en vue d'un enroulement,
- les figures 46A à 46H représentent huit positions successives des mors du mandrin au cours de cette rotation,
- les figures 47A à 47F représentent six positions successives du mandrin et d'un rouleau presseur additionnel escamotable au cours de la séquence du dernier tour d'enroulement,
- la figure 48 schématise la phase d'escamotage de ce rouleau presseur additionnel,
- la figure 49 schématise la phase d'arrêt de rotation du mandrin et d'ouverture des mors,
- la figure 50 schématise la phase d'extraction de l'élément enroulé,
- les figures 51A à 51E schématisent cinq positions successives et relatives des portes mors du mandrin,
- les figures 52A à 52E représentent respectivement les cinq positions des mors du mandrin correspondant respectivement aux figures 51A à 51E,
- les figures 53A à 53E représentent les cinq positions de moyens de commande mécanique correspondant respectivement aux cinq figures 51A à 51E,
- la figure 54 représente une variante de réalisation du mandrin,
- les figures 55A et 55B représentent deux vues d'une autre variante de réalisation du mandrin, respectivement dans une position de préhension de bande par aspiration d'air et d'extraction d'élément,
- les figures 56A, 56B et 56C représentent trois vues d'une autre variante de réalisation de mandrin, respectivement en position d'enroulement, en position d'extraction, et en vue axiale,
- la figure 57 représente une vue schématique en bout d'un mandrin conforme à une autre variante de réalisation,
- la figure 58 représente une vue en bout d'un mandrin conforme à une autre variante de réalisation selon l'invention, et

- la figure 59 représente une vue schématique en bout d'un mandrin conforme à une autre variante de réalisation de l'invention.

Dans la suite de la description on utilisera les termes « amont » et « aval » en référence au sens de déplacement des complexes dans le dispositif, le terme « amont » qualifiant les éléments situés avant une référence donnée, tandis que le terme « aval » qualifie les éléments situés après celle-ci.

Le dispositif de réalisation d'ensembles de stockage d'énergie électrique conforme à la présente invention comprend essentiellement, comme illustré sur la figure 1 annexée :

- des moyens A d'alimentation en structures multicouches, et
- des moyens E d'enroulement de ces structures.

Les moyens d'alimentation A ont pour fonction d'acheminer plusieurs ensembles mono-couches ou multi-couches 90, 92, 94, initialement séparés et de complexer, c'est-à-dire de superposer et de lier, ceux-ci. Les moyens d'alimentation A ont également pour fonction d'assurer un positionnement relatif précis des bords longitudinaux des différentes couches impliquées dans le complexe final 96.

Les différents éléments mono-couches ou multi-couches et les complexes résultant mis en oeuvre dans le cadre de la présente invention, sont déplacés parallèlement à un bâti 900 dont la fonction sera définie plus en détail par la suite.

Le mode de réalisation particulier du dispositif illustré sur la figure 1 annexée est destiné à la réalisation d'ensembles générateurs formés d'un empilement de six couches : un collecteur 10 (par exemple en aluminium), une cathode 20 (par exemple à base de POE (polyoxyéthylène) et de sel de lithium), une couche d'électrolyte 30, une anode 40, par exemple en lithium, une couche d'électrolyte 50 et une cathode 60. Les électrolytes 30 et 50 sont par exemple à base de $LiV_3O_8$ ou $V_2O_5$ et POE. Le collecteur en Al 10 est de préférence revêtu d'une barrière anticorrosion, par exemple à base de nitrure de Ti ou autre, graphite par exemple.

Cependant, l'invention n'est pas limitée à cet exemple particulier.

Dans ce contexte, les moyens d'alimentation A comprennent trois magasins d'alimentation séparés 100, 200 et 300.

Le moyen d'alimentation 100 est destiné à l'alimentation d'un complexe 90 quatre couches comprenant la cathode 60 et la couche d'électrolyte 50 précitées placées en sandwich entre deux pellicules externes de protection 80, 81 (voir figure 9).

Le moyen d'alimentation 200 est destiné à l'alimentation de la feuille d'anode 40 (voir figure 11).

Le moyen d'alimentation 300 est destiné à l'alimentation d'un complexe 92 cinq couches comprenant : l'électrolyte 30, la cathode 20 et le collecteur 10 pris en sandwich entre deux pellicules externes de protection 82, 83 (voir figure 13).

De préférence, chacun de ces moyens d'alimentation 100, 200, 300 comprend une bobine du complexe souhaité, 90, 40 ou 92, préalablement réalisée par tout moyen approprié, placée à rotation sur le bâti commun 900 autour d'axes de rotation respectifs 102, 202, 302.

Bien entendu, les bobines formant les magasins d'alimentation 100, 200 et 300 sont montées de manière amovible sur le bâti 900 pour pouvoir être remplacées après épuisement.

Le complexage des trois ensembles 90, 40 et 92 issus respectivement des trois moyens d'alimentation 100, 200 et 300, c'est-à-dire l'empilage de ces ensembles, est réalisé dans un module de complexage C interposé entre la sortie des moyens d'alimentation 100, 200, 300, et les moyens d'enroulement E.

Sur la figure 1, les bobines des complexes 90, 40 et 92 placées dans les trois moyens d'alimentation 100, 200, 300, sont référencées respectivement 104, 204, 304.

Le complexe quatre couches 90 issu de la bobine 104 est guidé vers le module de complexage C par des rouleaux 110, 112, 114.

En aval de la sortie de bobine 104, le module 100 comprend un ensemble de dépelliculage 120 conçu pour retirer la pellicule 81 située côté face à complexer, sur l'électrolyte 50. Cet ensemble de dépelliculage 120 est positionné entre les rouleaux de renvoi 112 et 114.

La structure de complexe trois couches 50, 60, 80 obtenue en sortie de l'ensemble de dépelliculage 120 est illustrée sur la figure 10.

Par ailleurs, le moyen d'alimentation 100 comprend entre l'ensemble de dépelliculage 120 et le module de complexage C un module de chauffage 130. La structure et la fonction de celui-ci seront décrites plus en détail par la suite.

De manière similaire, le complexe cinq couches 92 issu de la bobine 304 est guidé vers le module de complexage C par des rouleaux 310, 312, 314.

En aval de la sortie de bobine 304, le module 300 comprend un ensemble de dépelliculage 320 conçu pour retirer la pellicule 82 située côté face à complexer, sur l'électrolyte 30. Cet ensemble de dépelliculage 320 est positionné entre les rouleaux de renvoi 312 et 314.

La structure de complexe quatre couches 83, 10, 20, 30 obtenue en sortie de l'ensemble de dépelliculage 320 est illustrée sur la figure 14.

Par ailleurs, le moyen d'alimentation 300 comprend entre l'ensemble de dépelliculage 320 et le module de complexage C un module de chauffage 330. La structure et la fonction de celui-ci seront décrites plus en détail par la suite.

L'ensemble d'alimentation 200 destiné à l'alimentation d'un film d'anode, de préférence à base de lithium, comprend deux rouleaux d'alimentation 240, 250, de pellicules respectives 84, 85.

Les pellicules 84, 85 et le film d'anode 40 sont guidés par des rouleaux 210, 212, vers un ensemble d'application primaire 260. Cet ensemble 260 a pour fonction de réunir sous forme d'un élément comprenant la couche d'anode 40 prise en sandwich entre les deux pellicules 84, 85, ces films initialement distincts provenant des bobines d'alimentation respectives 204, 240 et 250.

L'élément comprenant les deux pellicules 84 et 85 encadrant l'anode 40, est illustré sur la figure 12.

L'ensemble d'application 260 est formé de préférence de deux rouleaux pinceurs 262, 264 montés à rotation autour d'axes respectifs parallèles, recevant entre eux à défilement les trois films précités 84, 40, 85. De préférence, l'un 262 des rouleaux a son axe de rotation fixe dans l'espace, tandis que le second rouleau 264 placé en regard, qui sert de rouleau presseur, est sollicité à déplacement contre le rouleau 262 premier cité, sous un effort contrôlé, par exemple à l'aide de moyens élastiques, tels qu'une lame élastique 263.

Par ailleurs l'un au moins des deux rouleaux 262, 264 est motorisé. Il est contrôlé pour alternativement, entraîner par traction l'élément 84, 40, 85 , et freiner cet élément, en synchronisation avec le process aval. A ce titre les rouleaux 262, 264 sont asservis en esclave sur les moyens du processus aval.

Le cas échéant l'un au moins des rouleaux 262, 264 est monté sur un équipage escamotable, par exemple piloté par un vérin, pour permettre de séparer les deux rouleaux 262, 264 et faciliter ainsi la mise en place initiale de l'élément 84, 40, 85 entre ceux-ci.

En aval de l'ensemble d'application 260, le moyen d'alimentation 200 comprend un module 270 de sectionnement transversal de la couche d'anode 40.

A cette fin, le module de sectionnement 270 comprend un système de marteau 272 et d'enclume 274 disposés respectivement de part et d'autre du chemin de déplacement de l'élément 84, 40, 85. Le marteau 272 opère par frappe linéaire transversale au travers des pellicules de protection 84, 85.

L'un au moins du marteau 272 ou de l'enclume 274, de préférence le marteau 272, comprend une arête contondante.

Le marteau 272 est sollicité séquentiellement à la frappe contre l'enclume 274 pour délimiter dans le film initial 40 d'anode, une longueur avale correspondant à l'enroulement recherché. On notera que le marteau 272 opère sur l'élément comprenant l'anode 40 prise en sandwich entre les deux pellicules 84, 85. Cependant, les pellicules 84, 85 sont formées d'un matériau apte à résister à la frappe du marteau 272 pour éviter toute rupture des pellicules 84, 85.

Les deux pellicules 84, 85 sont retirées de l'élément précité illustré sur la figure 12, en sortie du module de sectionnement 270 par des moyens de dépelliculage 220, 225. Le cas échéant ces moyens de dépelliculage 220, 225 peuvent être formés par le marteau 272 et l'enclume 274 eux mêmes.

Le tronçon de l'anode 40 situé en avant de la ligne de rupture définie par le module 270 est entraîné par les moyens d'entraînement situés en aval, ce tronçon d'anode 40 étant lui-même pris en sandwich entre les deux ensembles 50, 60, 80, d'une part, et 83, 10, 20, 30, d'autre part, dans le module de complexage C.

Le tronçon du film d'anode 40 situé en amont de la ligne de rupture est quant à lui entraîné par les pellicules 84, 85, puisque celles-ci, comme indiqué précédemment, ne sont pas sectionnées dans le module 270.

On notera sur ce point que l'ensemble des pellicules 80, 81, 82, 83, 84 et 85, a non seulement pour fonction d'éviter une pollution des faces externes de complexe par l'environnement extérieur et d'empêcher le collage des complexes sur les différents rouleaux impliqués, mais de plus participe à l'entraînement de leur complexe associé.

Les pellicules 80, 81, 82, 83, 84 et 85 sont avantageusement à base de PP (polypropylène), PE (polyéthylène), PET (polyéthylène téréphtalate) ou analogue.

Lorsque celles-ci sont retirées, elles le sont le plus loin possible sur leur trajectoire, de sorte que le film associé ne passe jamais nu sur un rouleau de son parcours, afin d'éviter la pollution à la fois du film et du rouleau.

On notera par ailleurs que les deux dérouleurs de pellicule 240, 250 associés au dérouleur d'anode 204 sont sensiblement adjacents et que la pellicule 84 issue du dérouleur 240 entoure le rouleau d'anode 204 sur un arc d'enroulement (« embarrage » selon l'expression consacrée) important (typiquement supérieur à 90° et préférentiellement au moins égal à 270°) pour à la fois assurer une bonne protection de ce film fragile et garantir un entraînement mécanique adéquat. Cet arc d'enroulement de l'anode 204 par la pellicule 84 est référencé $\beta$ sur la figure 7 annexée. Il varie en fonction du rayon de la spire externe de film présent sur le dérouleur 240.

La commande séquentielle d'une part, de l'entraînement des pellicules 84 et 85, et par conséquent du tronçon d'anode 40 situé en amont de la ligne de rupture, et d'autre part, de l'entraînement des pellicules 80 et 83 et par conséquent du tronçon d'anode situé en aval de cette ligne de rupture, est de préférence adaptée pour définir un intervalle, par exemple de l'ordre de 20mm entre les deux tronçons précités, après rupture. Plus précisément la frappe de l'outil 272 est synchronisée avec l'arrêt en frein des rouleaux pinceurs 262, 264 de façon à créer une interruption de défilement du lithium 40 pendant que le complexage continue en aval à la même vitesse.

On évite ainsi, grâce à la pré-rupture de la couche d'anode 40, d'avoir à couper en aval, simultanément, toutes les couches composant le complexe final, ce qui risquerait de pincer toutes les couches entre elles et pourrait entraîner des courts-circuits entre l'anode 40, les cathodes 20, 60 et le collecteur 10.

Pour éviter de détériorer l'interface adjacente aux pellicules, notamment par arrachement, lors du retrait de celles-ci, de préférence le dépelliculage, au niveau des postes 120, 220, 225 et 320 précités, est réalisé à l'aide d'un système racleur 230 schématisé sur la figure 32, disposé tangentiellement au film concerné et doté d'une arête polie 232 presque vive, adapté pour assurer un pelage de la pellicule grâce à une déviation brutale de celle-ci d'au moins 60° (voir figure 32), le cas échéant avec retournement sur elle-même de celle-ci sensiblement à 180°, selon un rayon de courbure faible (typiquement un rayon proche de 0,05mm). Le racleur 230 est formé d'une lame statique à arête émoussée 232 proche du plan de déplacement, en amont, du film qui porte la pellicule. L'arête 232 à sa convexité dirigée vers l'aval du déplacement du film.. Les inventeurs ont en effet déterminé qu'un tel pelage permettait de préserver la surface du complexe adjacent alors qu'un arrachement de la pellicule sans précaution détériore généralement celle-ci. Le racleur précité 230 permet en effet un décollement de la pellicule par effet de cisaillement entre le film fonctionnel et la pellicule de protection. En tirant la pellicule de protection autour de l'arête 232 du racleur 230, on crée un allongement de la courbure extérieure de la couche de pellicule de protection, ce qui crée localement une force tangentielle sur la dite couche, un micro-étirage de la pellicule et un effet de glissement de la couche de pellicule sur le film fonctionnel, évitant ainsi l'arrachement de particules du produit fonctionnel.

De préférence, le dispositif comprend également des moyens de réglage de l'effort de traction exercé sur la pellicule de protection lorsque celle-ci est déviée sur l'arête émoussée 232 du racleur 230.

Sur la figure 1, le système racleur des ensembles de dépelliculage 120, 320, sont référencés 122, 322. Les pellicules 81, 82, 84 et 85, retirées sur les postes 120, 320, 220 et 225, sont dirigées vers des rouleaux respectifs 124, 324, 224 et 229. A cette fin, les pellicules 84 et 85, sont guidées par des rouleaux 221, 222, d'une part, et 226 d'autre part.

Les moyens de chauffage 130 et 330 ont pour fonction de porter à température contrôlée la surface externe d'interface des électrolytes 50 et 30 avant que ceux-ci ne soient portés au contact de la couche d'anode 40 dans l'ensemble de complexage C, pour permettre par la suite une bonne adhérence entre les couches d'électrolyte 50 et 30 et l'anode 40. De préférence, ces moyens de chauffage 130 et 330 sont formés de fours à montée en température rapide et à descente en température rapide, aptes à opérer un balayage d'air chaud, par une circulation forcée en boucle et régulée d'air chaud, sur les interfaces précitées. Typiquement, les moyens de chauffage 130 et 330 sont conçus pour diffuser de l'air comprimé thermostaté, à la précision du °C, par exemple à 60°C, sur les interfaces d'électrolytes 50 et 30.

Plus précisément encore, l'ensemble du dispositif conforme à la présente invention comprenant des phases séquentielles d'interruption de déplacement des films d'alimentation en amont du module d'enroulement E, pour permettre la coupe du complexe, l'évacuation successive de chaque enroulement, et le réengagement d'un élément suivant, de préférence les fours 130 et 330 sont également pilotés de manière séquentielle. C'est-à-dire que la diffusion d'air chaud, dans les fours 130 et 330 est interrompue cycliquement lors de l'arrêt du défilement des complexes, afin d'éviter une montée en température néfaste de la portion des complexes située dans ces fours. Une surexposition à la chaleur de ces tronçons de films pourraient en effet altérer la qualité du complexe final.

Par ailleurs pour éviter une montée en température intempestive des tronçons de film stagnant dans les fours, pendant les phases d'arrêt, les moyens de chauffage 130, 330 peuvent comporter des moyens aptes à insuffler séquentiellement un jet d'air frais comprimé sur les films. Ces moyens sont adaptés typiquement pour ramener la température à l'intérieur des fours à une valeur de l'ordre de 40°C.

De préférence les fours 130, 330 sont formés d'un circuit en boucle. Sur les figures on a référencé 132, 332, les tronçons de ces fours dans lesquels circulent les films multicouches et 134, 334 des ventilateurs assurant séquentiellement la soufflerie d'air chaud et d'air froid. Pour assurer le chauffage, de préférence des éléments chauffants constitués de multifils nus électriquement conducteurs sont placés en regard de la sortie des ventilateurs 134, 334.

On a repéré sur la figure 1 sous les références IX, X, XI, XII, XIII, XIV, XV et XVI respectivement la localisation sur le trajet du dispositif des différents complexes illustrés sur les figures 9, 10, 11, 12, 13, 14, 15 et 16.

Il est important de contrôler le positionnement relatif des bords latéraux longitudinaux des différents films 10, 20, 30, 40, 50 et 60 formant le complexe issu de l'ensemble C, afin d'éviter des contacts électriques parasites entre ces différentes couches.

On a représenté sur la figure 17 le positionnement relatif des bords longitudinaux de la pellicule 80, de la cathode 60 et de l'électrolyte 50 en aval du poste de dépelliculage 120. On notera que la cathode 60 possède une largeur inférieure à l'électrolyte 50, que ce dernier déborde de part et d'autre de la cathode 60, que la pellicule 80 possède une largeur supérieure à l'électrolyte 50 et qu'elle déborde de part et d'autre de celui-ci.

On a représenté sur la figure 18, le positionnement relatif des bords longitudinaux des pellicules 84, 85, et de l'anode 40. On notera que l'anode 40 possède une largeur inférieure aux deux pellicules 84, 85, lesquelles peuvent posséder des largeurs identiques et que les pellicules 84, 85, débordent de part et d'autre de l'anode 40.

On a représenté sur la figure 19, le positionnement relatif de la pellicule 83, du collecteur 10, de la cathode 20 et de l'électrolyte 30. On notera que la cathode 20 possède une largeur inférieure au collecteur 10, qu'un premier bord de la cathode 20 affleure un premier bord du collecteur 10, que l'électrolyte 30 possède une largeur supérieure à la cathode 20, qu'elle déborde de part et d'autre de celle-ci, que l'électrolyte 30 déborde par rapport au premier bord de la cathode 20 et du collecteur 10, mais que le second bord de l'électrolyte 30 est située en retrait du collecteur 10, que la pellicule 83 a un premier bord qui déborde par rapport au premier bord de l'électrolyte 30 mais possède un second bord qui affleure le second bord de l'électrolyte 30.

Enfin, on a représenté sur la figure 20, le positionnement relatif de la pellicule 80, de la cathode 60 de l'électrolyte 50, de l'anode 40, de l'électrolyte 30, de la cathode 20, du collecteur 10 et de la pellicule 83, en sortie du module de complexage C.

On notera que les bords des électrolytes 50 et 30 sont superposés, l'anode 40 ayant un bord en retrait des électrolytes 50 et 30 sur le côté émergeant du collecteur 10, tandis que l'anode 40 dépasse des électrolytes 30, 50 sur le côté opposé.

On a référencé XVII, XVIII, XIX et XX sur la figure 1, la localisation des complexes représentés respectivement sur les figures 17, 18, 19 et 20.

Le positionnement relatif des couches représenté sur les figures 17 et 18 est assuré lors de la réalisation des bobines d'alimentation 104 et 304. Le positionnement relatif représenté sur la figure 19 est assuré lors du pelliculage dans le module 260. Le positionnement relatif représenté sur la figure 20 est assuré dans le module de complexage C.

Afin de définir le positionnement relatif (que l'on peut également qualifier « d'alignement relatif ») nécessaire entre les deux sous-ensembles représentés sur les figures 17 et 19 et la couche d'anode 40, il est prévu de préférence des moyens aptes à détecter le positionnement des bords longitudinaux des complexes respectifs en amont de l'ensemble de complexage C et des moyens aptes à déplacer ces complexes, par rapport à un référentiel commun, en amont du module de complexage C, pour obtenir le positionnement relatif souhaité. De préférence, ces moyens de déplacement agissent sur les moyens d'alimentation 100, 200 et 300. A cette fin, de préférence, chacun de ces moyens d'alimentation 100, 200 et 300 est monté sur une platine individuelle susceptible de déplacement contrôlé par rapport au bâti support général 900 du dispositif. Plus précisément encore, de préférence, chacune de ces platines est montée à pivotement autour d'un axe respectif 101, 201, 301 et associée à un moyen de déplacement contrôlé.

Les moyens de détection de positionnement des bords des complexes sont formés de préférence de moyens optiques, le cas échéant infra-rouge ou laser, ou de moyens ultrasons, disposés sur une fourche à deux éléments émetteur/récepteur disposés respectivement de part et d'autre du trajet de déplacement du multicouche.

Sur la figure 1 on a référencé 140 un tel moyen de détection associé au complexe issu des moyens 100, 280 le moyen équivalent de détection associé au complexe issu des moyens 260 et 340 le moyen équivalent de détection associé au complexe issu des moyens 300. Le moyen de détection 140 est placé entre le rouleau 114 et le four 130. Le moyen de détection 340 est placé entre le rouleau 314 et le four 330. Le moyen de détection 280 est placé entre le module primaire de complexage 260 et le module de complexage C.

Les moyens de déplacement précités peuvent être formés de moyens à base de vérins pneumatiques ou tous moyens équivalents.

De préférence, chacune des platines précitées porte un moyen d'amortissement apte à reposer contre le bâti commun précité 900 pour éviter toute vibration du dispositif. A titre d'exemple non limitatif, ces moyens d'amortissement peuvent être formés de ventouses.

Les axes de pivotement précités 101, 201 et 301 sont de préférence parallèles à la platine 900. Ils passent par le centre (axe de rotation 102, 202, 302) des dérouleurs 104, 204, 304 et par un plan médian de la largeur de la bobine placée sur le dérouleur. Ils sont par ailleurs parallèles aux tronçons de films multicouches respectifs associés, situés immédiatement en amont de l'ensemble de complexage C, imposés par les rouleaux 114, 262 et 314.

A cet égard on notera que le tronçon du film d'anode 40 situé en amont du module de complexage C, guidé par le rouleau 262, est situé sensiblement selon la bissectrice de l'angle formé par les tronçons des complexes 90 et 92 issus respectivement des dérouleurs104 et 304, en amont du module de complexage, tels que guidés par les rouleaux 114 et 314. Plus précisément encore, en amont du module de complexage, les complexes 90 et 92 font entre eux un angle de l'ordre de 150° et le film d'anode 40, situé selon leur bissectrice est sensiblement à 75° de chacun de ces deux complexes 90 et 92.

De même de préférence, l'anode 40 est située, en amont du module de complexage C, sensiblement selon la bissectrice des tronçons des pellicules 84 et 85 situés en aval des dépelliculeurs 220 et 225, lesquels tronçons de pellicules 84 et 85 font entre eux un angle de l'ordre de 60°.

Les rouleaux de renvoi 110, 112, 114, 221, 222, 226, 310, 312 et 314 permettent de disposer les chargeurs 104, 204 et 304 dans des positions éloignées, et de rapprocher les tronçons de complexe impliqués, en amont du module de complexage C de sorte que l'angle complet formé entre ceux-ci, au niveau du module de complexage, soit inférieur à 180°.

On notera que les moyens de positionnement relatif précités des complexes de base ont non seulement pour fonction de garantir une connectique électrique satisfaisante dans le produit final, et notamment une protection des cathodes par débordement de l'électrolyte, pour éviter les courts-circuits, mais également d'optimiser la surface active en fonctionnement, dans une largeur de complexe la plus faible possible.

Les rouleaux de réception des différents ensembles de dépelliculage 124, 224, 229, 324, 520 et 522 comprennent de préférence des enrouleurs motorisés.

De même les dérouleurs 104, 204 et 304 sont de préférence motorisés et paramétrés pour maîtriser la force de traction, constante sur les films multicouches impliqués. Il est en effet important de maintenir constante la traction exercée sur les films pour avoir une reproductibilité dans la réalisation des éléments.

Les moteurs ainsi associés aux dérouleurs 104, 204 et 304 sont commandés alternativement en moteur, à l'origine d'un enroulement de complexe, puis en frein lorsque l'entraînement du complexe est pris en charge par des moyens aval.

On notera en particulier que dans ce contexte, les moteurs des différents dérouleurs 104, 204, 304 et dépelliculeurs 124, 224, 229, 324, 520 et 522, sont contrôlés par une unité centrale programmée pour faire évoluer de manière adéquate les efforts moteurs et les efforts de freinage respectifs requis en prenant en compte l'évolution du diamètre de films déroulés et respectivement du diamètre de pellicule enroulée.

Ces diamètres peuvent être soit calculés par l'unité centrale, à partir de la longueur respective de complexe et de pellicule traitée, soit mesurée à l'aide de capteurs adéquats, par exemple à ultrasons, équipant respectivement chacun des dérouleurs et enrouleurs concernés 104, 204, 304, 124, 224, 229, 324, 520 et 522.

L'ensemble de complexage C comprend de préférence deux rouleaux pinceurs 400, 410, montés à rotation autour d'axes parallèles et entre lesquels est acheminé l'empilage formé des couches superposées : pellicule 80, cathode 60, électrolyte 50, anode 40, électrolyte 30, cathode 20, collecteur 10 et pellicule 83.

Les deux rouleaux pinceurs 400, 410 sont sollicités en rapprochement relatif sous un effort contrôlé. Ils exercent donc un effort de pression contrôlé sur les films acheminés entre ces rouleaux 400, 410. A cette fin, de préférence, l'axe de rotation du rouleau 400 est fixe tandis que l'axe de rotation du rouleau 410 est monté sur un équipage sollicité à déplacement vers le rouleau 400 précité sous un effort contrôlé, par exemple par un organe élastique telle qu'une lame 412. De préférence le rouleau 410 est également monté sur un équipage escamotable piloté par un moyen d'entraînement, par exemple un vérin, pour assurer sur commande le dégagement du rouleau 410 et faciliter la mise en place du complexe.

On retrouve ainsi en sortie de l'ensemble de complexage C l'empilement illustré sur les figures 15 et 20.

Le cas échéant les rouleaux de complexage 400, 410 peuvent être chauffants. Leur diamètre est typiquement au moins égal à 20 mm.

Le dispositif conforme à la présente invention comprend en outre entre le module de complexage C et le module d'enroulement E, un ensemble 500 à fonctions multiples et ayant notamment pour fonction 1) de contrôler le débit (longueur) de complexe, dans un module 510, 2) de réaliser des coupes longitudinales localisées dans le collecteur 10, au niveau d'un module 520, 3) d'assurer alternativement l'entraînement du complexe au début d'un enroulement puis le freinage de ce complexe lorsque celui-ci est placé en traction par le mandrin 610, au niveau d'un module 530, 4) de retirer les pellicules 80 et 83, dans un module 540, 5) de sectionner les couches 10 à 60 de l'empilement fonctionnel après défilement d'une longueur correspondant à l'enroulement souhaité, dans un module 550 et 6) de chauffer les faces externes de l'empilement résultant à la fin d'un enroulement, au niveau d'un module 560.

Le dispositif de détection 510 est destiné à piloter une correction des défauts de synchronisation pouvant résulter de microglissements du complexe sur les rouleaux 400, 410, afin d'assurer une vitesse constante d'alimentation de l'enrouleur E.

A titre d'exemple non limitatif, un tel dispositif de détection 510 peut être formé d'un rouleau de synchronisation 512 monté sur un levier pivotant 514 et sollicité en appui contre le complexe en défilement par un vérin pneumatique ou tout moyen équivalent, et associé à un codeur absolu 516.

Le complexe est plaqué contre le rouleau 512 par un rouleau 518 placé en amont sur le chemin de déplacement du complexe.

Le module de coupe 520 est destiné à réaliser un refendage linéaire séquentiel, en sens longitudinal, sur le bord du collecteur 10. Sur les figures annexées les tronçons de coupe résultant sont référencés 521. Chaque tronçon 521 a une longueur L1 sensiblement égale, tout en étant légèrement inférieure, à une demie circonférence d'enroulement sur le mandrin 610. L'actionnement de ce dispositif 520 est piloté de sorte que les refendages 521 se retrouvent tous superposés sur une même face de l'élément final bobiné. En d'autres termes ces refendages 521 sont opérés avec un pas P1 identique à la longueur de chaque spire réalisée sur le mandrin 610. Dans la mesure où cette longueur est variable et croissante, en raison de l'épaisseur accumulée sur le mandrin 610, de préférence le pas des refendages 521 est également variable.

Comme on l'a illustré schématiquement sur la figure 26 annexée, au niveau du poste de conformation finale 700, un segment de découpe transversale 522 est opéré entre une extrémité axiale de la découpe précitée 521 et le bord libre adjacent du collecteur 10, puis la bande latérale externe 523 ainsi délimitée dans le collecteur 10 est déployée vers l'extérieur de l'élément enroulé, pour servir de connecteur sur le concentrateur de courant. Sur la figure 26 la partie de bande de collecteur 10 ainsi déployée est référencée 525.

Le dispositif de refendage 520 est de préférence de type « coupe en l'air ». Il comprend une lame de refendage oscillante 524 adaptée pour venir sectionner localement et séquentiellement le collecteur 10, entre deux rouleaux 526 et 528 servant d'appui au complexe. Sur la figure 23 le mouvement de pivotement de la lame 524 est schématisé sous la référence 529.

Le module d'entraînement 530 comprend de préférence deux rouleaux pinceurs 532, 534, entre lesquels chemine l'ensemble complexe illustré sur les figures 15 et 20. Ces deux rouleaux 532, 534, sont associés à des motorisations respectives. Lors de l'acheminement de l'extrémité avant du complexe vers le mandrin 610, les rouleaux 532, 534, sont pilotés en mode moteur d'entraînement. En revanche, une fois l'extrémité avant du complexe saisie par le mandrin 610, celui-ci devient moteur, et les rouleaux 532, 534, sont pilotés, par leur moteur respectif, en mode de freinage. On garantit ainsi un placage étroit du complexe sur le mandrin 610. Ces deux rouleaux pinceurs 532, 534 sont situés à proximité du mandrin enrouleur 610, en amont de celui-ci.

L'entraînement des rouleaux pinceurs 400, 410 est asservi sur celui des rouleaux pinceurs 532, 534 qui opèrent en maître, par rapport aux rouleaux esclaves 400, 410.

L'un au moins des rouleaux 532, 534 est associé à un moyen de sollicitation tel que les rouleaux 532 et 534 exercent sur le complexe qu'ils encadrent, un effort de pincement contrôlé.

Par ailleurs de préférence, l'un au moins des rouleaux 532, 534, par exemple le rouleau 534, est monté sur un équipage escamotable 535, par exemple piloté par un vérin 536, pour faciliter l'insertion du complexe entre les rouleaux 532 et 534.

Le retrait des pellicules 80 et 83 est opéré, dans le module 540, à l'aide de racleurs 541, 543 similaires aux racleurs 122 et 322 précités. Les pellicules 80 et 83 sont dirigées, après dépelliculage, grâce à des rouleaux 542, 544 sur des rouleaux d'accumulation 546, 548. Ceux-ci sont motorisés, comme indiqué précédemment.

Le sectionnement transversal complet de l'empilement des 6 couches résultantes 10, 20, 30, 40, 50 et 60 du complexe est opéré, juste en aval des lames de dépelliculage 541, 543, dans le module 550, par tous moyens appropriés.

De préférence ces moyens de coupe 550 comprennent une lame 552 comprenant un bord tranchant 554 formé d'un dièdre convexe à deux pentes symétriques (voir figure 31) animée d'une vitesse rapide de déplacement, sous faible course lorsque la coupe est requise.

Les déplacements de la lame de coupe 552 sont pilotés par un moyen 556 formé de préférence d'un vérin. Par ailleurs la lame de coupe 552 est de préférence placée sur un équipage escamotable piloté par un moyen de déplacement spécifique, par exemple un second vérin 558, pour permettre d'escamoter la lame de coupe sur demande, afin de faciliter la mise en place du complexe, ou toute autre intervention de maintenance requise.

En variante ces moyens de coupe peuvent être formés d'un système marteau/enclume similaires à celui précédemment décrit sous les références 272, 274.

La coupe opérée par le moyen de coupe 552 est opérée sensiblement au milieu de l'intervalle formé dans la couche d'anode en lithium 40, au niveau du poste de frappe 572/574. Ainsi comme on le voit sur la figure 21, la couche d'anode 40 est placée en retrait des autres couches composant l'enroulement, tant au niveau de l'extrémité avant que de l'extrémité arrière de l'enroulement.

Par ailleurs comme on le voit sur la figure 21, de préférence les deux extrémités axiales Ei, Ee de l'enroulement fini En ne sont pas superposées. En d'autres termes l'extrémité externe Ee de l'enroulement est interrompue en deçà de l'extrémité interne Ei, pour éviter une surépaisseur à ce niveau. Ainsi l'enroulement fini aplati présente globalement une épaisseur identique sur toute son étendue.

Le chauffage des faces externes de l'empilement est opéré par tous moyens appropriés dans le module 560, par exemple par soufflage d'air chaud pulsé ou passage sur un rouleau chauffant.

Ce chauffage est de préférence assuré par une barre escamotable de soufflage d'air chaud 562 située immédiatement en aval du dispositif de coupe 550, pour chauffer une bande transversale du complexe, afin de préparer le thermo-collage de la fin de l'enroulement.

On va maintenant décrire les moyens d'enroulement E conformes à l'invention.

Ceux-ci comprennent principalement un mandrin 610 monté à rotation autour d'un axe 611.

Le mandrin 610 présente une section droite, transversale à son axe de rotation 611, non circulaire de révolution. Le mandrin 610 est sensiblement plat. Il a une section générale en fuseau. Typiquement le rapport entre un grand axe et un petit axe de sa section droite est supérieur à 3, préférentiellement supérieur à 5 et très avantageusement supérieur à 10. Il possède avantageusement une section droite généralement elliptique.

Plus précisément, l'enveloppe externe du mandrin 610 est de préférence délimitée par deux secteurs de cylindre de révolution convexes ayant des rayons identiques (R1 sur la figure 2), mais des axes parallèles éloignés ; par ailleurs cette enveloppe externe délimitant la section droite du mandrin possède des extrémités émoussées 615, 616 à faible rayon.

Le mandrin 610 a une longueur (considérée parallèlement à son axe de rotation 611) supérieure à la largeur des complexes à enrouler.

Plus précisément encore, de préférence, le mandrin 610 est formé de deux mors 612, 614, symétriques et complémentaires. L'interface entre les deux mors 612, 614, c'est-à-dire la face d'appui mutuelle entre ceux-ci, en position d'enroulement, référencée 613 sur les figures est de préférence plane et relie les deux surfaces courbes d'enveloppe externe convexe du mandrin à distance des extrémités effilées de l'ellipse d'enveloppe externe.

A titre d'exemple non limitatif, le grand axe du mandrin 610, formé par les deux mors 612 et 614 accolés, est de l'ordre de 12 cm tandis que le petit axe du mandrin 610, formé par les deux mors 612 et 614 accolés, est de l'ordre de 9 à 10 mm, l'angle formé entre le plan oblique qui correspond à l'interface 613 entre les deux mors 612, 614 et le grand axe du fuseau est typiquement de l'ordre de 2,5°, le fuseau est terminé, sur les extrémités 615, 616 du grand axe, par des arcs de cercle de l'ordre de 0,15mm de rayon, et la distance séparant les centres des surfaces principales cylindriques du mandrin est supérieure à 6 fois leur rayon R1.

Les deux mors 612, 614, sont associés à des moyens d'entraînement, par exemple des vérins hydrauliques ou équivalents adaptés pour assurer sur commande un déplacement relatif contrôlé des deux mors entre une première position dans laquelle les deux mors 612, 614, sont écartés pour permettre l'insertion de l'extrémité avant d'un empilement complexe 10 à 60 à enrouler et une seconde position dans laquelle les deux mors 612, 614, sont accolés pour permettre l'enroulement de l'empilement complexe précité.

Le mandrin 610 formé par la coopération des deux mors 612, 614, est lui-même entraîné à rotation autour de son axe 611, à vitesse non constante, selon des modalités qui seront définies par la suite.

Le mandrin 610 est associé à un rouleau presseur 620.

Celui-ci est monté libre de rotation autour de son axe 622 sur l'extrémité d'un bras rotatif 624.

Le bras 624 est animé d'un mouvement rotatif autour d'un axe 625 excentré par rapport à l'axe 622, et selon une vitesse double de celle du mandrin 610, de telle sorte que le rouleau 620 roule successivement sur chacune des faces du mandrin 610, plus précisément sur l'empilement complexe 10 à 60 enroulé sur celui-ci, afin de le presser régulièrement et d'éviter toute formation de plis dans l'empilement. Le bras 624 est de préférence entraîné en rotation mécaniquement par la rotation du mandrin 610 avec un rapport multiplicateur égal à 2.

Le mandrin 610 et le bras 624 tournent dans le même sens de rotation.

La cinématique de déplacement du mandrin 610 et du rouleau 620 est schématisée sur les figures 3 à 6 associées.

A titre d'exemple non limitatif, comme illustré sur la figure 22, le mandrin 610 et le bras 624 peuvent être entraînés par une courroie commune 640 associée à un moteur 642, grâce à des rouleaux respectifs 618, 628 en prise avec ladite courroie commune 640. Pour assurer une vitesse double au bras 624, le rouleau 628 associé à celui-ci possède un rapport d'entraînement deux fois plus faible que le rouleau 618 associé au mandrin 610, soit typiquement une dimension circonférentielle deux fois plus faible.

On notera que le dispositif comprend de préférence en outre, un rouleau 570, en aval de la lame de coupe 552, en regard de la buse de soufflage d'air chaud 562.

Ce rouleau 570 sert d'ultime guidage au complexe formé, avant enroulement sur le mandrin 610.

La génératrice du rouleau 570 sur laquelle s'appuie le complexe, est située dans un plan défini par la génératrice du rouleau amont 534 et la génératrice du mandrin 610 correspondant au petit axe de celui-ci (laquelle génératrice sert d'appui au complexe quand celuici est positionné avec son grand axe parallèle au plan précité, comme illustré sur la figure 5).

L'ensemble formé par la combinaison du mandrin 610, du bras 624 et du rouleau presseur 622 est monté sur un tiroir 630 lui-même associé à des moyens d'entraînement propres à déplacer cet ensemble à translation entre une position d'enroulement telle qu'illustrée sur la figure 1, rapproché du module 500 et une position d'évacuation, éloignée de ces moyens 500, une fois la longueur souhaitée d'empilement enroulée sur le mandrin 610, pour faciliter le retrait de l'enroulement obtenu.

Le tiroir 630 précité peut également être déplaçable dans une position initiale additionnelle temporaire, rapprochée des rouleaux pinceurs d'alimentation 532, 534, lorsque ceux-ci sont pilotés en moteur, pour assurer la saisie de l'extrémité avant du complexe au début de l'enroulement. Une fois cette saisie opérée, de préférence le tiroir 630 est écarté des rouleaux pinceurs 532, 534 pour l'enroulement proprement dit.

Pour achever l'enroulement et éviter un flottement de l'extrémité externe arrière du complexe enroulé, le mandrin 610 est de préférence animé d'un mouvement de rotation complet sur 360° après rupture du complexe enroulé et enroulement complet de ce complexe et le rouleau presseur 620 est maintenu en appui sur l'enroulement pendant cette rotation additionnelle afin de parfaire le « collage » de la dernière spire de l'enroulement, grâce au préchauffage précité par les moyens 560. Le cas échéant, ce chauffage peut être complété par un soufflage d'air chaud au niveau du poste d'enroulement E.

On obtient ainsi un collage de la queue de l'enroulement, sans apport de colle.

On notera que le dispositif peut comprendre en outre, comme illustré sur la figure 8, un rouleau presseur additionnel escamotable 580, placé entre le rouleau 570 et le mandrin 610. Un tel rouleau 580 a pour fonction de permettre le blocage du complexe lors de la coupe et le plaquage de la fin de la bande, sur le mandrin 610. Le rouleau 580 est de préférence lié, par une lame élastique 582, à un équipage oscillant 584, piloté par un vérin 586.

Lors du bobinage de l'enroulement de complexe, sur le mandrin 610, le rouleau 580 est placé dans la position illustrée sur la figure 8, écartée du trajet de déplacement du complexe et éloignée du mandrin 610. A la fin d'un enroulement, après coupe du complexe, au contraire, l'équipage oscillant précité et le rouleau 580 associé, sont déplacés de sorte que le rouleau 580 soit plaqué sur la face du mandrin 610 opposée à celle sur laquelle repose le rouleau 620.

Cet enroulement, obtenu sous une forme généralement aplatie, grâce à la géométrie elliptique du mandrin 610 est ensuite retiré du mandrin 610 et évacué grâce à un robot ou tout moyen équivalent adapté vers un poste de pressage 700 destiné à parfaire la planéité de chaque enroulement obtenu.

Un tel robot peut être formé d'un robot pneumatique à pinces de serrage assurant la préhension de l'élément enroulé de stockage d'énergie électrique sur le mandrin 610, son extraction de celui-ci et par divers mouvements de rotations et de translations, la mise en place de l'élément dans le poste de pressage 700.

Pour l'essentiel ce poste de pressage comprend une presse, formé par exemple d'un vérin presseur 710, chargé de la mise à plat finale de l'élément. Celui-ci opère de préférence en temps masqué, pendant qu'un élément suivant est en cours d'enroulement.

Pour faciliter le retrait de l'enroulement obtenu, le dispositif peut comprendre des moyens aptes à assurer pendant une séquence limitée, à la fin de l'enroulement, un déplacement relatif et alternatif à translation entre les deux mors 612 et 614 composant le mandrin 610, selon une direction parallèle à l'interface 613, pour faire ainsi varier la longueur du grand axe du mandrin, afin de « desserrer » légèrement l'enroulement par rapport au mandrin 610, décoller la première spire et dépincer l'accrochage du premier tour.

Chaque enroulement peut ensuite être dirigé vers un magasin pour la réalisation des étapes ultérieures requises pour la connexion sous la configuration série/parallèle souhaitée. Un tel magasin et les moyens mis en oeuvre pour assurer les liaisons requises série/parallèle, ne seront pas décrits plus en détail par la suite.

Comme on l'a indiqué précédemment, selon une caractéristique avantageuse de l'invention, le mandrin 610 est entraîné à rotation à une vitesse angulaire non constante contrôlée de telle sorte que la vitesse linéaire de défilement de l'empilement complexe alimentant le mandrin 610 soit constante.

Grâce à cette caractéristique, l'invention permet de garantir un effort de traction constant sur le complexe et par conséquent un enroulement parfait sur le mandrin 610, exempt de tout pli ou défaut équivalent.

Par ailleurs grâce au défilement à vitesse constante du complexe, on évite toute nécessité de disposer d'un magasin intermédiaire, en amont du module d'enroulement E, pour absorber les à-coups d'accélération - décélération de la bande. Et l'on permet ainsi la réalisation de l'ensemble du dispositif sous forme compact, dans un volume limité.

On a illustré en traits forts sur la figure 27, la courbe de variation de vitesse du mandrin 610 à l'origine de l'enroulement.

Sur la même figure 27, on a illustré en traits fins, la courbe de variation de vitesse du bras 624 portant le rouleau presseur 620.

On notera que sont illustrées sous l'axe des abscisses de la figure 27, les positions relatives du mandrin 610 et du rouleau presseur 620.

Plus précisément encore, la vitesse de rotation angulaire du mandrin 610 est corrigée au cours de l'enroulement, pour tenir compte de l'évolution du rayon d'enroulement résultant de la variation d'épaisseur de complexe accumulé sur le mandrin 610 afin de garantir la constance de vitesse linéaire de défilement.

On a ainsi illustré sur la figure 28 en traits forts la courbe de variation de vitesse du mandrin 610 garnie par une épaisseur de 5,5mm de complexe (correspondant par exemple à 19 tours d'enroulement) et en traits fins la courbe de variation correspondante de vitesse du rouleau 620.

Sur les figures 27 et 28, on a repéré, sous l'axe des abscisses, sous la référence PA, les plages angulaires dans lesquelles le rouleau presseur 620 est en appui sur le mandrin 610.

On notera à l'examen des figures 27 et 28, que le vitesse de rotation du mandrin 610 et de l'équipage 624 portant le rouleau presseur 620, est élevée quand l'enroulement du complexe est opéré sur un faible rayon (c'est à dire un rayon d'enroulement de l'ordre de grandeur du petit axe du mandrin 610), soit lorsque le mandrin 610 est orienté sensiblement parallèlement au tronçon de complexe acheminé. Puis cette vitesse chute quand le rayon d'enroulement grandit (et s'approche du grand axe du mandrin 610), c'est à dire lorsque le mandrin 610 est orienté sensiblement perpendiculairement au tronçon de complexe acheminé.

Ainsi la vitesse de rotation du mandrin 610 et du rouleau presseur 620 présente une évolution cyclique : 2 pics par rotation de 360°. Cette évolution est inversement proportionnelle à l'évolution du rayon d'enroulement.

Par ailleurs on notera que le rouleau presseur 620 entre en contact, et reste en contact, avec le film complexe enroulé sur le mandrin 610, lorsque celui-ci est entraîné en rotation à basse vitesse. Cette disposition permet de garantir un bon contact entre le rouleau presseur 620 et le film enroulé et par conséquent entre les différentes couches superposées du film enroulé.

La figure 28 qui correspond à la fin d'un enroulement présente une plage d'évolution de vitesse moins étendue. En effet en raison de l'épaisseur de complexe accumulée sur le mandrin 610, le rapport de rayon d'enroulement couvre une plage moins étendue qu'à l'origine de l'enroulement.

Ainsi lors de l'enroulement d'un élément, la vitesse de rotation varie à chaque tour sur une période de 180°. De plus la durée d'enroulement par tour augmente du fait que la longueur d'enroulement sur le mandrin 610 augmente d'un tour à l'autre en raison de l'épaisseur rajoutée sur le mandrin 610.

En conséquence les vitesses et les accélérations diminuent progressivement au cours de l'enroulement.

On aperçoit par ailleurs sur la figure 29, d'une part, une courbe lissée V1 de variation du rayon d'enroulement en fonction de la position angulaire du mandrin et, d'autre part, une courbe lissée V2 de variation d'un facteur de correction en fonction de cette position angulaire.

On a porté en abscisse une plage angulaire de 0 à 180°. Celle-ci couvre également la plage de 180 à 360°, les courbes précitées présentant une périodicité sur 180°. Par ailleurs on a porté sur les échelles d'ordonnées, à gauche l'amplitude du rayon d'enroulement et à droite l'amplitude du facteur de correction.

Les inventeurs ont en effet déterminé que le facteur de correction à appliquer sur l'évolution de base V1 de la vitesse de rotation angulaire tenant compte de la seule évolution du rayon d'enroulement nu en fonction de la position angulaire du mandrin, pour tenir compte de la variation d'épaisseur de l'enroulement, pouvait être assimilé à une telle courbe lissée V2 qui varie en fonction de la position angulaire du mandrin 610, tout en étant fixe pour un angle donné quelque soit le nombre de spires enroulées précédemment sur le mandrin.

On a illustré sur la figure 30 un tableau schématisant un exemple de données utilisées dans le cadre de la présente invention pour piloter le moteur d'entraînement du mandrin 610.

On retrouve sur les deux premières colonnes du tableau de la figure 30, l'angle de rotation du mandrin.

Ces deux colonnes correspondent respectivement aux plages de 0 à 180° et de 180 à 360°, en raison de la symétrie existant entre les deux demis tours successifs d'une même spire d'enroulement. En effet une spire complète n'est enroulée qu'après une rotation de 360°. On retrouve donc la même épaisseur sur les deux faces du mandrin pendant les deux demi périodes successives de 0 à 180° et de 180 à 360° d'enroulement d'une même spire.

La troisième colonne de la figure 30 représente le rayon du mandrin 610 nu, c'est à dire à l'origine de l'enroulement.

La quatrième colonne de la figure 30 représente le facteur de correction illustré sur la figure 29.

Les paires de colonnes qui suivent sur la figure 30 représentent deux à deux, pour chaque tour d'enroulement, l'une le rayon d'enroulement, et l'autre la vitesse de rotation du mandrin 610.

Plus précisément, comme le montre le tableau de la figure 30, pour chaque tour d'enroulement, on calcule le rayon d'enroulement r sur la base de la relation :

$$r = ro + (F \cdot n \cdot e)$$

dans laquelle :

- ro représente le rayon du mandrin (610) nu,
- F représente le facteur de correction mentionné dans la quatrième colonne,
- n représente le rang de la spire en cours, ie le nombre d'enroulements opéré sur le mandrin 610 et
- e représente l'épaisseur du complexe enroulé sur le mandrin 610.

Puis l'on calcule la vitesse de rotation du mandrin 610 sur la base de la relation :

$$\omega = V / (2 \cdot \Pi \cdot r)$$

dans laquelle :

- V représente la vitesse linéaire constante recherchée pour le complexe, et
- r représente le rayon d'enroulement précédemment calculé.

En pratique, le pilotage du moteur d'entraînement du mandrin 610 peut être opéré, soit à l'aide de données précalculées et stockées dans des mémoires adaptées, soit à l'aide de données calculées en direct par une unité centrale sur la base, d'une part, de la loi d'évolution du rayon d'enroulement en fonction de la géométrie du mandrin 610 et d'autre part de la loi de correction dépendant de l'évolution de ce rayon en fonction de l'épaisseur de l'enroulement réalisé précédemment sur le mandrin.

Les données précitées sont appliquées successivement à chaque fraction angulaire de la rotation du mandrin 610, sur le moteur d'entraînement de celui-ci.

A titre d'exemple non limitatif, pour une vitesse linéaire de l'ordre de 6 m/mn, le mandrin 610 atteint une vitesse de l'ordre de 180 tr/mn, soit une vitesse angulaire de l'ordre de 1090 °/s, d'où une vitesse d'échantillonnage de l'ordre de 1 °/ms.

Le choix de travailler au plus près du degré impose un rafraîchissement de la consigne de vitesse moteur proche de la ms.

Dans ce contexte la consigne de vitesse destinée à être appliquée au moteur est choisie de nature numérique, pour éviter le traitement de convertisseurs analogique/numérique.

Bien évidemment, un module de contrôle assure l'asservissement complet de l'ensemble des moyens intervenant dans la réalisation de l'enroulement du complexe.

Les différents axes précités notamment les axes 102, 202, 302, des rouleaux 104, 204, 304, l'axe 611 de rotation du mandrin 610, l'axe de rotation du rouleau presseur 620 et l'axe de pivotement du bras oscillant 624, les axes des rouleaux 124, 224, 240, 250, 229, 320, 520 et 522 associés aux pellicules, les axes des rouleaux de renvoi 110, 112, 114, 221, 222, 210, 212, 226, 310, 312, 314 et les axes des rouleaux presseur 262, 264, 400, 410 sont parallèles entre eux et de préférence horizontaux.

Selon une autre caractéristique avantageuse de l'invention, le dispositif comprend un boîtier scindé en deux compartiments séparés par une cloison verticale 900 : un premier compartiment, sous atmosphère sèche contrôlée qui loge l'ensemble des moyens 100, 200, 300, 400, 500, 600 et 700 précités et un deuxième compartiment qui loge les moyens de commande et d'entraînement/motorisation associés. La cloison verticale de séparation précitée constitue le bâti support des différents axes de rotation précédemment décrits.

Le cas échéant un balayage supplémentaire d'air sec peut être prévu dans l'enceinte opérationnelle.

La présente invention permet typiquement la réalisation d'un enroulement de complexe comprenant entre 16 et 19 tours, correspondant à une longueur de complexe de l'ordre de 4 à 5,5m, soit une épaisseur totale d'enroulement de l'ordre de 5,5 mm. La vitesse de défilement du complexe est typiquement comprise entre 2 et 10 m/ mn. Elle est avantageusement de l'ordre de 6m/mm.

A titre d'exemple non limitatif le dispositif conforme à la présente invention est adapté pour traiter des laizes de complexe de largeur comprise entre 50 et 150 mm.

La présente invention offre de nombreux avantages par rapport aux moyens proposés dans l'état de la technique.

De façon non limitative on citera :

- le fait que la forme quasi plate du mandrin d'enroulement 610 évite de générer les contraintes rencontrées avec l'état de la technique, lors de la mise à plat,
- le réchauffage des complexes dans des fours et le complexage des multicouches formant cathode et collecteur sur le lithium, permettant de réaliser un collage de bonne qualité sans reprise intermédiaire des produits en optimisant le contact surfacique des couches entre elles, ceci améliorant les échanges ioniques entre les différentes couches fonctionnelles du produit final,
- le fait que toutes les fonctions du dispositif sont pilotées en automatique avec des paramétrages et des régulations précises de chaque fonction, ce qui permet d'assurer la reproductibilité avec un niveau de qualité toujours contrôlé.

On rappelle que d'une manière générale, tous les galets et rouleaux enrouleurs ou dérouleurs mis en oeuvre dans le dispositif de l'invention ont des fonctions moteur et/ou frein alternativement, selon la séquence de l'enroulement impliqué, pour garantir une traction constante sur l'ensemble des films, complexes et pellicules associés.

Comme indiqué précédemment, la figure 33 représente un synoptique général des moyens principaux du dispositif conforme à la présente invention.

Comme indiqué précédemment, le dispositif conforme à la présente invention comprend des moyens mécaniques aptes à modifier sur commande la section droite du mandrin 610.

La modification de section du mandrin 610 peut notamment être utilisée pour pincer une extrémité des films à enrouler, à l'origine de l'enroulement et/ou pour provoquer un desserrage général de l'enroulement, c'est à dire créer un certain jeu entre l'enroulement et la surface externe du mandrin 610, pour faciliter l'extraction de l'enroulement. Cette dernière fonction peut être obtenue par exemple par réduction commandée de la longueur du grand axe du mandrin 610.

On va maintenant décrire plus particulièrement les moyens spécifiques à la présente invention, propres à modifier sur commande la section droite du mandrin 610 lorsque celui-ci est formé de deux mors complémentaires 612, 614.

Les moyens précités sont conçus pour assurer sur commande un déplacement relatif des deux mors 612, 614, l'un par rapport à l'autre, selon au moins une composante transversale à l'axe de rotation 611 du mandrin 610.

Chaque mors 612, 614 est fixé sur un porte mors respectif 652, 654. Chacun de ceux-ci est lié rigidement à un arbre 653, 655 monté à rotation, sur un corps de mandrin 660, autour d'axes respectifs 656, 657 excentrés par rapport à l'axe de rotation 611 du mandrin 610, mais parallèles à celui-ci. Plus précisément les arbres 653 et 655 sont montés à rotation sur un plateau 661 appartenant au corps de mandrin 660.

L'homme de l'art comprendra que la rotation d'un arbre 653, 655, et par conséquent du porte mors 652, 654, et du mors 612, 614 respectivement associé, par rapport au corps de mandrin 660,entraîne un déplacement du mors impliqué par rapport à l'autre.

A cette fin chaque arbre 653, 655 porte un pignon 658, 659 à taillage hélicoïdal. A titre d'exemple non limitatif, l'angle de taille des pignons 658, 659 peut être de l'ordre de 17°.

Les pignons 658, 659 liés aux porte mors 652, 654 sont animés angulairement par deux demi-axes respectifs de commande 670, 680.

Ceux-ci peuvent faire l'objet de divers modes de réalisation.

Ils sont de préférence conformes aux figures 35 à 40.

On aperçoit sur celles-ci deux demi-axes 670, 680 généralement symétriques par rapport à un plan axial longitudinal passant par leur axe commun de rotation, lequel est confondu avec l'axe 611 de rotation du mandrin 610.

Les demi-axes 670, 680 sont juxtaposés et disposés dans un fourreau 662 lié au corps de mandrin 660. Ils sont conçus pour être déplacés à translation, parallèlement à leur axe, par des moyens qui seront décrits par la suite.

Le fourreau 662 tient lieu de fusée assurant le guidage à rotation du corps de mandrin 660 autour de l'axe 611.

Chaque demi-axe 670, 680 comporte, à une extrémité, un tronçon taillé en pignon hélicoïdal 672, 682 se conjuguant avec les pignons arbrés 658,659.

Par ailleurs chaque demi-axe 670, 680 comporte un tronçon 674, 684 de section non circulaire de révolution, par exemple en dièdre (les deux dièdres accolés 674, 684 appartenant respectivement aux deux demi-axes 670, 680 formant en combinaison, un carré), disposé dans un tronçon de section complémentaire du fourreau 662. L'engagement ainsi défini interdit toute rotation relative entre les demi-axes 670, 680 et le fourreau 662, mais autorise et assure un guidage axial relatif entre ceux-ci.

A leur seconde extrémité, les demi-axes 670, 680 sont munis chacun d'une tête élargie 676, 686, en forme de demi-couronne. On verra par la suite que chacune de ces têtes 676, 686 porte de préférence des moyens de réglage d'organes élastiques sollicitant les demi-axes vers une position de repos. A cette fin, chaque tête comporte plusieurs logements 679, 689, par exemple 3 par tête, équirépartis angulairement.

De plus de préférence, chaque demi-axe 670, 680 comprend en outre, d'une part du côté de la tête 676, 686 situé vers le pignon 672, 682, un tronçon cylindrique de révolution 675, 685 qui sert de guidage à translation, et d'autre part du côté opposé de la tête 676, 686, une queue 677, 687 en saillie au delà de la tête 676, 686.

Les deux demi-axes 670, 680 sont susceptibles de déplacement relatif à translation l'un par rapport à l'autre, pour permettre une inclinaison relative des mors 612, 614. A cette fin de préférence des patins de glissement sont intercalés entre les deux demi-axes 670, 680, dans des lumières 671, 673 prévues à cet effet au niveau de l'interface des demi-axes 670, 680.

Les queues 677, 687 des demi-axes 670, 680 sont sollicitées sélectivement dans plusieurs positions choisies par des moyens mécaniques 800 qui seront décrits par la suite en regard des figures 41, 42, 43 et 53.

On notera que chacun des deux porte-mors 652, 654 peut être déplacé indépendamment de l'autre. Il en est donc de même des deux demi-axes 670, 680, indépendants l'un de l'autre pour permettre une désynchronisation de mouvements entre les deux mors 612, 614. Cette désynchronisation est notamment nécessaire pour pincer/emprisonner l'extrémité nouvelle d'une bande à l'origine d'un enroulement.

La fusée constituée par le fourreau précité 662 est montée à rotation sur un palier 634 lié au tiroir 630 et équipé de deux roulements à billes 635, 636. La fusée 662 est munie, à son extrémité arrière opposée au mandrin 610, du pignon 618 (illustré figure 22) coopérant avec la courroie crantée d'entraînement 640.

Le pignon 618 comporte des alvéoles 619 en nombre identique au nombre de logements 679, 689 formés dans les têtes 676, 686 des demi-axes 670, 680.

Dans le cas d'espèce non limitatif, il est ainsi prévu six alvéoles 619 respectivement alignées sur les logements 679, 689.

Chaque logement 619 loge un ressort de compression 690. Les ressorts 690 sont ainsi intercalés entre le pignon 618 et les têtes 676, 686 des demi-axes 670, 680. Les ressorts 690 sollicitent par conséquent les demi-axes 670, 680 en éloignement des porte-mors 652, 654. En d'autres termes, les ressorts 690 sollicitent automatiquement à la fermeture les mors 612, 614. Des moyens mécaniques 800 qui seront décrits plus en détail par la suite en regard des figures 41 à 43 et 53 opèrent un effet inverse sur les demi-axes 670, 680. Ces moyens mécaniques de commande 800, lors de leur activation, sollicitent en effet les demi-axes 670, 680 vers les porte-mors 652, 654.

L'effort exercé par les ressorts 690 peut être réglé par des vis 692 en prise dans des logements 679, 689 des têtes 676, 686. Le réglage des vis 692 permet par conséquent de régler l'effort de pincement exercé par les mors 612, 614.

On retrouve sur la figure 34, le rouleau presseur 620 monté libre de rotation via des moyens de roulement internes, autour de son axe 622 sur un bras ou embase 624. De préférence, comme on le voit sur la figure 34, les moyens assurant la rotation du rouleau presseur 620 autour de son axe 622 sont formés d'un moyeu articulé 623 adapté pour permettre un auto-positionnement du rouleau 620 propre à assurer un plaquage étroit de celui-ci sur la surface externe de l'enroulement. En pratique le moyeu articulé 623 peut être constitué de deux roulements de faible écartement positionnés au centre (considéré dans la direction longitudinale) du rouleau 620 et autorisant un certain débattement angulaire du rouleau 620.

Le bras 624 est lui-même monté à rotation autour d'un axe 625' parallèle à l'axe 622 précité et excentré par rapport à celui-ci. Plus précisément, le bras 624 est monté à rotation autour de l'axe 625' sur un élément 693. Ce dernier forme un petit chariot mobile par rapport au tiroir ou chariot principal 630 pour compenser les variations d'épaisseur de l'enroulement, sur le mandrin 610, entre le premier tour et le dernier.

Différents moyens peuvent être prévus pour entraîner le bras 624 à rotation autour de l'axe 625'. On rappelle ici que de préférence le bras 624 est entraîné à une vitesse de rotation double de celle du mandrin 610.

Selon le mode de réalisation particulier et non limitatif représenté sur les figures annexées, le bras 624 est solidaire d'un arbre 694 centré sur l'axe 625' et monté à rotation sur le petit chariot 693 précité.

Un deuxième arbre 695 portant le pignon 628 conçu pour coopérer avec la courroie d'entraînement 640 représentée sur la figure 22 est monté à rotation autour de l'axe 625 sur une entretoise liée au tiroir 630.

Par ailleurs, un accouplement homocinétique 696 est intercalé entre la sortie de l'arbre moteur 695 et l'entrée de l'arbre mené 694 lui-même lié au bras 624.

L'accouplement homocinétique 696 a pour fonction d'autoriser un déplacement relatif de l'arbre 694, parallèlement à lui-même, par rapport à l'arbre 695, lors de l'augmentation d'épaisseur de l'enroulement sur le mandrin 610, tout en assurant en permanence une liaison précise à rotation entre l'arbre menant 695 et l'arbre mené 694.

Le déplacement du petit chariot 693 par rapport au tiroir principal 630 est contrôlé par tout moyen approprié, de préférence par un vérin 644. Le corps du vérin 644 est articulé en 645 sur le tiroir 630. Sa tige 646 est articulée sur une première extrémité d'une bielle en équerre 647. La seconde extrémité de la bielle 647 est articulée sur le chariot 693. Enfin, la bielle 647 est articulée, en son milieu, sur une biellette 648 montée à rotation par ailleurs sur le tiroir 630.

Ainsi, le rouleau presseur 620 est mis en appui sur l'élément enroulé sur le mandrin 610 par la coopération du petit chariot 693 et du vérin 644. A titre d'exemple non limitatif, la course de déplacement du petit chariot 693 par rapport au tiroir 630, et par conséquent par rapport à l'axe 611 de rotation du mandrin 610, au cours du déplacement du rouleau sur le film enroulé, peut être de l'ordre de 3mm pour la première spire et de l'ordre de 8,5mm sur l'élément terminé. Le différentiel de course entre la position d'origine mandrin nu et la position élément terminé est compensé ainsi par la course de translation du vérin 644 et du petit chariot 693.

Typiquement, mais à titre d'exemple non limitatif, l'accouplement homocinétique 696 est conçu pour permettre un décalage radial de l'ordre de 25mm entre les axes parallèles 625 et 625' des arbres 695 et 694, pour permettre de réaliser la course utile de mouvement radial du rouleau satellite presseur 620 vers le mandrin 610.

En résumé, le pignon 628 transmet le mouvement rotatif à l'arbre mené 694 par l'intermédiaire de l'accouplement homocinétique 696. L'arbre 694 transmet son mouvement au bras 624 qui porte lui-même le palier central du rouleau satellite 620. Le palier de ce rouleau est équipé d'un système de palonnage autour de l'axe 622 pour permettre un auto alignement du rouleau 620 contre les spires pendant l'enroulement.

Par ailleurs, le rouleau presseur satellite 620 est porté par le petit chariot 693 embarqué sur le tiroir 630 du mandrin. En raison du rapport ½ entre les pignons 628 et 618, le bras 624 et le rouleau presseur 620 qui l'accompagne tournent deux fois plus vite que le mandrin 610, ce qui permet au rouleau presseur 620 de presser l'enroulement à chaque demi-tour du mandrin.

Le mouvement d'approche et d'écartement du rouleau satellite 620 par rapport au mandrin 610 est effectué à l'aide de la bielle ou levier 647 en équerre et du vérin pneumatique 644 double effet.

En synthèse :

- le tiroir 630 est susceptible de déplacement à translation horizontale par rapport au bâti de la machine et au rouleau 570 entre une position rapprochée du rouleau 570 pour saisir le début d'un enroulement et une position éloignée de celui-ci pour assurer l'enroulement. Le tiroir porte le corps de mandrin 660, le mandrin 610, les demi-axes 670, 680, le rouleau presseur 620 et les moyens qui lui sont liés.
- plus précisément, le rouleau presseur 620 est monté par l'intermédiaire du bras rotatif 624 sur un chariot 693, lui-même susceptible de translation par rapport au tiroir 630.
- le corps de mandrin 660 supporte les porte-mandrins 652, 654 qui supportent eux-mêmes les mors 612, 614. Le corps de mandrin 660 est monté à rotation autour de l'axe 611 sur le tiroir 630 et entraîné par le pignon 618.
- les porte-mors 652, 654, et par conséquent les mors 612, 614 eux-mêmes qui leur sont liés, sont montés à rotation autour d'axes respectifs 656, 657 sur le corps 660.
- enfin, les demi-axes 670, 680 sont montés à translation dans le corps 660. La translation de chaque demi-axe 670, 680 par rapport au corps de mandrin 660 entraîne, grâce à la coopération définie entre les filets hélicoïdaux prévus sur les pignons 658, 659 d'une part, 672, 682 d'autre part, la rotation des porte-mors 652, 654, et par conséquent des mors 670, 680 qui leur sont liés par rapport au corps de mandrin 660 et donc un déplacement des mors 612, 614 l'un par rapport à l'autre.

On va maintenant décrire la structure des moyens mécaniques de commande 800 illustrés sur les figures 41, 42, 43 et 53, conçus pour assurer le déplacement contrôlé des demi-axes 670, 680.

Les moyens 800 ont pour fonction de définir plusieurs positions relatives précises des demi-axes 670, 680 et par conséquent des mors 612, 614.

De préférence, les moyens 800 sont prévus pour assurer quatre positions relatives précises de travail des mors 612, 614, en sus d'une position de repos. Ces diverses positions et les moyens mis en oeuvre pour les obtenir seront décrits par la suite en regard des figures 51, 52 et 53.

Plus précisément encore, les moyens mécaniques de commande 800 sont conçus pour commander individuellement chaque demi-axe 670, 680 et par conséquent chaque mors 612, 614.

Les moyens mécaniques 800 sont de préférence adaptés pour piloter séquentiellement, soit une inclinaison relative entre les deux mors 612, 614, par exemple pour assurer l'ouverture et la fermeture lors de la saisie et de la libération de l'enroulement, soit un déplacement relatif parallèles entre eux des deux mors 612, 614, afin de modifier la longueur du grand axe et du petit axe du mandrin ("pour donner du ventre au mandrin"), lors d'une séquence finale d'extraction de l'enroulement.

Pour piloter une inclinaison relative entre les deux mors 612, 614, les moyens de commande 800 sont conçus pour opérer un déplacement relatif à translation entre les deux demi-axes 670, 680.

Différents moyens peuvent être prévus à cet effet.

Dans le cadre du mode de réalisation préférentiel de l'invention, les deux demi-axes 670, 680 ont des longueurs différentes, plus précisément les queues 677, 687 respectives des deux demi-axes 670, 680 qui émergent sur l'arrière des têtes 676, 686 ont de préférence des longueurs différentes comme on le voit sur la figure 35.

L'homme de l'art comprendra que la sollicitation de la queue 677 de plus grande longueur du demi-axe 670, sans intervenir sur le demi-axe 680 entraîne une rotation du seul porte-mors 652 et par conséquent du seul mors 612 par rapport au corps 660. Une telle sollicitation peut être opérée à l'aide d'un vérin 810, dont la tige 812 est placée en regard du demi-axe 670.

Au contraire pour assurer un déplacement relatif des deux mors 612, 614 tout en maintenant une position parallèle entre ceux-ci, les moyens mécaniques de commande 800 doivent déplacer les demi-axes 670, 680 sur des courses identiques.

Différents moyens peuvent être prévus à cet effet.

Selon le mode de réalisation représenté sur les figures annexées, les moyens 800 comprennent à cet effet un culbuteur 820 ou poussoir articulé monté à rotation sur le tiroir 630 autour d'un axe 822. Le culbuteur 820 est lui-même sollicité par trois leviers 830, 840,850 articulés sur le tiroir 630 autour d'un axe parallèle à l'axe 822 et préférentiellement confondu avec celui-ci. Chaque levier 830, 840, 850 est lui-même sollicité, par l'intermédiaire d'une liaison de type chape 832, 842, 852 par la tige d'un vérin 834, 844, 854 respectivement associé.

Des ressorts sollicitent les leviers 830, 840, 850 vers une position de repos dans laquelle le culbuteur 820 est sans action sur les demi-axes 870, 880. Au contraire, les vérins 834, 844, 854 sollicitent les leviers 830, 840, 850 dans le sens d'un rapprochement du culbuteur 820 vers les demi-axes 870, 880. Le culbuteur 820 est lui-même susceptible de débattement par rapport à chacun des leviers 830, 840, 850 de sorte que la position de travail du culbuteur 820 est définie par celui des trois leviers 830, 840, 850 qui est déplacé sur la course la plus grande.

Plus précisément encore, comme illustré sur les figures annexées, il est de préférence prévu deux grands leviers latéraux 830, 850 encadrant un levier central de plus faible longueur 840.

Le culbuteur 820 peut venir en appui direct sur les têtes 676, 686 des demi-axes 670, 680. Cependant, de préférence, il est prévu une bague 860 (voir figure 41) intercalée entre le culbuteur 820 et la face arrière des têtes 676, 686. La bague 860 entoure les queues 677, 687.

Ainsi, on définit deux commandes indépendantes des demi-axes 670, 680 : l'une qui concerne seul le demi-axe 670 générée par le vérin 810, l'autre qui concerne les deux demi-axes 670, 680 générée par les vérins 834, 844, 854 via les leviers 830, 840, 850, le culbuteur 820 et la bague 860.

On va maintenant décrire le fonctionnement général du mandrin en regard des figures 44 et suivantes annexées.

Bien entendu ce descriptif est donné uniquement à titre d'exemple non limitatif.

Le pincement du début d'une bande à enrouler se fait par rapprochement des deux mors 612, 614 l'un contre l'autre. Ce pincement est effectué par les porte-mors 652, 654 précités eux-mêmes entraînés angulairement par les pignons arbrés 658, 659, eux-mêmes mis en rotation par la translation axiale des deux demi-arbres 670, 680. Cette translation axiale est provoquée par la charge réglable des six ressorts 690 précédemment mentionnés.

Plus précisément encore, la préhension de la bande et la fermeture des mors 612, 614 est réalisée selon la cinématique illustrée sur les figures 44A à 44F.

A l'origine, les mors 612, 614 sont indexés dans une position illustrée sur la figure 44A symétrique par rapport à la bande. Le tiroir 630 de mandrin est approché de la sortie de bande venant du rouleau de guidage 570.

Les rouleaux 532, 534 sont activés pour avancer la bande vers les mors 512, 514, par exemple sur une distance de l'ordre de 40mm, comme illustré sur la figure 44B.

Comme illustré sur la figure 44C, les mors 612, 614 sont ramenés dans une position parallèle en rétractant la tige du vérin 810. On notera que de préférence la position angulaire du mandrin reste identique lors des deux étapes des figures 44A et 44B, mais en revanche que le mandrin est recalé angulairement pour passer à l'étape illustrée sur la figure 44C. A titre d'exemple, la position angulaire peut être de 348°, par rapport à un référenciel arbitraire, pour les figures 44A et 44B et de 351° pour la figure 44C.

Comme illustré sur les figures 44D, 44E et 44F, les mors 612, 614 sont ensuite progressivement rapprochés en rétractant successivement les tiges des vérins 844, 854 et 834. Là encore, on opère de préférence un recalage angulaire successif pour maintenir le plan d'interface des mors 612, 614 dans une position optimale. Par rapport au référentiel précité, la position de la figure 44D peut être à 356°, celle de la figure 44E à 368° et celle de la figure 44F à 0°.

Le mandrin est alors prêt pour un enroulement dans la position illustrée sur la figure 45, après translation du tiroir 630 en éloignement du rouleau de guidage 570.

La rotation du mandrin peut alors être opérée selon le concept de régulation de vitesse précédemment décrit.

Au cours de cet enroulement illustré sur les figures 46, de préférence les rouleaux amont 532, 534 sont placés en fonction frein pour retenir et assurer la traction de bande pendant l'enroulement.

La rotation du mandrin est continue jusqu'à la première fraction du dernier tour de l'élément illustré sur la figure 47A.

Au cours de l'enroulement et de la rotation du mandrin, comme illustré sur les figures 46, le rouleau satellite presseur 620 entre en action lorsque le mandrin est en position 58° et donc que le presseur peut entrer en contact avec l'enroulement, et ce jusqu'à la position symétrique de la position 58° par rapport à l'axe horizontal, donc pendant 64°, à la suite de quoi il se dégage pour recommencer de la même manière le demi tour suivant.

Lors de l'enroulement les mors 612, 614 restent en position pincée jusqu'à la terminaison de l'élément. Dans cette position, l'ensemble des deux mors 612, 614 constituent la section en fusion avec le grand axe déployé.

La figure 47A illustre la position du rouleau presseur 620 sur le mandrin 610 à la fin du dernier tour complet d'enroulement, avant que le rouleau presseur 620 ne s'éloigne de l'enroulement.

Le dernier tour illustré sur les figures 47 débute de préférence par une première étape qui correspond à un arrêt maintenu en position du mandrin 610 et des rouleaux pinceurs 532, 534, bande tendue. Préférentiellement, dans cette position, le rouleau presseur 620 est placé en position basse à 58° en contact contre l'enroulement comme illustré sur la figure 47B.

Puis le rouleau escamotable 580 est abaissé par activation du vérin 586, comme on le voit à l'examen comparé des figures 47B, 47C et 47D. Dans la position illustrée sur la figure 47D, le rouleau escamotable 580 bloque la feuille enroulée sur le mandrin 610. La barre de thermocollage 562 est activée pour souffler de l'air chaud afin d'élever la température de l'extrémité finale de l'enroulement afin de permettre ultérieurement son collage.

De préférence, le soufflage d'air chaud est opéré pendant un temps déterminé. A l'étape illustrée sur la figure 47E, la lame de coupe 552 est déplacée par le vérin 556 pour assurer la coupe de l'extrémité terminale de l'enroulement comme on le voit sur la figure 47F. La lame 552 est ensuite rétractée.

On relance ensuite la rotation du mandrin 610, le rouleau 580 restant en appui.

La rotation du mandrin 610, rouleau 580 en appui est poursuivie jusqu'à une adresse angulaire donnée, par exemple 9°, comme illustré sur la figure 48, à la suite de quoi le rouleau presseur 580 est relevé.

De préférence, on poursuit la rotation du mandrin sur un tour complet pour que le rouleau satellite 620 poursuive son travail d'écrasement sur le dernier tour enroulé jusqu'à accostage à un angle de référence 356°. Le mandrin est alors en position représentée sur la figure 49. On procède alors de préférence à une succession de cycles d'ouverture/fermeture des mors 612, 614 pour décoller la première spire de l'enroulement par rapport à la surface externe du mandrin, afin de faciliter l'extraction ultérieure de l'enroulement. Cette dernière étape est schématisée sur la figure 50.

Le déplacement relatif des deux mors 612, 614 lors de ces cycles alternés d'ouverture/fermeture est opéré par déplacement axial des deux demi-arbres 670, 680, grâce à la commande des vérins 834, 854. Le déplacement des demi-arbres 670, 680 en rapprochement du mandrin 610 entraîne la rotation des pignons arbrés 658, 659 et des porte-mors 652, 654, et donc des mors 612, 614 eux-mêmes.

On a représenté sur les figures 51A, 52A et 53A, les positions des porte-mors 652, 654, des mors 612, 614, du culbuteur 620 et des leviers 830, 840 et 850 en position de repos. Cette position, dans laquelle les deux mors 612 et 614 sont accolés, est celle utilisée lors de la rotation du mandrin pour l'enroulement de la bande.

De préférence, comme indiqué précédemment, le coulissement axial des demi-arbres 670, 680 est opéré selon quatre positions additionnelles particulières de travail correspondant respectivement aux positions illustrées sur les figures 51, 52 et 53 avec les indices B, C, D et E respectivement.

Chacune de ces quatre positions additionnelles est réglable indépendamment grâce aux quatre vérins précédemment décrits 810, 834, 844 et 854.

L'énergie pneumatique permet de contrôler l'effort de poussée des vérins et de protéger ainsi la mécanique entrant dans la cinématique des mors.

Plus précisément :

- la position illustrée sur les figures 51B, 52B et 53B est utilisée pour décoller la spire interne de l'enroulement par rapport à la surface extérieure du mandrin 610 (dans cette position, les faces internes des deux mors 612 et 614 sont parallèles et placées dans leur écartement maximal),
- la position illustrée sur les figures 51C, 52C et 53C est utilisée pour opérer le retrait de l'enroulement (dans cette position les faces internes des deux mors 612 et 614 sont parallèles et écartées pour permettre le retrait du début de bande, cependant l'écartement est inférieur à celui des figures d'indice B pour éviter un collage de la spire interne de l'enroulement sur la surface externe du mandrin 610),
- la position illustrée sur les figures 51D, 52D et 53D est une étape intermédiaire préparatoire à l'ouverture pour la saisie du début de bande en vue d'un enroulement (les faces internes des mors 612 et 614 sont écartées et les mors sont inclinées par rapport à la position occupée sur les figures précédentes), et
- la position illustrée sur les figures 51E, 52E et 53E est utilisée pour la saisie du début de bande (les surfaces internes des mors 612 et 614 sont écartées et obliques entre elles ; elles forment un dièdre concave en direction du rouleau d'alimentation 570).

La position illustrée sur les figures 51B, 52B, 53B permet une forte rétraction du grand axe des mors 612, 614. Elle permet ainsi de donner "du ventre" à l'élément enroulé. Elle est donnée par l'action du vérin 854 qui pousse la bague 860, par exemple sur une distance de 7,5mm, entraînant un débattement angulaire des mors et porte-mors chacun sur un angle donné, par exemple de 7,5°.

La position illustrée sur les figures 51C, 52C et 53C, est obtenue par activation du vérin 834, présentant par exemple une course axiale de 4,5mm pour entraîner un débattement angulaire des mors et porte-mors contrôlé, par exemple chacun de 4,5°.

Au cours de la séquence précitée illustrée sur la figure 50, on peut passer plusieurs fois de la position illustrée sur les figures 51B, 52B, 53B à la position illustrée sur les figures 51C, 52C, 53C, successivement, pour créer une rupture d'adhérence entre les mors 612, 614 et la première spire enroulée.

La position finale du mandrin 610 est de préférence celle illustrée sur les figures 51C, 52C et 53C, situation d'attente d'extraction de l'élément enroulé, grâce au robot 700.

On notera cependant qu'avant. d'extraire l'élément enroulé, de préférence le mandrin opère une correction angulaire pour venir compenser le décalage angulaire provoqué par l'ouverture des mors. En effet, de préférence, le robot 700 est adapté pour prendre l'élément enroulé en position horizontale, ce qui impose que les pointes des fuseaux constituant le mandrin soient situées dans cette position horizontale.

Après extraction de l'élément, le mandrin est bien entendu préparé et déplacé dans sa position de pleine ouverture dissymétrique des mors pour l'introduction du début de la bande du nouvel élément à enrouler.

Cette séquence de préparation est opérée en passant successivement par les positions illustrées sur les figures 51D, 52D, 53D puis 51E, 52E, 53E.

La position illustrée sur les figures 51D, 52D et 53D est due à l'action du vérin 844 qui sollicite la bague de poussée 860 sur une longueur typique de l'ordre de 13mm et entraîne donc une rotation typique de l'ordre de 13° sur chaque mors 612, 614.

On passe ensuite à la position illustrée sur les figures 51E, 52E et 53E en activant le vérin 810, le vérin 834 restant lui-même activé. On obtient alors l'ouverture maximale des mors 612, 614 telle qu'illustrée sur la figure 52E. Cette position doit être indexée par contrôle de l'orientation du mandrin, par exemple à la position 348°, de sorte que la mâchoire formée par les deux mors 612, 614 soit symétrique par rapport à l'axe horizontal pour venir prendre la bande de façon symétrique, comme indiqué à l'origine en regard de la figure 44A.

Le déplacement relatif des moyens précités peut être contrôlé par tous moyens appropriés.

On a illustré sur la figure 34 un capteur 632 porté par le chariot 630 en regard du trajet de déplacement d'un élément de détection 663 porté par le corps de mandrin 660 pour contrôler le mouvement de rotation du corps de mandrin 660 par rapport au tiroir 630.

Les moyens assurant la commande en déplacement relatif des mors 612, 614 traversent une ouverture ménagée dans la cloison vertical du bâti délimitant les deux compartiments précités, pour permettre le déplacement en translation avec le chariot 630.

Bien entendu la présente invention n'est pas limitée aux modes de réalisation particuliers qui viennent d'être décrits, mais s'étend à toute variante conforme à son esprit.

Bien que le dépelliculage mécanique par lame, précédemment décrit, soit préféré car il évite l'introduction de produit chimique dans l'environnement du processus, en variante, on peut envisager de dépelliculer les complexes à l'aide d'un jet de solvant injecté au niveau de l'interface entre la face externe du complexe et la pellicule concernée.

Le dispositif conforme à l'invention peut également comprendre des moyens de dépelliculage comportant des moyens d'application d'un jet d'air, de préférence froid, sur la zone de divergence entre la pellicule et l'ensemble dont elle est déviée.

De même les fours à circulation d'air chaud pourront être remplacés par des rouleaux chauffants.

On a illustré sur les figures annexées et décrit précédemment une mise en oeuvre selon laquelle le complexe final de 6 couches est opéré par empilement in situ de trois complexes de base respectivement à 1, 2 et 3 couches, initialement séparés et préréalisés. En variante cependant, on peut envisager dans le cadre de la présente invention d'alimenter le mandrin 610 à l'aide d'un tel complexe de 6 couches préréalisé sur une machine adaptée. Dans ce cas l'interruption de l'anode de lithium doit être de préférence intégrée dans ce complexe. Selon encore une autre variante, dans le cadre de la présente invention, les différents complexes de base pourraient être réalisés in situ sur le dispositif de l'invention, à partir de films monocouches.

Les différents moyens mécaniques de coupe précédemment décrits pourront être remplacés par tous moyens équivalents, par exemple à base de laser.

Le mandrin 610 peut lui-même faire l'objet de nombreuses variantes de réalisation.

On a illustré sur la figure 54, une variante de réalisation selon laquelle le mandrin est formé d'une pièce unique monobloc. Cette pièce 610 possède une section droite en fuseau similaire à celle définie par la combinaison des deux mors 612, 614 précédemment décrits. Cependant, on note à l'examen de la figure 54, la présence, dans la pièce précitée, d'une fente rectiligne 619 destinée à recevoir l'extrémité de la bande à enrouler.

Typiquement cette fente 619 s'étend sur une partie seulement de la longueur du mandrin 610, parallèlement aux arêtes effilées de celui-ci et sensiblement à mi-distance de ces arêtes.

Tous moyens appropriés peuvent être associés à un tel mandrin pour successivement ouvrir la fente 619 afin de permettre l'engagement d'une extrémité de bande, puis autoriser la fermeture de la fente pour permettre l'enroulement et/ou «aérer » l'enroulement.

A titre d'exemple non limitatif, le rapprochement des deux parties du mandrin situées de part et d'autre de la fente 619, pour aérer l'élément enroulé et permettre son extraction, peut être opéré par le robot 700 lui-même.

On a représenté sur les figures 55a et 55b, une autre variante de réalisation de mandrin.

Selon cette variante, le mandrin est formé de plusieurs pièces susceptibles de déplacement relatif parallèlement à l'axe de rotation 611 et formant en combinaison, dans la position de travail illustrée sur la figure 55a, une enveloppe identique au mandrin précité présentant une section droite en fuseau.

Selon le mode de réalisation particulier non limitatif illustré sur les figures 55, le mandrin est ainsi formé de trois pièces : une pièce centrale 1610 encadrée de deux pièces latérales 1612, 1614. En variante, le mandrin pourrait être formé de deux seulement de telles pièces. Par ailleurs, on notera que chacune des pièces 1610, 1612, 1614 possède une dimension «radiale », considérée transversalement à l'axe de rotation 611, évolutive lorsque l'on se déplace sur sa longueur, parallèlement à cet axe. Plus précisément la dimension radiale de la pièce centrale 1610 évolue en sens inverse de celle des pièces latérales 1612 et 1614.

Ainsi l'homme de l'art comprendra à l'examen comparé des figures 55A et 55B, que lorsqu'un déplacement relatif est opéré entre les pièces 1610 d'une part, et 1612, 1614 d'autre part, parallèlement à l'axe 611, par tous moyens appropriés, l'encombrement ou grand axe de la section du mandrin, varie.

Le mandrin illustré sur les figures 55A et 55B présente une autre particularité : l'un au moins des éléments, par exemple l'élément central 1610, possède une cavité qui débouche sur ses surfaces externes par l'intermédiaire d'une grille d'orifices 1613. Ainsi en reliant la cavité interne de la pièce 1610 à un moyen à dépression, on peut plaquer l'extrémité de la bande à enrouler sur le mandrin 610 par aspiration.

On a représenté sur les figures 55 des moyens de guidage à translation des pièces 1610, 1612, 1614 entre elles de type queue d'aronde. Bien entendu, tous moyens de guidage équivalents pourraient être retenus.

On a illustré sur les figures 56, une autre variante de réalisation selon laquelle le mandrin est également formé par la combinaison de plusieurs pièces, par exemple une pièce centrale 1610 et deux pièces latérales 1612, 1614 susceptibles de déplacement relatif selon au moins une composante parallèle à l'axe de rotation 610. Plus précisément selon le mode de réalisation représenté sur les figures 56, les pièces latérales 1612, 1614 sont articulées sur un support commun 1615 et la pièce centrale 1610, mobile par rapport à ce support commun, parallèlement à l'axe de rotation 611, joue par effet de coin pour modifier l'écartement entre celles-ci.

On a schématisé sur la figure 57, une variante de réalisation selon laquelle, tout en conservant la même section de mandrin que celle décrite précédemment, en regard notamment de la figure 2, on simplifie la commande de déplacement relatif des mors 612, 614 en ne conservant que des mouvements en translation des mors 612, 614 parallèlement entre eux selon une direction de translation non parallèle au plan d'interface 613, c'est-à-dire selon une trajectoire référencée T sur la figure 57 oblique par rapport au plan d'interface 613 des mors.

Bien évidemment, l'invention n'est pas limitée à la forme précise en fuseau du mandrin illustrée sur la figure 2.

On a par exemple illustré sur la figure 58, un mandrin formé par combinaison de deux mors 612, 614 définissant en combinaison un mandrin de section droite généralement rectangulaire à arêtes arrondies.

On a représenté sur les figures 55 un mandrin dont la section droite est modifiée par déplacement relatif de pièces 1610, 1612 et 1614 parallèlement à l'axe de rotation 611.

On peut envisager également de modifier la section droite du mandrin 610, notamment le grand axe de la section droite du mandrin, par déplacement de deux pièces latérales 1612, 1614 radialement en rapprochement et en éloignement de l'axe 611 et d'une pièce centrale 1610.

Les diverses variantes de mandrin précédemment décrites comprennent des pièces qui définissent une surface continue d'enroulement.

En variante, on peut envisager de réaliser le mandrin sous forme de deux pièces séparées 1612 et 1614 matérialisant les arêtes 615, 616, la partie centrale du mandrin restant évidée comme illustré sur la figure 59. De préférence, ces pièces 1612, 1614 sont pilotées sur commande à déplacement radial par rapport à l'axe de rotation 611 pour faciliter le dégagement de l'élément enroulé par réduction du grand axe du mandrin.

## Revendications

1. Dispositif de réalisation d'ensembles de stockage d'énergie électrique comprenant un mandrin (610) adapté pour enrouler des films superposés sous forme d'un ensemble multi-couches, **caractérisé par le fait que** le mandrin (610) est formé de deux mors complémentaires (612, 614), la section droite du mandrin (610) ayant une section générale en fuseau et qu'il comprend des moyens (670, 680, 800) aptes à modifier sur commande la section droite du mandrin (610), la modification de section du mandrin (610) comprenant une réduction de la longueur du grand axe de la section droite du mandrin (610), les moyens (670, 680, 800) étant conçus pour assurer sur commande un déplacement relatif des deux mors (612, 614) composant le mandrin (610), l'un par rapport à l'autre, selon au moins une composante transversale à l'axe de rotation (611) du mandrin (610).

2. Dispositif selon la revendication 1, **caractérisé par le fait qu'**une modification de section du mandrin (610) est destinée à pincer une extrémité des films à enrouler, à l'origine de l'enroulement.

3. Dispositif selon l'une des revendications 1 à 2, **caractérisé par le fait qu'**une modification de section du mandrin (610) est destinée à provoquer un desserrage général de l'enroulement, c'est à dire créer un certain jeu entre l'enroulement et la surface externe du mandrin (610), pour faciliter l'extraction de l'enroulement.

**4.** Dispositif selon l'une des revendications 1 à 3, **caractérisé par le fait que** chaque mors (612, 614) est fixé sur un porte mors respectif (652, 654), lui même monté à rotation, sur un corps de mandrin (660), autour d'axes respectifs (656, 657) parallèles et excentrés par rapport à l'axe de rotation (611) du mandrin (610).

**5.** Dispositif selon la revendication 4, **caractérisé par le fait que** chaque porte mors (652, 654) est muni d'un pignon (658, 659) à taillage hélicoïdal et associé à un élément d'entraînement (670, 680) guidé à translation par rapport au corps (660) et lui même muni d'un pignon hélicoïdal (672, 682) respectivement complémentaire et en prise avec l'un des pignons (658, 659) prévu sur les porte mors.

**6.** Dispositif selon la revendication 5, **caractérisé par le fait qu'**il comprend deux éléments d'entraînement (670, 680) juxtaposés guidés individuellement à translation dans un fourreau (662) formant fusée assurant le guidage à rotation du mandrin (610) autour de son axe (611).

**7.** Dispositif selon l'une des revendications 5 ou 7, **caractérisé par le fait que** chaque élément d'entraînement (670, 680) comprend un tronçon (674, 684) de section non circulaire de révolution disposé dans un tronçon de section complémentaire du corps (660), assurant une liaison anti-rotation de chaque élément d'entraînement (670, 680) par rapport au corps (660).

**8.** Dispositif selon l'une des revendications 5 à 7, **caractérisé par le fait que** chaque élément d'entraînement (670, 680) comprend une tête élargie (676, 686), en forme de demi-couronne.

**9.** Dispositif selon l'une des revendications 5 à 8, **caractérisé par le fait que** chaque élément d'entraînement (670, 680) est sollicité sélectivement dans plusieurs positions choisies par des moyens mécaniques (800).

**10.** Dispositif selon l'une des revendications 5 à 9, **caractérisé par le fait qu'**il comprend un vérin (810) adapté pour solliciter l'un des éléments d'entraînement (670,680).

**11.** Dispositif selon l'une des revendications 5 à 10, **caractérisé par le fait qu'**il comprend des moyens de commande (830, 840, 850, 834, 844, 854) adaptés pour solliciter les deux éléments d'entraînement (670,680) sur une course identique.

**12.** Dispositif selon la revendication 11, **caractérisé par le fait que** les moyens de commande comprennent un culbuteur (820) monté à rotation, des leviers (830, 840,850) articulés adaptés pour solliciter le culbuteur (820) et des vérins (834, 844, 854) adaptés pour solliciter les leviers (830, 840, 850).

**13.** Dispositif selon la revendication 12, **caractérisé par le fait qu'**il comprend trois leviers (830, 840,850) et trois vérins (834, 844, 854) associés.

**14.** Dispositif selon l'une des revendications 12 ou 13, **caractérisé par le fait que** le culbuteur (820) vient en appui sur une bague (860) intercalée entre le culbuteur (820) et des têtes (676, 686) élargies prévues sur les éléments d'entraînement (670, 680).

**15.** Dispositif selon l'une des revendications 1 à 14, **caractérisé par le fait qu'**il comprend des moyens mécaniques (800) adaptés pour piloter séquentiellement, soit une inclinaison relative entre les deux mors (612, 614) formant le mandrin, pour assurer une ouverture et une fermeture lors de la saisie et de la libération de l'enroulement, soit un déplacement relatif parallèles entre eux des deux mors (612, 614), afin de modifier la longueur du grand axe et du petit axe du mandrin lors d'une séquence finale d'extraction de l'enroulement.

**16.** Dispositif selon l'une des revendications 1 à 15, **caractérisé par le fait qu'**il comprend des moyens aptes à opérer un recalage angulaire du mandrin par rapport à un référentiel, lors de certaines au moins des modifications de section droite du mandrin (610).

**17.** Dispositif selon l'une des revendications 1 à 16, **caractérisé par le fait qu'**il comprend des moyens de commande (670, 680, 800) adaptés pour définir sélectivement cinq états prédéterminés de section droite du mandrin (610).

**18.** Dispositif selon l'une des revendications 1 à 17, **caractérisé par le fait qu'**il comprend des moyens de commande (670, 680, 800) aptes à déterminer au moins quatre positions relatives des deux mors (612, 614) :

. une position dans laquelle les mors (612, 614) sont accolés, pour l'enroulement des films,
. une position dans laquelle les faces internes des deux mors (612, 614) sont parallèles et placées dans leur écartement maximal pour décoller la spire interne de l'enroulement par rapport à la surface extérieure du mandrin (610),
. une position dans laquelle les faces internes des deux mors (612, 614) sont parallèles et écartées d'une valeur inférieure à la position antérieure, pour supprimer le pincement du début de bande lors d'une extraction d'un élément enroulé,

. une position dans laquelle les surfaces internes des mors (612, 614) sont écartées et obliques entre elles.

**19.** Dispositif selon l'une des revendications 1 à 18, **caractérisé par le fait qu'**il comprend des moyens élastiques (690) aptes à opérer un effort de serrage contrôlé sur les mors (612, 614).

**20.** Dispositif selon l'une des revendications 1 à 19, **caractérisé par le fait que** le mandrin (610) possède une cavité adaptée pour être reliée à un moyen à dépression et qui débouche sur au moins une surface externe.

**21.** Dispositif selon l'une des revendications 1 à 20, **caractérisé par le fait que** le mandrin (610) est placé sur un tiroir (630) susceptible de déplacement à translation par rapport au bâti de la machine.

**22.** Dispositif selon la revendication 21, **caractérisé par le fait qu'**il comprend un corps de mandrin (660) monté à rotation sur le tiroir (630).

**23.** Dispositif selon la revendication 22, **caractérisé par le fait qu'**il comprend deux porte-mors (652, 654) montés à rotation sur le corps (660) autour d'axes (656, 657) excentrés par rapport à l'axe de rotation (611) de celui-ci.

**24.** Dispositif selon la revendication 23, **caractérisé par le fait qu'**il comprend en outre deux demi-axes (670, 680) montés à translation dans le corps (660) pour la commande des porte-mors (652, 654).

**25.** Dispositif selon l'une des revendications 21 à 24, **caractérisé par le fait qu'**il comprend en outre un rouleau presseur (620) monté par l'intermédiaire d'un bras rotatif (624) sur un chariot (693), lui-même susceptible de translation par rapport au tiroir (630).

**26.** Dispositif selon la revendication 25, **caractérisé par le fait que** le bras rotatif (624) est entraîné par l'intermédiaire d'un accouplement homocinétique (696).

**27.** Dispositif selon l'une des revendications 25 ou 26, **caractérisé par le fait que** le rouleau presseur (620) est équipé d'un système de palonnage pour permettre un auto alignement contre les spires pendant l'enroulement.

**28.** Dispositif selon l'une des revendications 25 à 27, **caractérisé par le fait que** le bras rotatif (624) est entraîné à rotation à une vitesse double du mandrin (610).

**29.** Procédé de réalisation d'ensembles de stockage d'énergie électrique par enroulement de films superposés, sur un mandrin (610), sous forme d'un ensemble multi-couches, **caractérisé par le fait qu'**il comprend au moins une étape consistant à modifier sur commande la section droite du mandrin (610), présentant une section générale en fuseau, par réduction de la longueur du grand axe de la section droite du mandrin (610), la modification étant réalisée par déplacement relatif de deux mors (612, 614) composant le mandrin (610), l'un par rapport à l'autre, selon au moins une composante transversale à l'axe de rotation (611) du mandrin (610).

**Patentansprüche**

**1.** Realisierungsvorrichtung von Lagergruppen elektrischer Energie, umfassend ein Spannfutter (610), das geeignet ist, um in Form einer mehrschichtigen Gruppe übereinander gelagerte Folien zu wickeln, **gekennzeichnet durch** die Tatsache, dass das Spannfutter (610) aus zwei komplementären Spannbacken (612, 614) gebildet ist, wobei der gerade Abschnitt des Spannfutters (610) einen allgemeinen Abschnitt in Spindelform hat und dass es Mittel (670, 680, 800) umfasst, die geeignet sind, den geraden Abschnitt (610) des Spannfutters (610) per Steuerung zu modifizieren, wobei die Abschnittsmodifikation des Spannfutters (610) eine Reduzierung der Länge der großen Achse des geraden Abschnitts des Spannfutters (610) umfasst, wobei die Mittel (670, 680, 800) dazu ausgelegt sind, um per Steuerung eine relative Verschiebung der zwei Spannbacken (612, 614) zu gewährleisten, die gemäß wenigstens eines zur Rotationsachse (611) des Spannfutters (610) transversalen Bauteils das Spannfutter (610) bilden.

**2.** Vorrichtung gemäß Anspruch 1, **gekennzeichnet durch** die Tatsache, dass eine Abschnittsmodifikation des Spannfutters (610) dazu bestimmt ist, ein Ende der zu wickelnden Folien zu Beginn der Wicklung einzuklemmen.

**3.** Vorrichtung gemäß einem der Ansprüche 1 bis 2, **gekennzeichnet durch** die Tatsache, dass eine Abschnittsmodifikation des Spannfutters (610) dazu bestimmt ist, ein allgemeines Lösen der Wicklung hervorzurufen, d. h. ein gewisses Spiel zwischen der Wicklung und der Außenfläche des Spannfutters (610) zu schaffen, um die Extraktion der Wicklung zu erleichtern.

**4.** Vorrichtung gemäß einem der Ansprüche 1 bis 3, **gekennzeichnet durch** die Tatsache, dass jede Klemmbacke (612, 614) auf einem jeweiligen Klemmbackenträger (652, 654) befestigt ist, der seinerseits auf einem Spannfutterkörper (660) um jeweilige parallel und im Verhältnis zur Rotationsachse (611) des Spannfutters (610) exzentrierte Achsen (656, 657) in Rotation montiert ist.

5. Vorrichtung gemäß Anspruch 4, **gekennzeichnet durch** die Tatsache, dass jeder Klemmbackenträger (652, 654) mit einem Ritzel (658, 659) spiralförmiger Gestaltung versehen ist und einem Antriebselement (670, 680) zugeordnet ist, das im Verhältnis zum Körper (660) in Translation geführt ist und selbst mit einem spiralförmigen Ritzel (672, 682) versehen ist, das jeweils komplementär und mit einem der auf den Klemmbackenträgern vorgesehenen Ritzeln (658, 659) eingreifend ist.

6. Vorrichtung gemäß Anspruch 5, **gekennzeichnet durch** die Tatsache, dass sie zwei nebeneinanderliegende, individuell in Translation geführte Antriebselemente (670, 680) in einer Hülse (662) umfasst, die eine Spindel bilden, welche die Führung in Rotation des Spannfutters (610) um seine Achse (611) gewährleistet.

7. Vorrichtung gemäß einem der Ansprüche 5 oder 7, **gekennzeichnet durch** die Tatsache, dass jedes Antriebselement (670, 680) ein Teilstück (674, 684) mit nicht kreisförmigem Revolutionsabschnitt umfasst, der in einem Teilstück mit komplementärem Abschnitt des Körpers (660) angeordnet ist und eine Antirotationsverbindung jedes Antriebselements (670, 680) im Verhältnis zum Körper (660) gewährleistet.

8. Vorrichtung gemäß einem der Ansprüche 5 bis 7, **gekennzeichnet durch** die Tatsache, dass jedes Antriebselement (670, 680) einen erweiterten Kopf (676, 686) in Form einer Halbkrone umfasst.

9. Vorrichtung gemäß einem der Ansprüche 5 bis 8, **gekennzeichnet durch** die Tatsache, dass jedes Antriebselement (670, 680) in mehreren, von mechanischen Mitteln (800) gewählten Positionen selektiv angesprochen wird.

10. Vorrichtung gemäß einem der Ansprüche 5 bis 9, **gekennzeichnet durch** die Tatsache, dass sie einen Zylinder (810) umfasst, der geeignet ist, um eines der Antriebselemente (670, 680) anzusprechen.

11. Vorrichtung gemäß einem der Ansprüche 5 bis 10, **gekennzeichnet durch** die Tatsache, dass sie Steuermittel (830, 840, 850, 834, 844, 854) umfasst, die geeignet sind, um die zwei Antriebselemente (670, 680) auf einem identischen Lauf anzusprechen.

12. Vorrichtung gemäß Anspruch 11, **gekennzeichnet durch** die Tatsache, dass die Steuermittel ein Kippgerüst (820), das in Rotation montiert ist, artikulierte Hebel (830, 840, 850), die angepasst sind, um das Kippgerüst (820) anzusprechen, und Zylinder (834, 844, 854), die geeignet sind, um die Hebel (830, 840, 850) anzusprechen, umfassen.

13. Vorrichtung gemäß Anspruch 12, **gekennzeichnet durch** die Tatsache, dass sie drei Hebel (830, 840, 850) und drei zugeordnete Zylinder (834, 844, 854) umfasst.

14. Vorrichtung gemäß einem der Ansprüche 12 oder 13, **gekennzeichnet durch** die Tatsache, dass das Kippgerüst (820) auf einem Ring (860) zum Aufstützen kommt, der zwischen dem Kippgerüst (820) und den auf den Antriebselementen (670, 680) vorgesehenen erweiterten Köpfen (676, 686) zwischengeschaltet ist.

15. Vorrichtung gemäß einem der Ansprüche 1 bis 14, **gekennzeichnet durch** die Tatsache, dass sie mechanische Mittel (800) umfasst, die geeignet sind, um sequentiell entweder eine relative Neigung zwischen den zwei das Spannfutter bildenden Klemmbacken (612, 614), um eine Öffnung und einen Verschluss beim Ergreifen und der Freigabe der Wicklung zu gewährleisten, oder eine relative Verschiebung parallel zu den zwei Klemmbacken (612, 614) zwischen ihnen zu steuern, um die Länge der großen Achse und der kleinen Achse des Spannfutters bei einer abschließenden Extraktionssequenz der Wicklung zu modifizieren.

16. Vorrichtung gemäß einem der Ansprüche 1 bis 15, **gekennzeichnet durch** die Tatsache, dass sie Mittel umfasst, die geeignet sind, bei wenigstens bestimmten Modifikationen des geraden Abschnitts des Spannfutters (610) eine winkelförmige Neueinstellung des Spannfutters im Verhältnis zu einem Bezugssystem zu bewirken.

17. Vorrichtung gemäß einem der Ansprüche 1 bis 16, **gekennzeichnet durch** die Tatsache, dass sie Steuermittel (670, 680, 800) umfasst, die geeignet sind, um selektiv fünf vorbestimmte Zustände des geraden Abschnitts des Spannfutters (610) zu definieren.

18. Vorrichtung gemäß einem der Ansprüche 1 bis 17, **gekennzeichnet durch** die Tatsache, dass sie Steuermittel (670, 680, 800) umfasst, die geeignet sind, wenigstens vier relative Positionen der zwei Klemmbacken (612, 614) zu bestimmen:

* eine Position, in der die Klemmbacken (612, 614) für die Wicklung der Folien angebaut sind,
* eine Position, in der die Innenseiten der zwei Klemmbacken (612, 614) parallel sind und in ihrer maximalen Beabstandung platziert sind, um die interne Windung der Wicklung im Verhältnis zur Außenfläche des Spannfutters (610) abzulösen,
* eine Position, in der die Innenseiten der zwei Spannbacken (612, 614) parallel und um einen niedrigeren Wert als der vorherigen Position beabstandet sind, um das Einklemmen des Bandes zu Beginn bei einer Extraktion eines gewickelten Elements überflüssig zu machen,
* eine Position, in der die Innenflächen der Klemmbacken (612, 614) voneinander beabstandet und geneigt sind.

**19.** Vorrichtung gemäß einem der Ansprüche 1 bis 18, **gekennzeichnet durch** die Tatsache, dass sie elastische Mittel (690) umfasst, die geeignet sind, eine kontrollierte Einspannbelastung auf die Klemmbacken (612, 614) zu bewirken.

**20.** Vorrichtung gemäß einem der Ansprüche 1 bis 19, **gekennzeichnet durch** die Tatsache, dass das Spannfutter (610) eine Vertiefung umfasst, die geeignet ist, um an ein Unterdruckmittel angeschlossen zu sein und das auf wenigstens einer Außenfläche mündet.

**21.** Vorrichtung gemäß einem der Ansprüche 1 bis 20, **gekennzeichnet durch** die Tatsache, dass das Spannfutter (610) auf einem Auszug (630) platziert ist, das sich in Translation im Verhältnis zum Gerüst der Maschine verschieben kann.

**22.** Vorrichtung gemäß Anspruch 21, **gekennzeichnet durch** die Tatsache, dass sie einen Spannfutterkörper (660) umfasst, der in Rotation auf dem Auszug (630) montiert ist.

**23.** Vorrichtung gemäß Anspruch 22, **gekennzeichnet durch** die Tatsache, dass sie zwei Klemmbackenträger (652, 654) umfasst, die in Rotation auf dem Körper (660) um Achsen (656, 657) montiert sind, die im Verhältnis zur Rotationsachse (611) derselben exzentriert sind.

**24.** Vorrichtung gemäß Anspruch 23, **gekennzeichnet durch** die Tatsache, dass sie darüber hinaus zwei Halbachsen (670, 680) umfasst, die in Translation in dem Körper (660) zur Steuerung der Klemmbackenträger (652, 654) montiert sind.

**25.** Vorrichtung gemäß einem der Ansprüche 21 bis 24, **gekennzeichnet durch** die Tatsache, dass sie darüber hinaus eine Druckrolle (620) umfasst, die mittels eines Rotationsarms (624) auf einem Wagen (693) montiert ist, der seinerseits zu einer Translation im Verhältnis zum Auszug (630) geeignet ist.

**26.** Vorrichtung gemäß Anspruch 25, **gekennzeichnet durch** die Tatsache, dass der Rotationsarm (624) mittels einer homokinetischen Kupplung (696) angetrieben ist.

**27.** Vorrichtung gemäß einem der Ansprüche 25 oder 26, **gekennzeichnet durch** die Tatsache, dass die Druckrolle (620) mit einem Pendelsystem ausgerüstet ist, um eine eigenständige Fluchtung gegen die Windungen während des Wickelns zu erlauben.

**28.** Vorrichtung gemäß einem der Ansprüche 25 bis 27, **gekennzeichnet durch** die Tatsache, dass der Rotationsarm (624) in Rotation in einer doppelten Geschwindigkeit des Spannfutters (610) angetrieben ist.

**29.** Realisierungsverfahren von Lagergruppen elektrischer Energie per Wicklung von übereinander gelagerten Folien auf einem Spannfutter (610) in Form einer mehrschichtigen Gruppe, **gekennzeichnet durch** die Tatsache, dass es wenigstens einen Schritt umfasst, der in der Modifizierung per Steuerung des geraden Abschnitts des Spannfutters (610), der einen allgemeinen Abschnitt in Spindelform aufweist, per Reduzierung der Länge der großen Achse des geraden Abschnitts des Spannfutters (610) besteht, wobei die Modifizierung per relativer Verschiebung von zwei das Spannfutter (610) bildenden Klemmbacken (612, 614), einer im Verhältnis zum anderen, gemäß wenigstens einem zur Rotationsachse (611) des Spannfutters (610) transversalen Bauteils realisiert ist.

## Claims

**1.** A device for making electrical energy storage assemblies comprising a mandrel (610) adapted to wind superimposed films as a multilayer assembly, **characterised in that** the mandrel (610) is formed by two complementary jaws (612, 614), the cross-section of the mandrel (610) having a spindle-shaped general cross-section and **in that** it comprises means (670, 680, 800) able to modify on request the cross-section of the mandrel (610), the modification of the cross-section of the mandrel (610) comprising reducing the length of the major axis of the cross-section of the mandrel (610), the means (670, 680, 800) being designed to provide on request a relative displacement of both jaws (612, 614) making up the mandrel (610), with respect to each other, along at least one component transverse to the axis of rotation (611) of the mandrel (610).

**2.** The device according to claim 1, **characterised in that** a modification of cross-section of the mandrel (610) is intended for pinching one end of the films to be wound, causing the winding.

3. The device according to one of claims 1 and 2, **characterised in that** a modification of cross-section of the mandrel (610) is intended for causing a general loosening of the winding, that is creating some clearance between the winding and the outer surface of the mandrel (610), to facilitate the extraction of the winding.

4. The device according to one of claims 1 to 3, **characterised in that** each jaw (612, 614) is attached to a respective jaw holder (652, 654), itself rotatably mounted, on a mandrel body (660), about respective axes (656, 657) parallel and off-centred to the axis of rotation (611) of the mandrel (610).

5. The device according to claim 4, **characterised in that** each jaw holder (652, 654) is provided with a helical cut pinion (658, 659) and associated with a drive element (670, 680) translationally guided relative to the body (660) and itself provided with a helical pinion (672, 682) respectively complementary and engaged with one of the pinions (658, 659) provided on the jaw holders.

6. The device according to claim 5, **characterised in that** it comprises two juxtaposed drive elements (670, 680) individually translationally guided on a spindle forming sheath (662) providing rotational guiding of the mandrel (610) about its axis (611).

7. The device according to one of claims 5 and 7, **characterised in that** each drive element (670, 680) comprises a segment (674, 684) having a non-circular revolution cross-section arranged in a segment having a cross-section complementary to the body (660), providing anti-rotation connection of each drive element (670, 680) with respect to the body (660).

8. The device according to one of claims 5 to 7, **characterised in that** each drive element (670, 680) comprises a half-crown shaped widened head (676, 686).

9. The device according to one of claims 5 to 8, **characterised in that** each drive element (670, 680) is selectively biased in several chosen positions by mechanical means (800).

10. The device according to one of claims 5 to 9, **characterised in that** it comprises a cylinder (810) adapted to bias one of the drive elements (670, 680).

11. The device according to one of claims 5 to 10, **characterised in that** it comprises control means (830, 840, 850, 834, 844, 854) adapted to bias both drive elements (670, 680) on an identical stroke.

12. The device according to claim 11, **characterised in that** the control means comprise a rotatably mounted rocker arm (820), hinged levers (830, 840, 850) adapted to bias the rocker arm (820) and cylinders (834, 844, 854) adapted to bias the levers (830, 840, 850).

13. The device according to claim 12, **characterised in that** it comprises three levers (830, 840, 850) and three associated cylinders (834, 844, 854) .

14. The device according to one of claims 12 and 13, **characterised in that** the rocker arm (820) presses against a ring (860) sandwiched between the rocker arm (820) and widened heads (676, 686) provided on the drive elements (670, 680).

15. The device according to one of claims 1 to 14, **characterised in that** it comprises mechanical means (800) adapted to sequentially drive either a relative tilt between both jaws (612, 614) forming the mandrel, to provide opening and closing upon gripping and releasing the winding, or a relative displacement of both jaws (612, 614) parallel to each other, in order to modify the length of the major axis and the minor axis of the mandrel during a final sequence of extraction of the winding.

16. The device according to one of claims 1 to 15, **characterised in that** it comprises means able to make an angular reset of the mandrel with respect to a reference frame, during at least some of the modifications of cross-section of the mandrel (610).

17. The device according to one of claims 1 to 16, **characterised in that** it comprises control means (670, 680, 800) adapted to selectively define five predetermined states of cross-section of the mandrel (610).

18. The device according to one of claims 1 to 17, **characterised in that** it comprises control means (670, 680, 800) adapted to determine at least four relative positions of both jaws (612, 614):

. a position in which the jaws (612, 614) are adjoined, for winding the films,
. a position in which the inner faces of both jaws (612, 614) are parallel and placed in their maximum gap to move the inner turn of the winding away from the outer surface of the mandrel (610),
. a position in which the inner faces of both jaws (612, 614) are parallel and spaced apart by a value lower than the previous position, to cancel the pinching of the leading band during an extraction of the wound element,

. a position in which the inner surfaces of the jaws (612, 614) are spaced apart and oblique to each other.

**19.** The device according to one of claims 1 to 18, **characterised in that** it comprises elastic means (690) able to make a controlled tightening strain on the jaws (612, 614).

**20.** The device according to one of claims 1 to 19, **characterised in that** the mandrel (610) has a cavity adapted to be connected to a depression means and which opens onto at least one outer surface.

**21.** The device according to one of claims 1 to 20, **characterised in that** the mandrel (610) is placed on a drawer (630) translationally movable with respect to the machine frame.

**22.** The device according to claim 21, **characterised in that** it comprises a mandrel body (660) rotatably mounted onto the drawer (630).

**23.** The device according to claim 22, **characterised in that** it comprises two jaw holders (652, 654) rotatably mounted on the body (660) about axes (656, 657) off-centred to the axis of rotation (611) thereof.

**24.** The device according to claim 23, **characterised in that** it further comprises two half-axes (670, 680) translationally mounted in the body (660) for controlling the jaw holders (652, 654).

**25.** The device according to one of claims 21 to 24, **characterised in that** it further comprises a press roll (620) mounted through a rotatable arm (624) on a carriage (693), itself translationally movable with respect to the drawer (630).

**26.** The device according to claim 25, **characterised in that** the rotatable arm (624) is driven through a constant speed universal joint (696).

**27.** The device according to one of claims 25 and 26, **characterised in that** the press roll (620) is equipped with a swinging system for allowing self-alignment against the turns during winding.

**28.** The device according to one of claims 25 to 27, **characterised in that** the rotatable arm (624) is rotatably driven at a speed twice as fast as that of the mandrel (610).

**29.** A method for making electrical energy storage assemblies by winding superimposed films, on a mandrel (610), as a multilayer assembly, **characterised in that** it comprises at least one step of modifying on request the cross-section of the mandrel (610), having a spindle shaped general cross-section, by reducing the length of the major axis of the cross-section of the mandrel (610), the modification being made by relatively displacing both jaws (612, 614) making up the mandrel (610), with respect to each other, along at least one component transverse to the axis of rotation (611) of the mandrel (610).

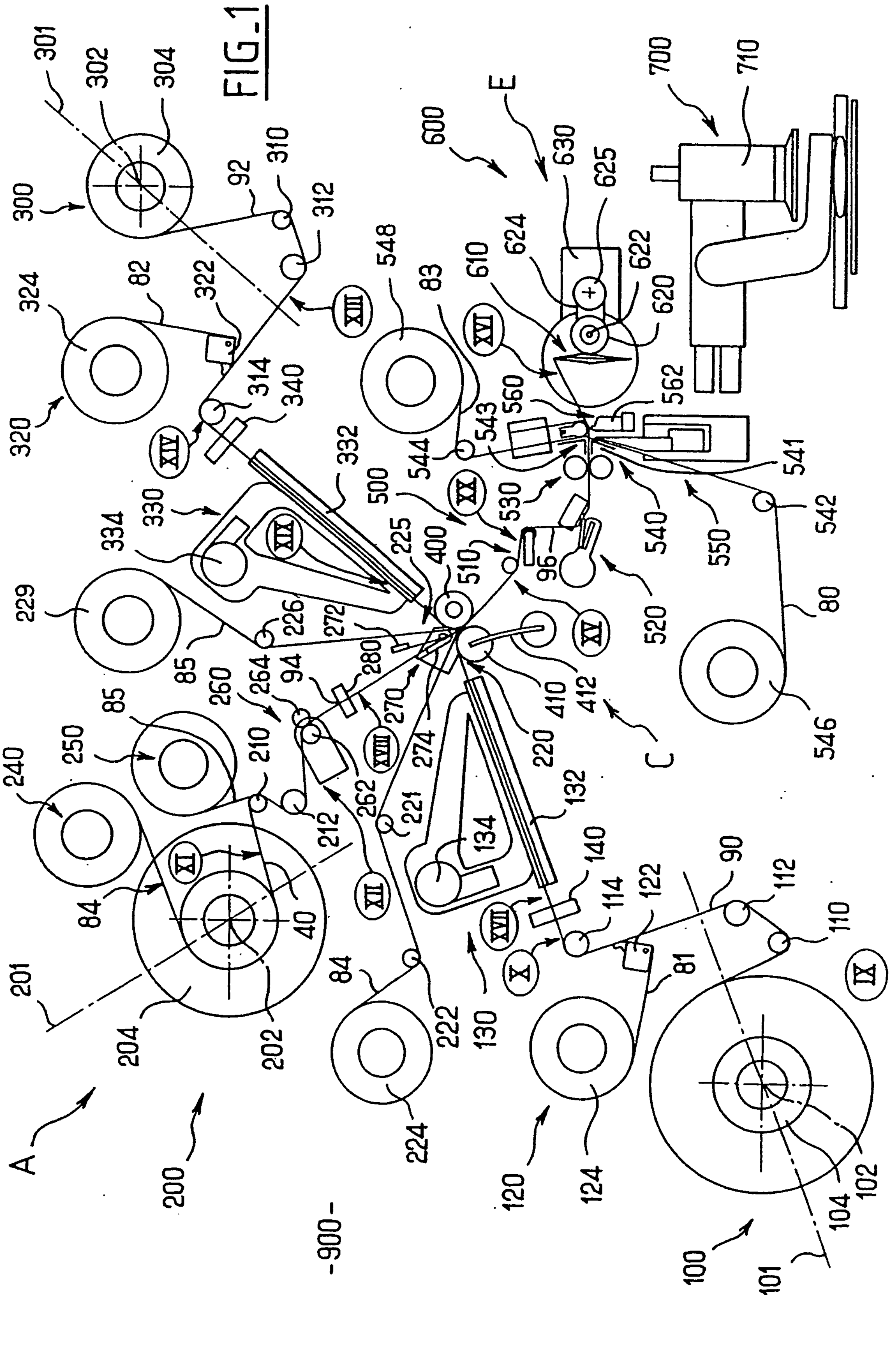

FIG_1

FIG.2

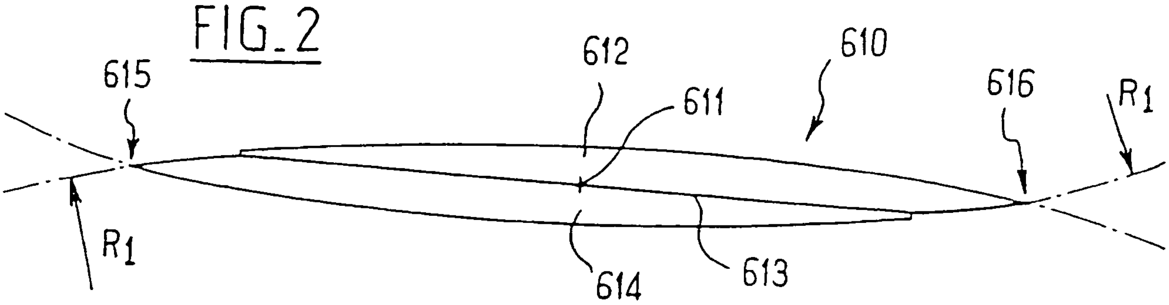


EPO -DG 1

11. 07. 2005

116

FIG.3

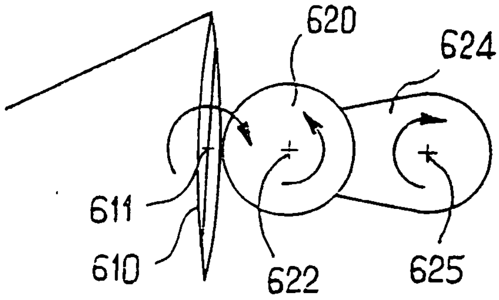


FIG.4

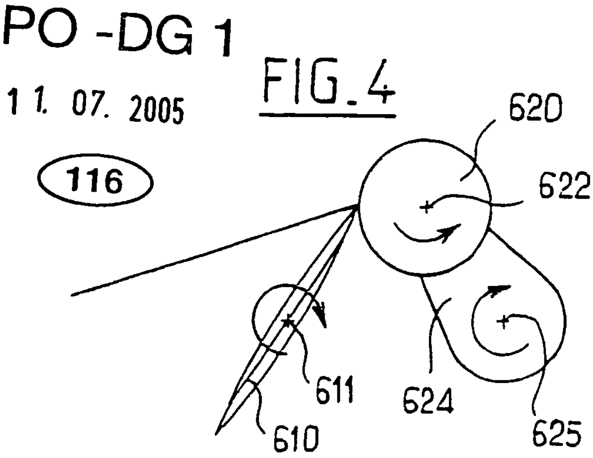


FIG.5

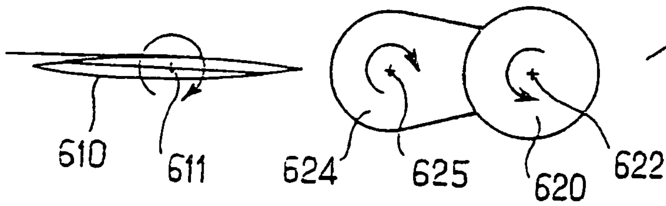


FIG.6

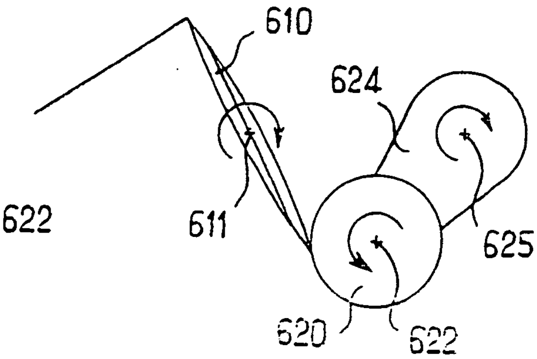


FIG.22

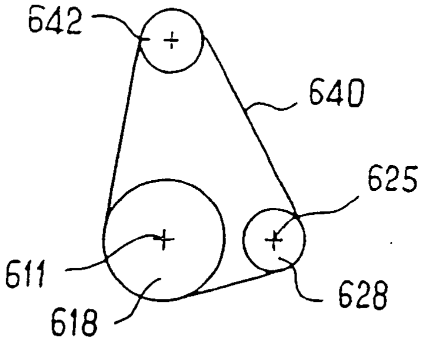

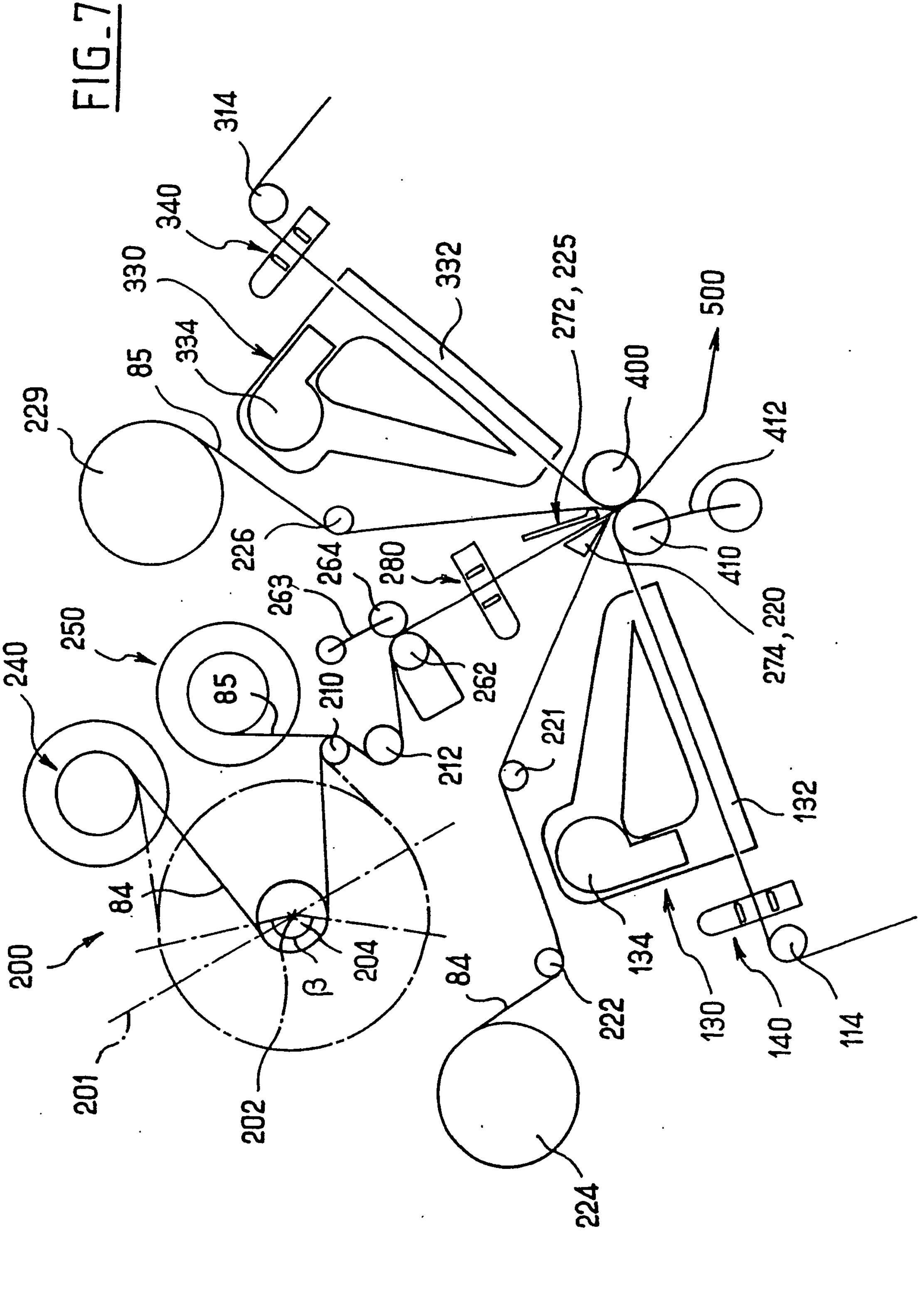
314
340
330
332
334
85
229
272, 225
500
400
412
226
264
280
263
250
240
85
210
262
410
274, 220
221
212
132
84
200
204
β
134
130
140
114
84
222
201
202
224

FIG_7

FIG_8

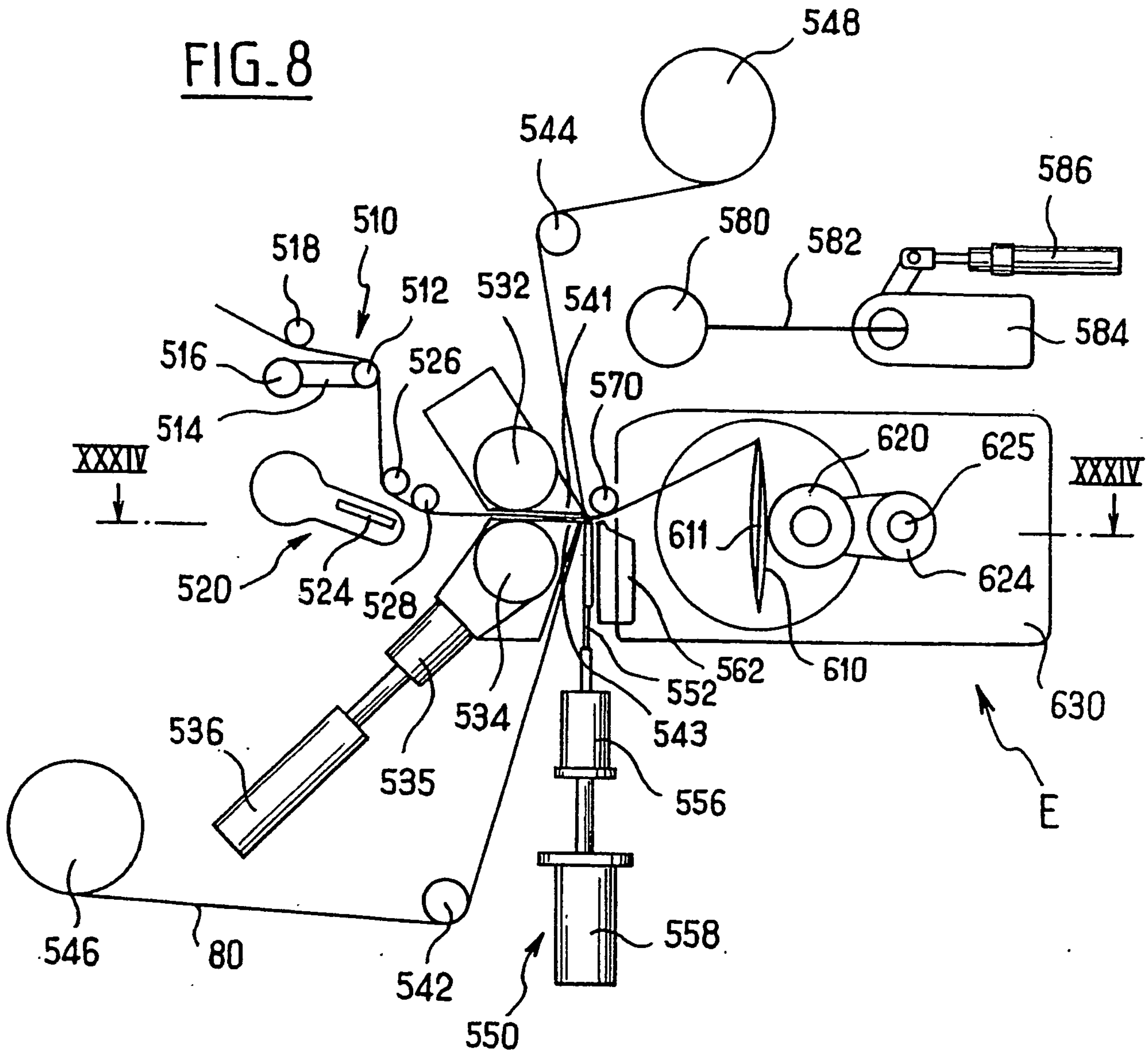
548
544
586
510
580
582
518
512
532
541
516
584
526
570
514
620
625
XXXIV
XXXIV
611
520
524
528
624
562
552
610
630
534
543
536
556
E
535
558
546
80
542
550

FIG_31

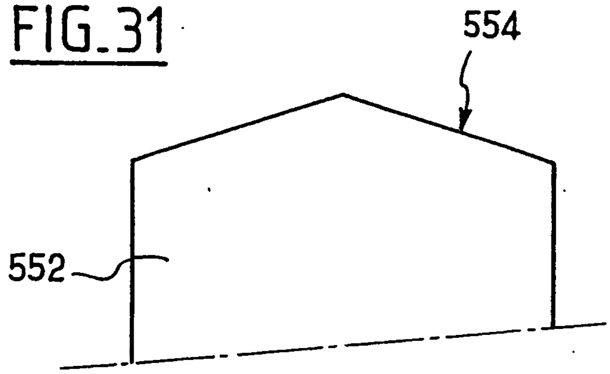
554
552

FIG_9

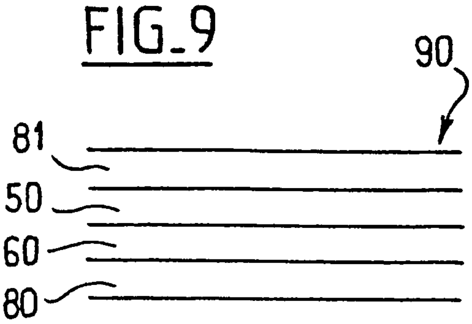


FIG_13

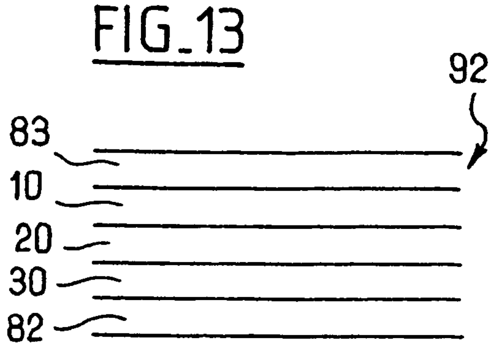


FIG_10

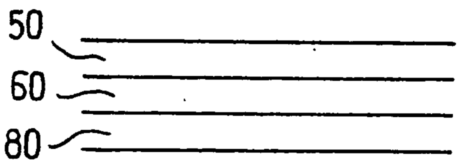


FIG_14

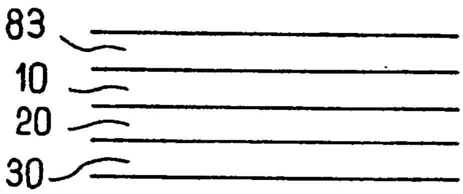


FIG_11

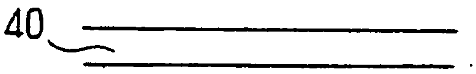


FIG_15

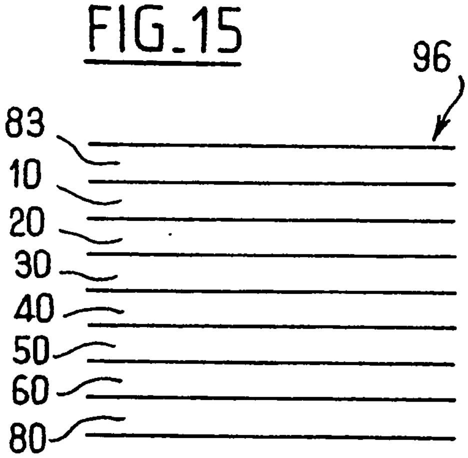


FIG_12

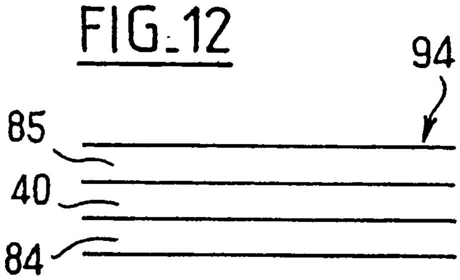


FIG_16

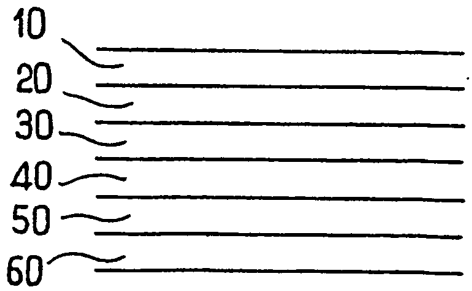

FIG_17

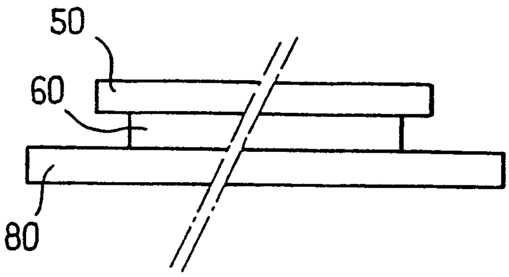


FIG_18

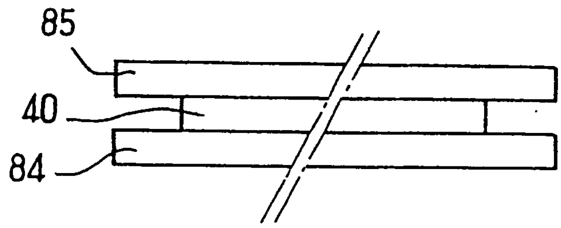


FIG_19

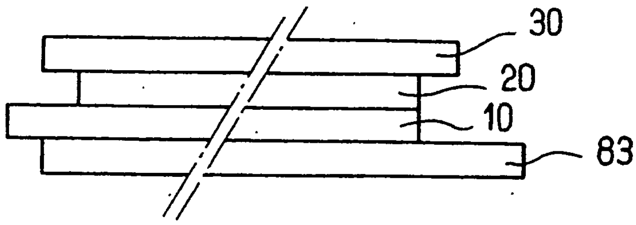


FIG_20

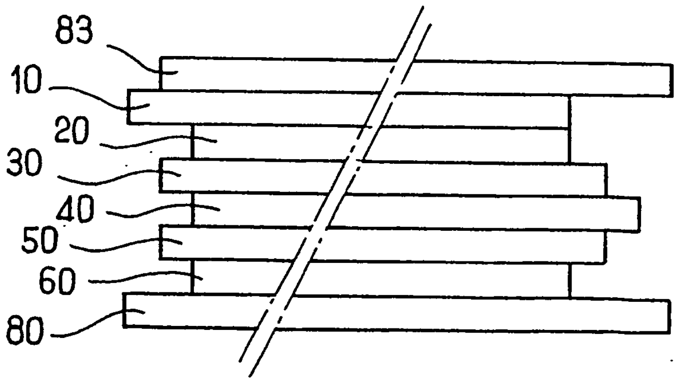

FIG_21

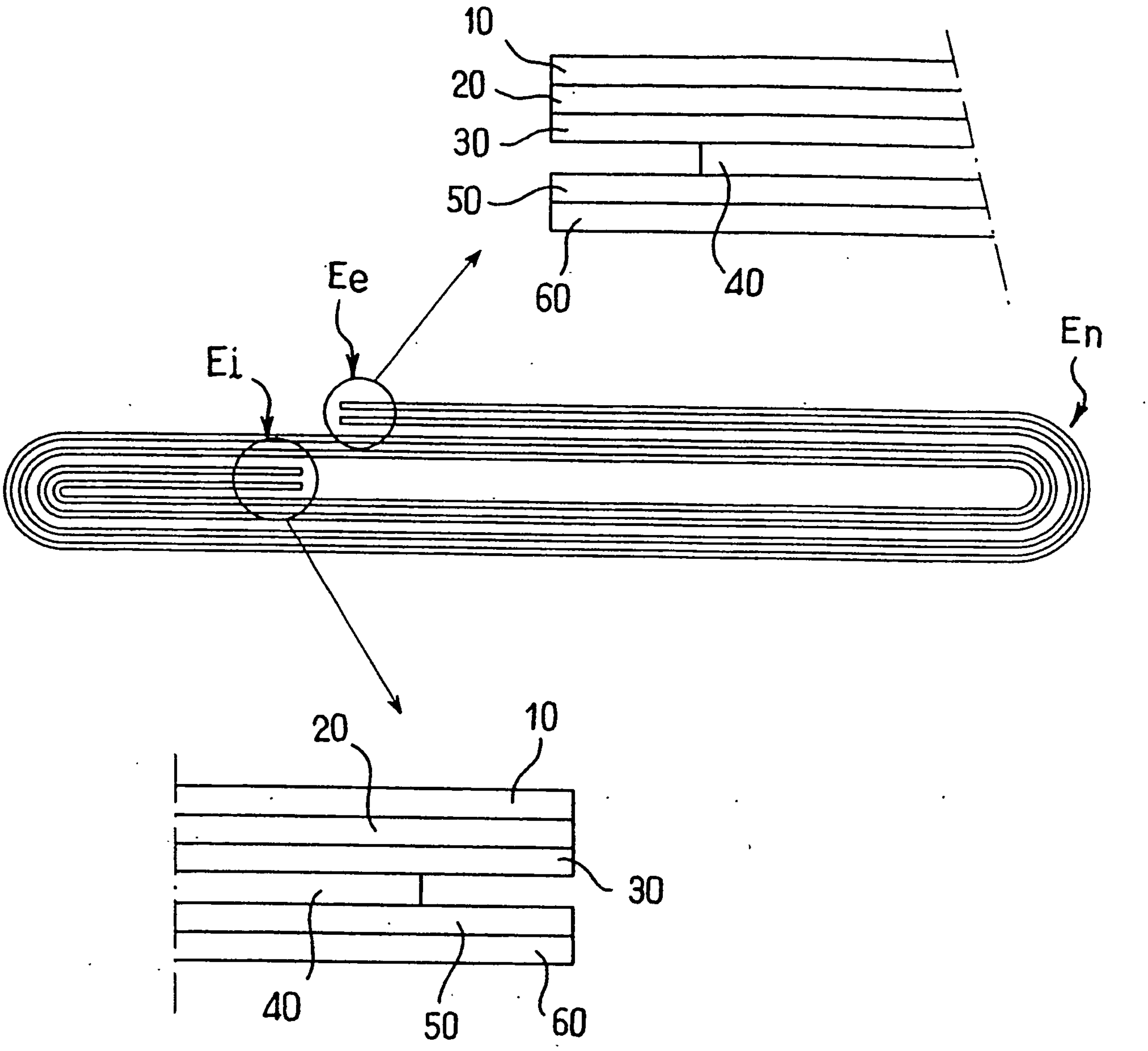

FIG_23

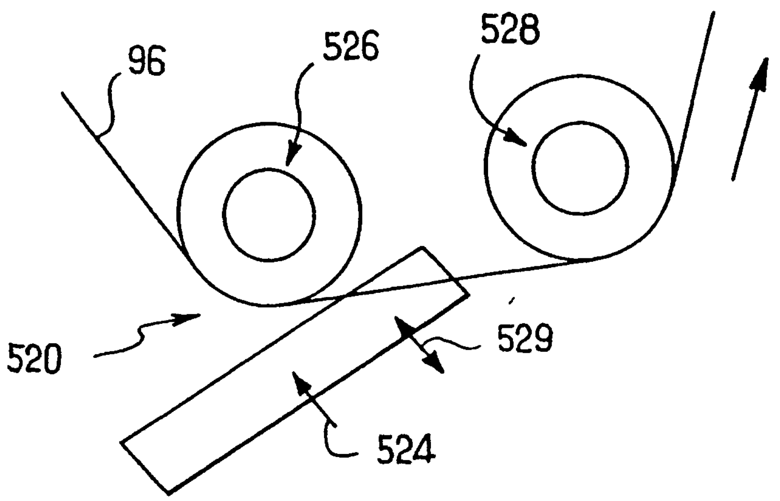


FIG_24

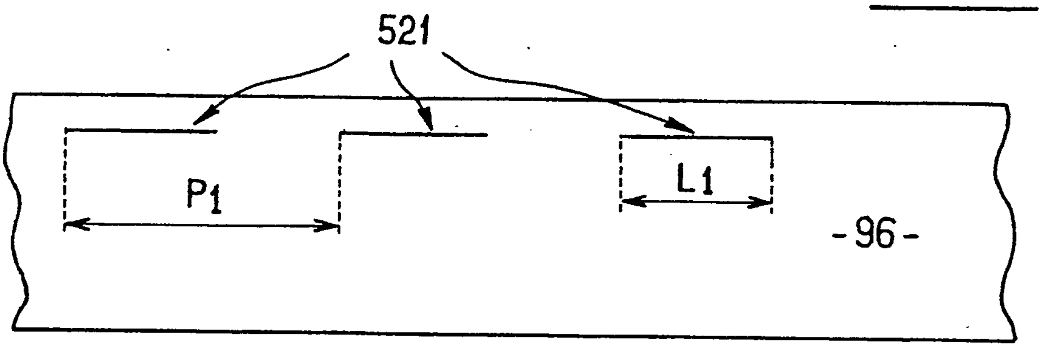


FIG_25

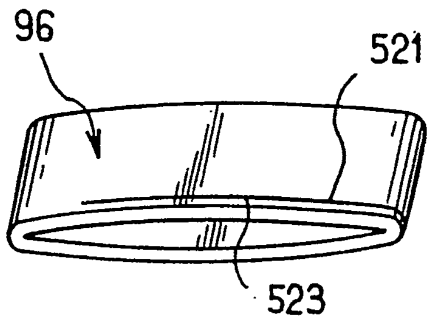


FIG_26

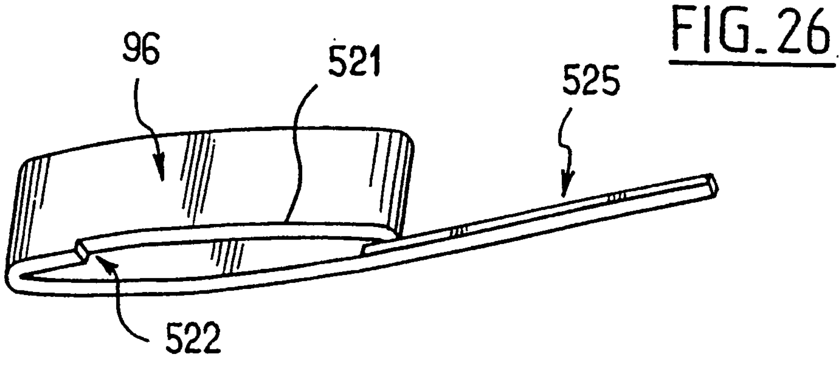

FIG_27

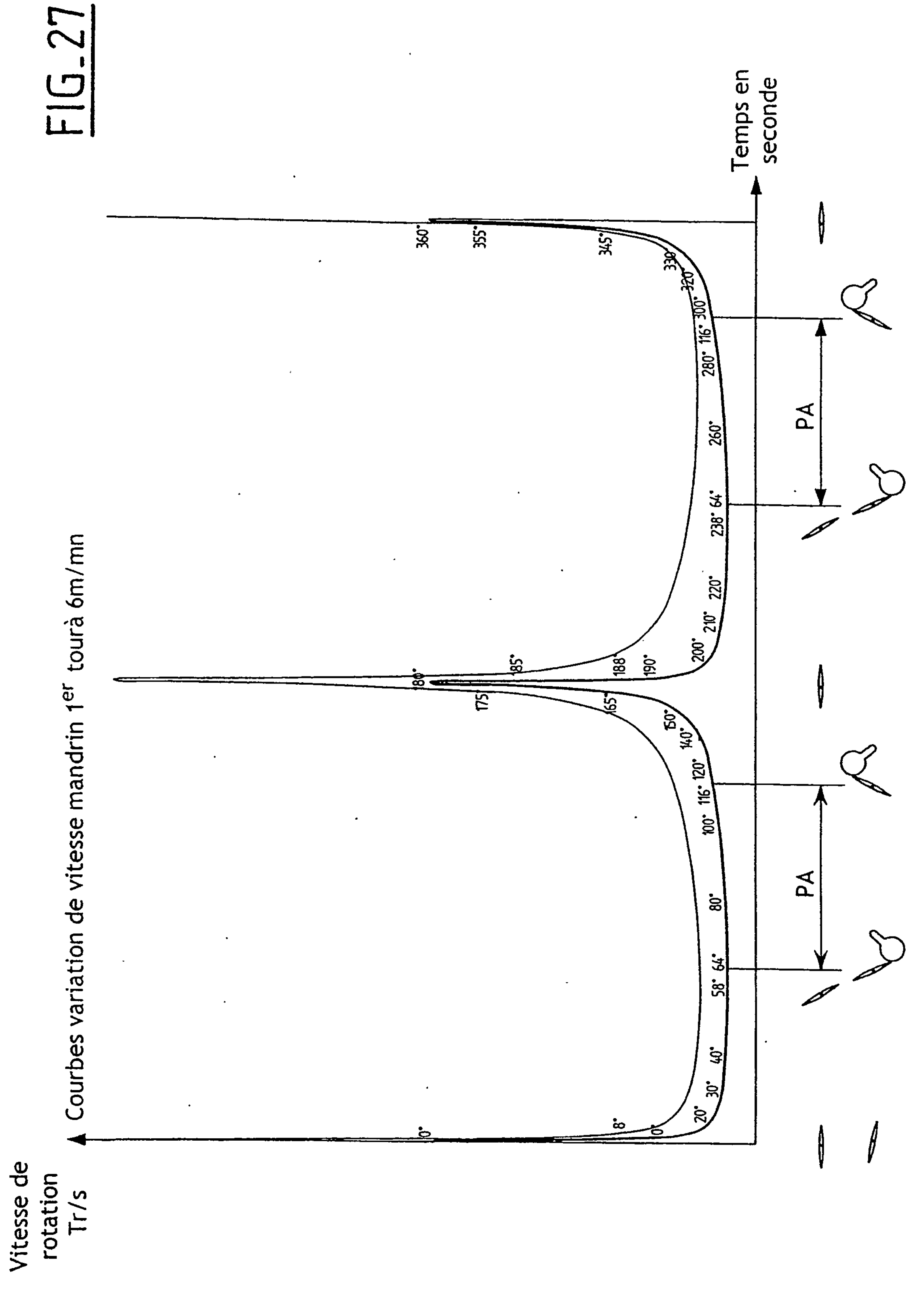
Vitesse de rotation Tr/s
Courbes variation de vitesse mandrin 1er tourà 6m/mn
Temps en seconde
PA
PA
0°
8°
0°
20°
30°
40°
58°
64°
80°
100°
116°
120°
140°
150°
165°
175°
180°
185°
188°
190°
200°
210°
220°
238°
64°
260°
280°
116°
300°
320°
330
345°
355°
360°

FIG. 28

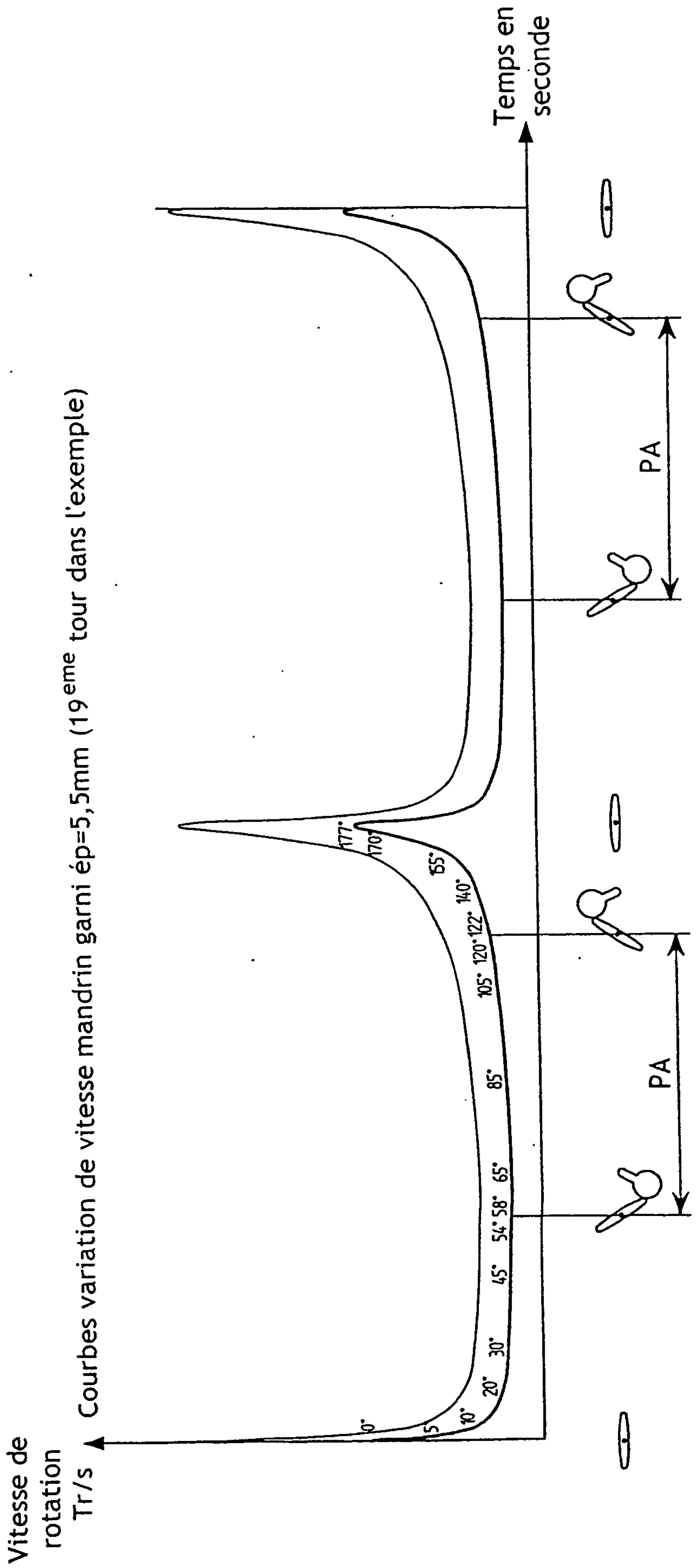
Courbes variation de vitesse mandrin garni ép=5,5mm (19eme tour dans l'exemple)
Vitesse de rotation Tr/s
Temps en seconde
PA
PA
0°
5
10°
20°
30°
45°
54°
58°
65°
85°
105°
120°
122°
140°
155°
170°
177°

FIG. 29

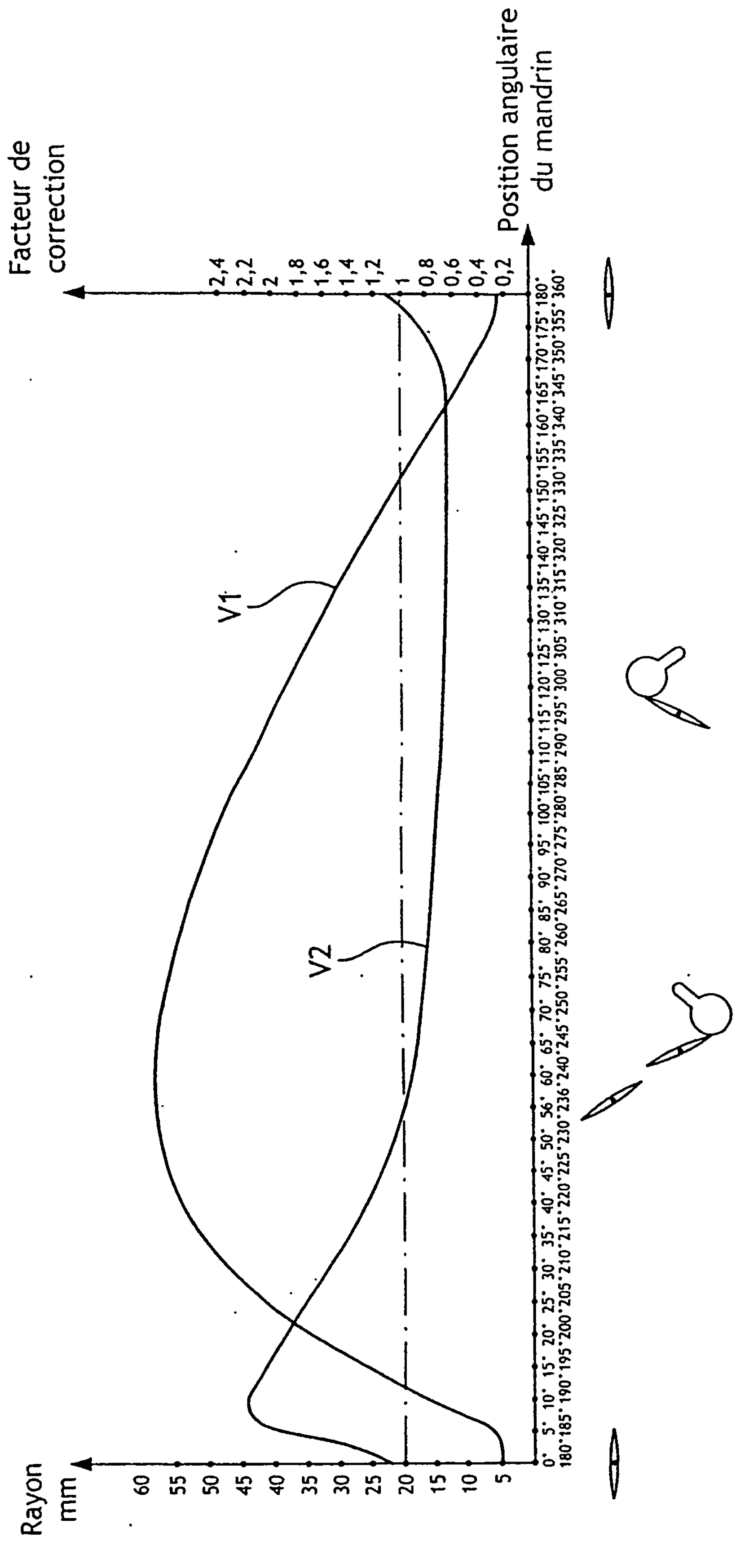
Facteur de correction
Position angulaire du mandrin
Rayon mm
V1
V2
60
55
50
45
40
35
30
25
20
15
10
5
2,4
2,2
2
1,8
1,6
1,4
1,2
1
0,8
0,6
0,4
0,2

FIG. 30

| Angle en ° | | Rayon enroulement | Facteur de correction | 1^er Tour | | 2^nd tour | | ... | 10^e Tour | | ... | 23^e Tour | |
|---|---|---|---|---|---|---|---|---|---|---|---|---|---|
| | | | | r | N | r | N | | r | N | | r | N |
| 0 | 180 | 5,00 | 1,109980 | 5,22 | 182,87 | 5,44 | 175,41 | | 7,22 | 132,26 | | 10,11 | 94,49 |
| 1 | 181 | 5,06 | 1,200700 | 5,30 | 180,17 | 5,54 | 172,36 | | 7,46 | 127,98 | | 10,58 | 90,23 |
| 2 | 182 | 5,24 | 1,319033 | 5,50 | 173,50 | 5,77 | 165,57 | | 7,88 | 121,21 | | 11,31 | 84,45 |
| 3 | 183 | 5,57 | 1,483629 | 5,87 | 162,77 | 6,16 | 154,93 | | 8,54 | 111,85 | | 12,39 | 77,04 |
| ... | ... | | | | | | ... | | | | | | |
| 80 | 260 | 54,30 | 0,796343 | 54,46 | 17,53 | 54,62 | 17,48 | | 55,89 | 17,09 | | 57,96 | 16,47 |
| 85 | 265 | 52,82 | 0,774575 | 52,97 | 18,03 | 53,13 | 17,97 | | 54,37 | 17,56 | | 56,38 | 16,94 |
| ... | ... | | | | | | ... | | | | | | |
| 178 | 358 | 5,19 | 0,977600 | 5,39 | 177,31 | 5,58 | 171,10 | | 7,15 | 133,65 | | 9,69 | 98,58 |
| 179 | 359 | 5,05 | 1,037420 | 5,26 | 181,63 | 5,46 | 174,74 | | 7,12 | 134,03 | | 9,82 | 97,22 |
| 180 | 360 | 5,00 | 1,109980 | 5,22 | 182,87 | 5,44 | 175,41 | ... | 7,22 | 132,26 | ... | 10,11 | 94,49 |

FIG.32

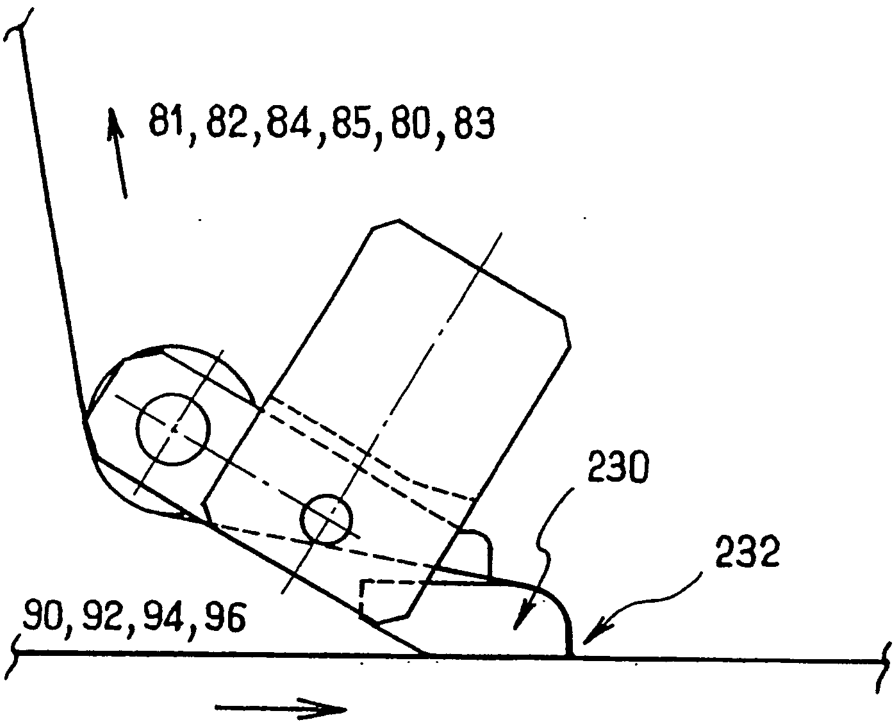

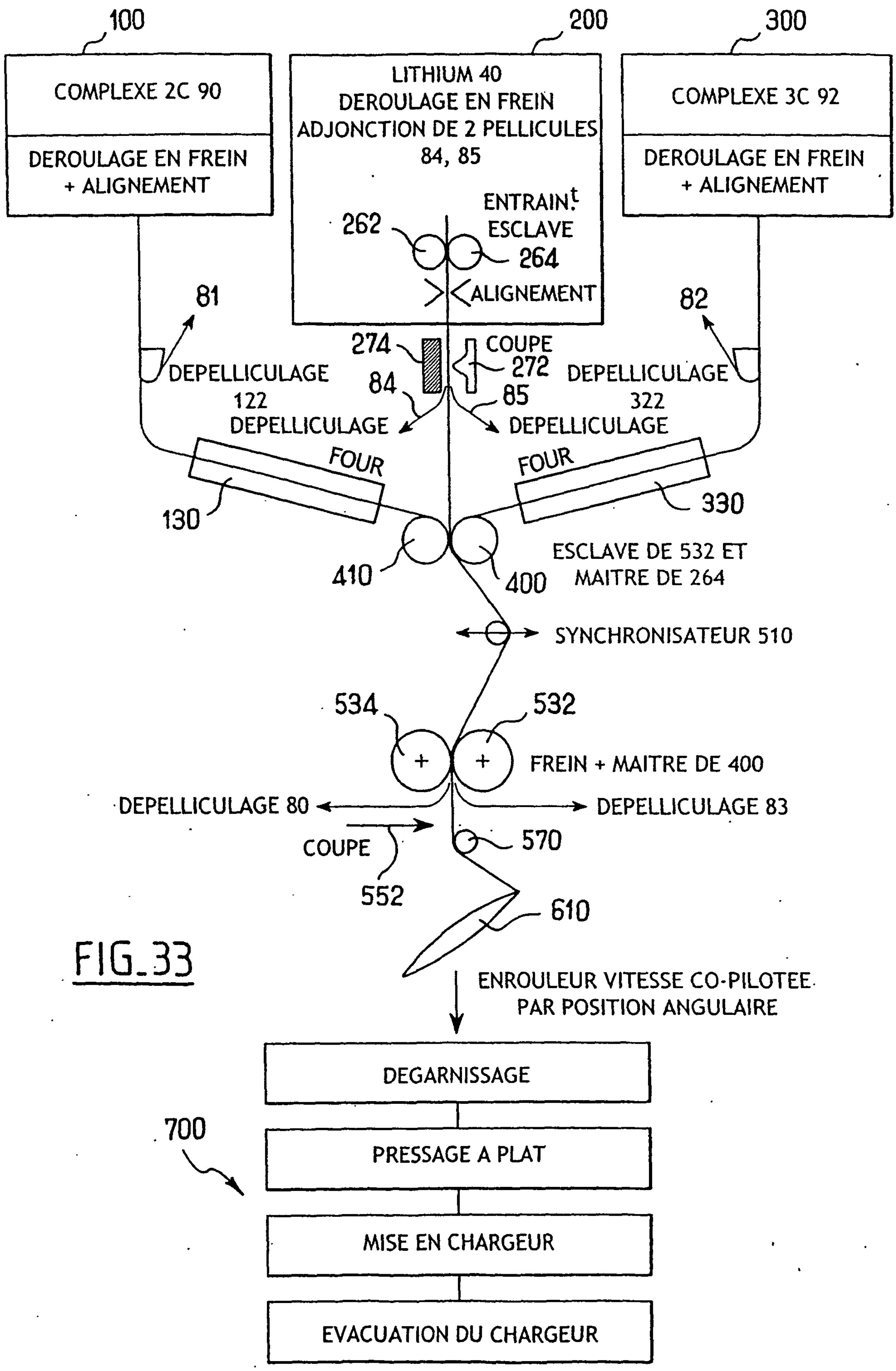
100
COMPLEXE 2C 90
DEROULAGE EN FREIN
+ ALIGNEMENT
200
LITHIUM 40
DEROULAGE EN FREIN
ADJONCTION DE 2 PELLICULES
84, 85
ENTRAIN^t
ESCLAVE
262
264
ALIGNEMENT
300
COMPLEXE 3C 92
DEROULAGE EN FREIN
+ ALIGNEMENT
81
82
274
COUPE
272
DEPELLICULAGE
122
84
85
DEPELLICULAGE
322
DEPELLICULAGE
DEPELLICULAGE
FOUR
FOUR
130
330
410
400
ESCLAVE DE 532 ET
MAITRE DE 264
SYNCHRONISATEUR 510
534
532
FREIN + MAITRE DE 400
DEPELLICULAGE 80
DEPELLICULAGE 83
COUPE
552
570
610
ENROULEUR VITESSE CO-PILOTEE
PAR POSITION ANGULAIRE
DEGARNISSAGE
700
PRESSAGE A PLAT
MISE EN CHARGEUR
EVACUATION DU CHARGEUR

FIG_33

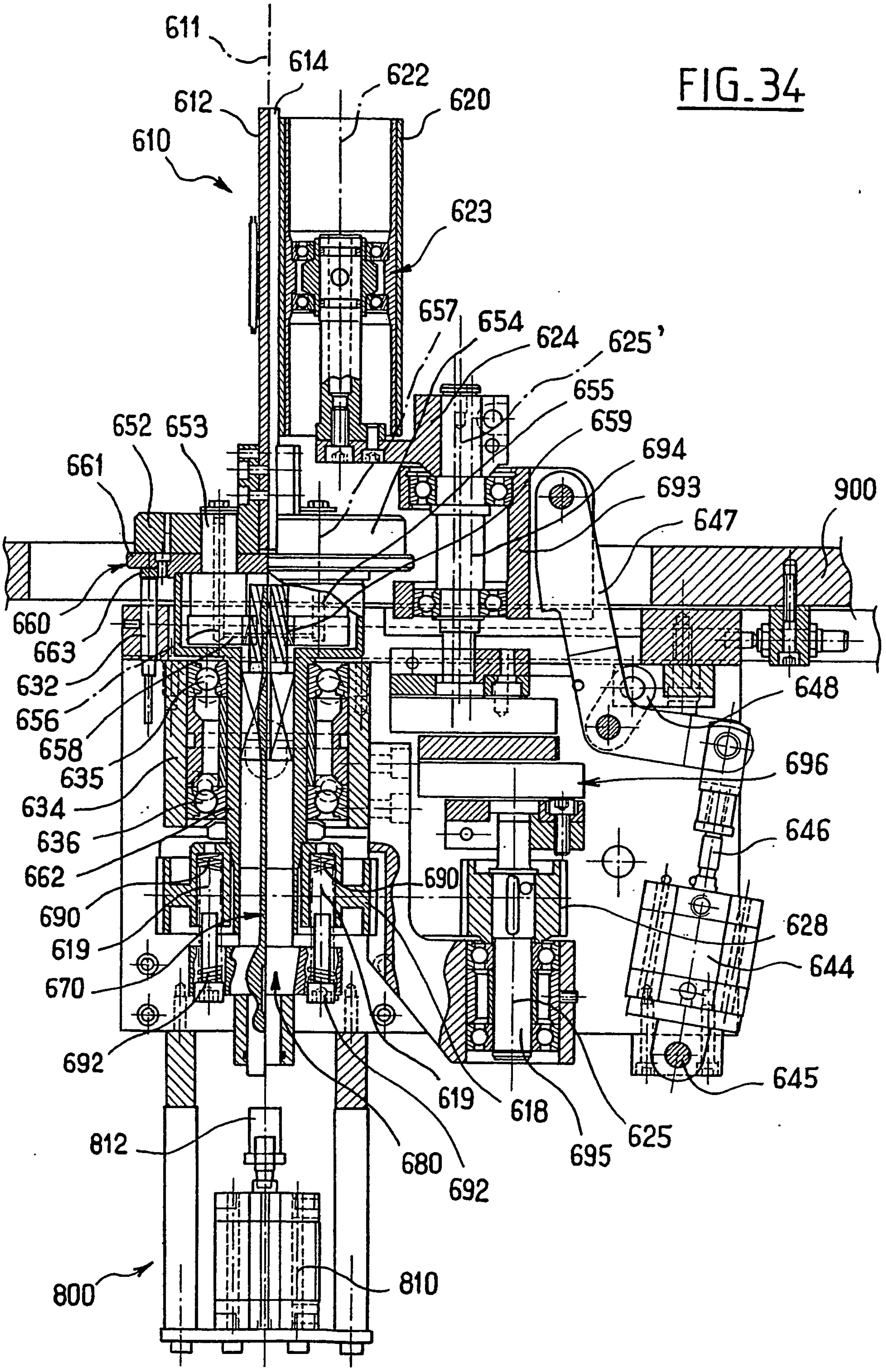
FIG_34
611
614
622
612
620
610
623
657
654
624
625'
655
659
694
652
653
693
661
900
647
660
663
632
656
658
635
634
636
662
690
690
619
670
692
648
696
646
628
644
645
619
618
695
625
680
692
812
800
810

FIG.35

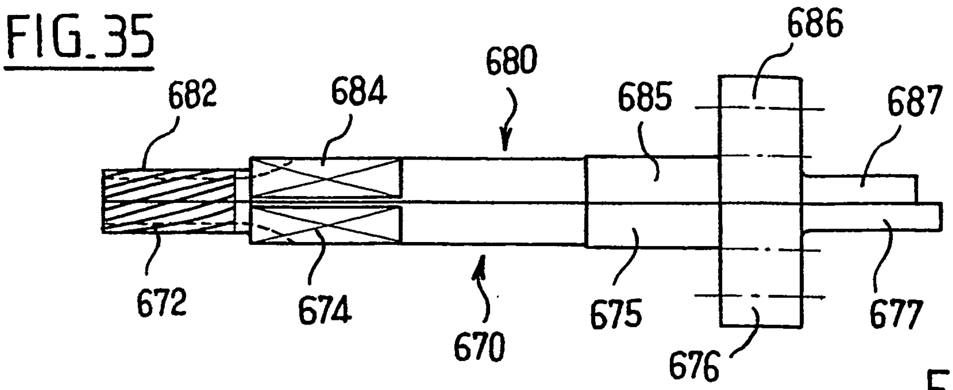


FIG.36

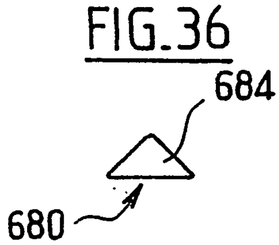


FIG.37

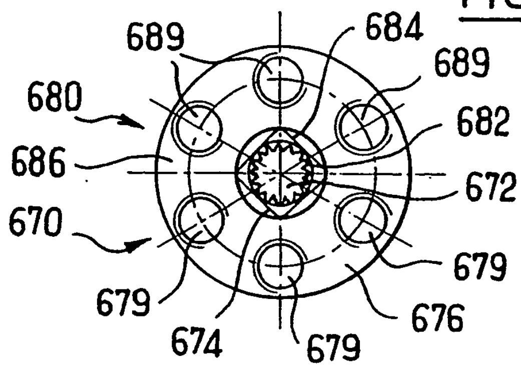


FIG.38

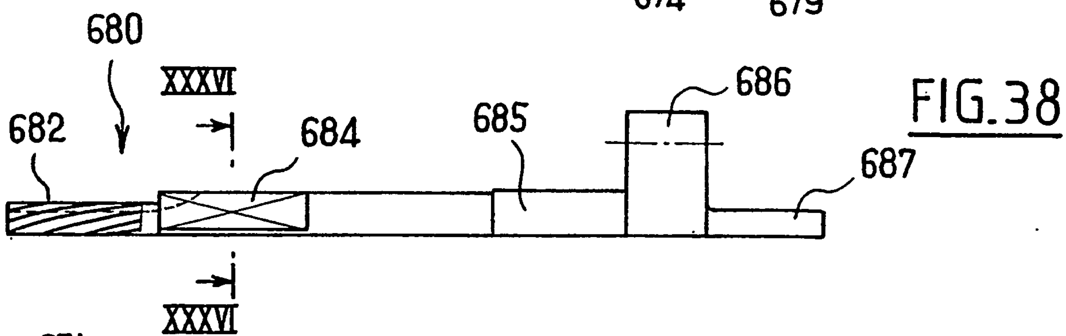


FIG.39

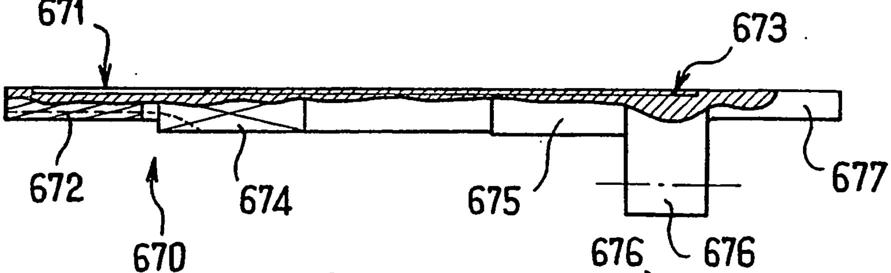


FIG. 40

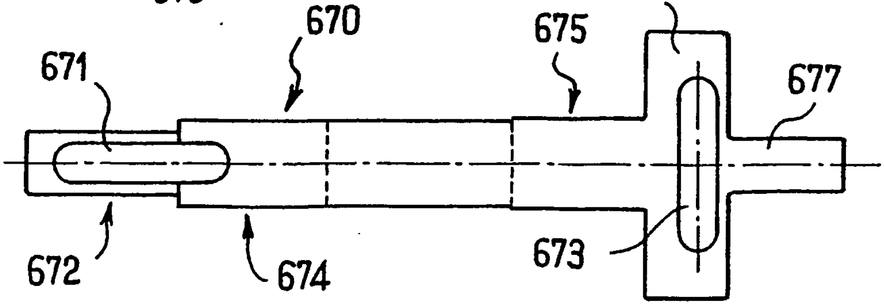

FIG. 41

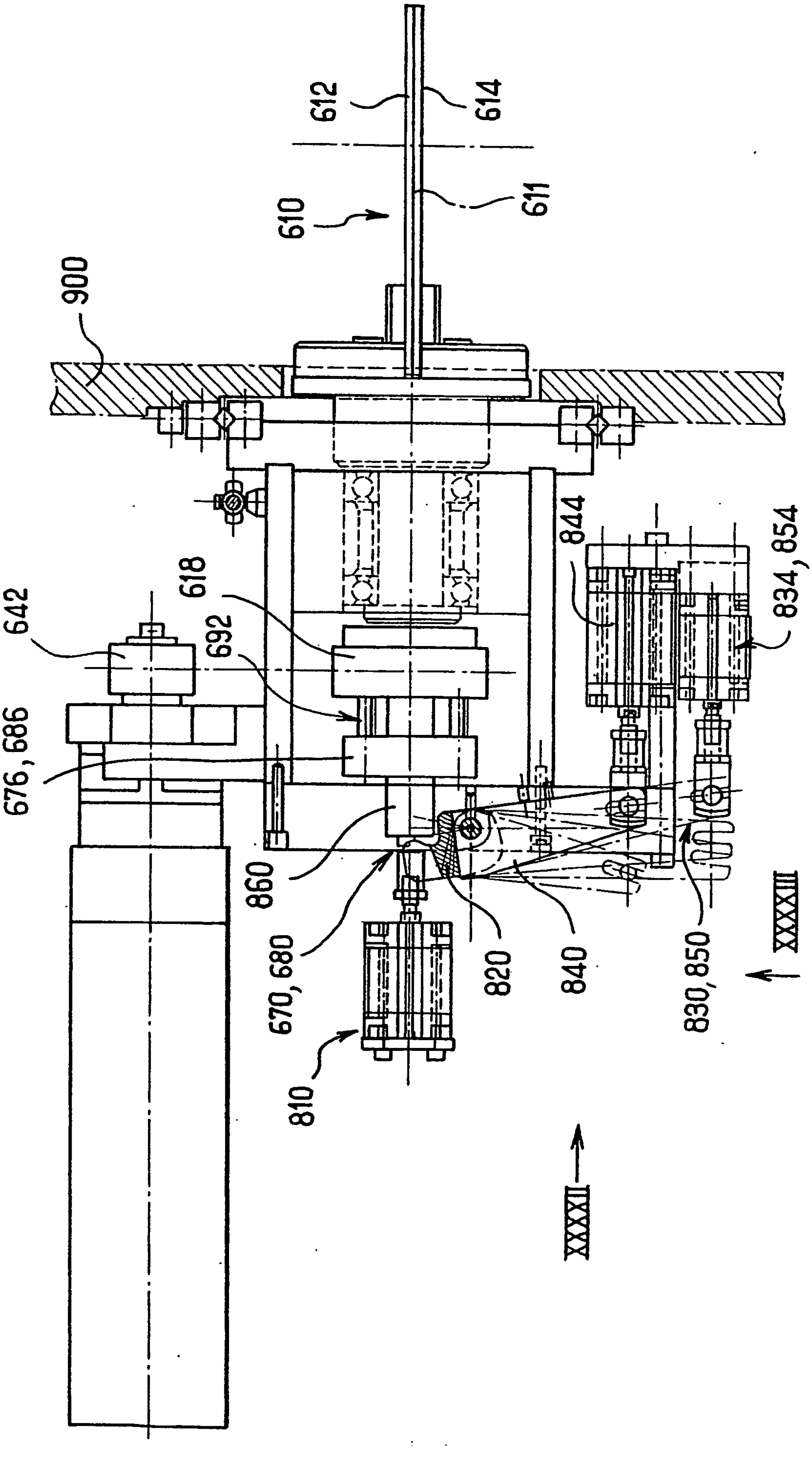
612
614
610
611
900
642
618
692
676, 686
844
834, 854
860
670, 680
820
840
830, 850
810
XXXXIII
XXXXII

FIG_42

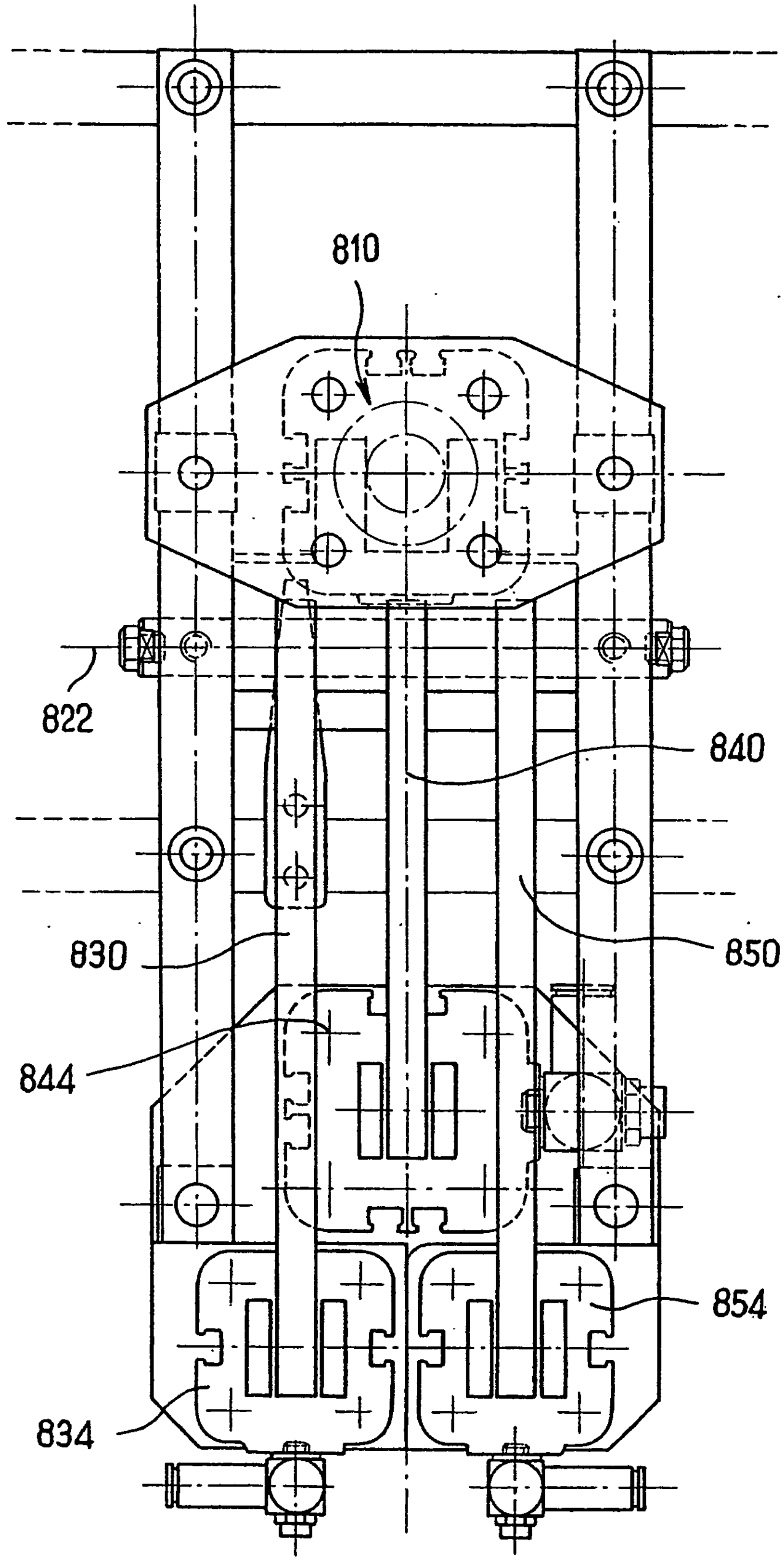

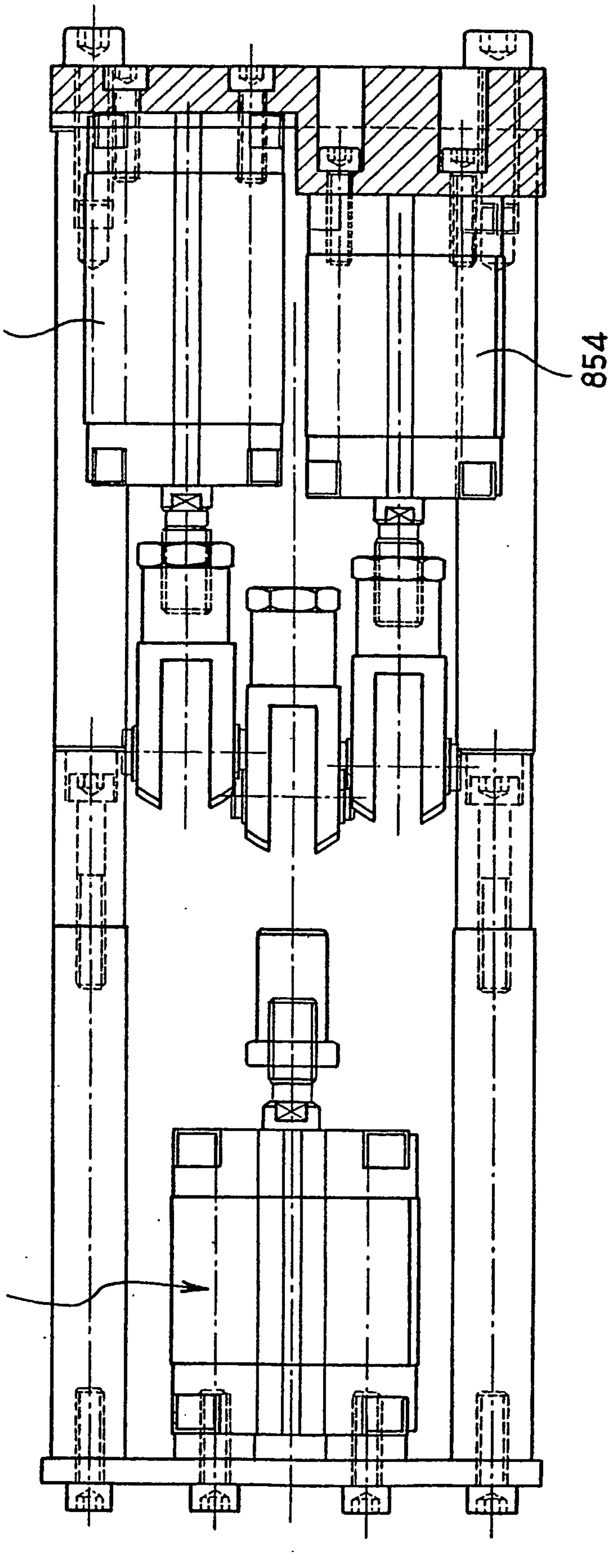


FIG.43

FIG_44A

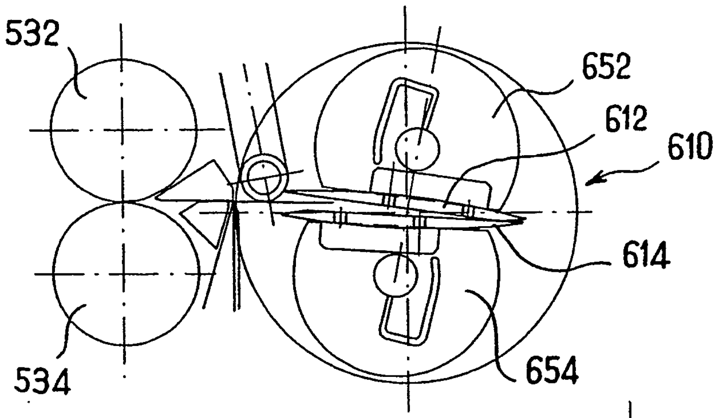


FIG_44B

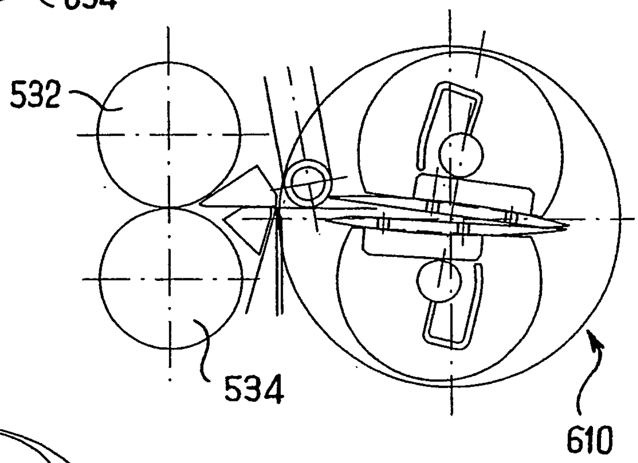


FIG_44C

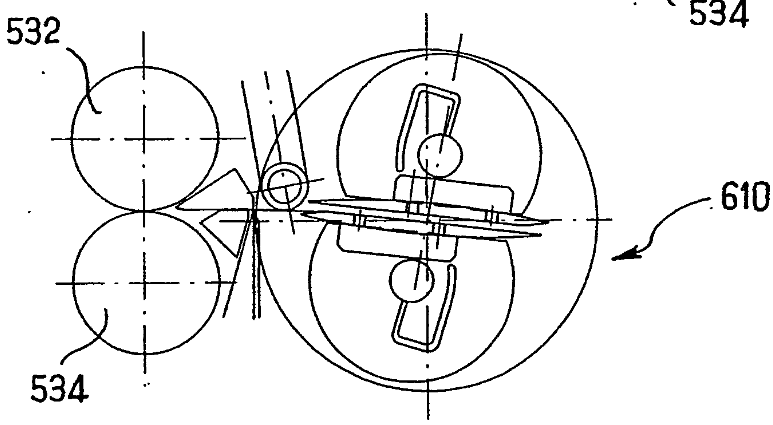


FIG_44D

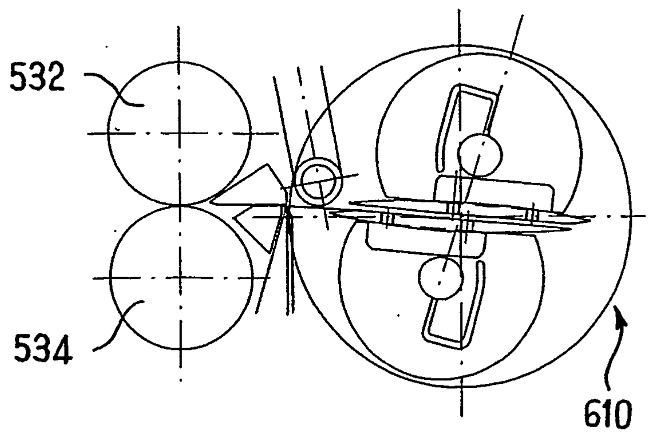

FIG_44E

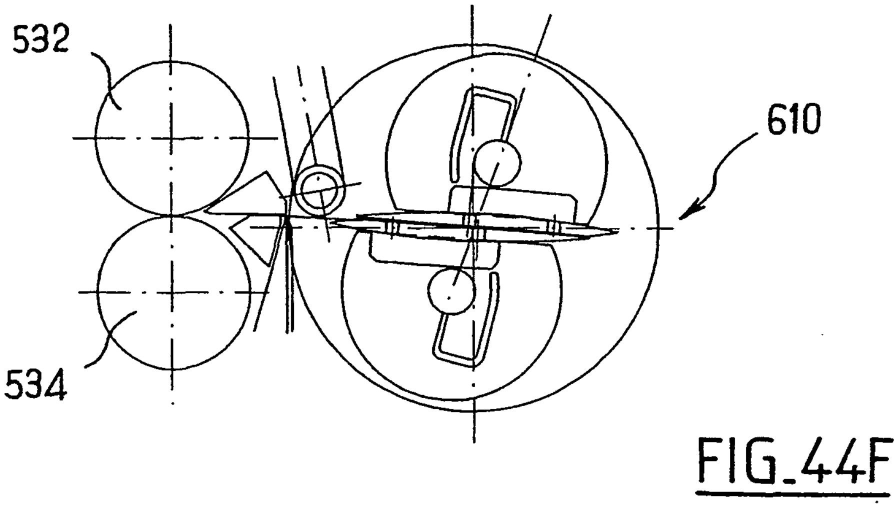


FIG_44F

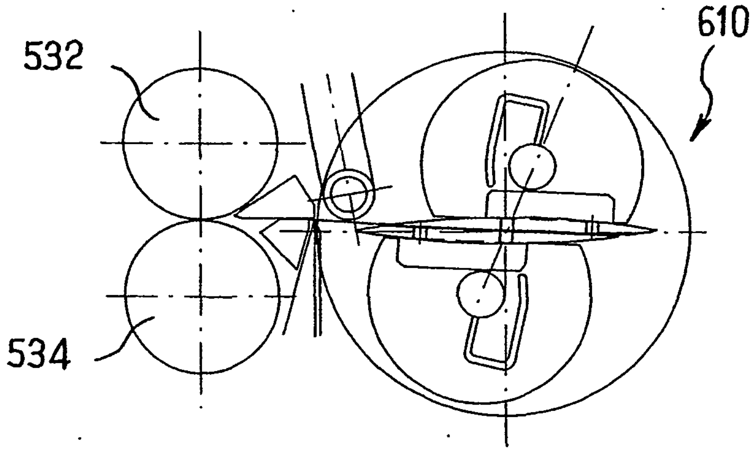


FIG_45

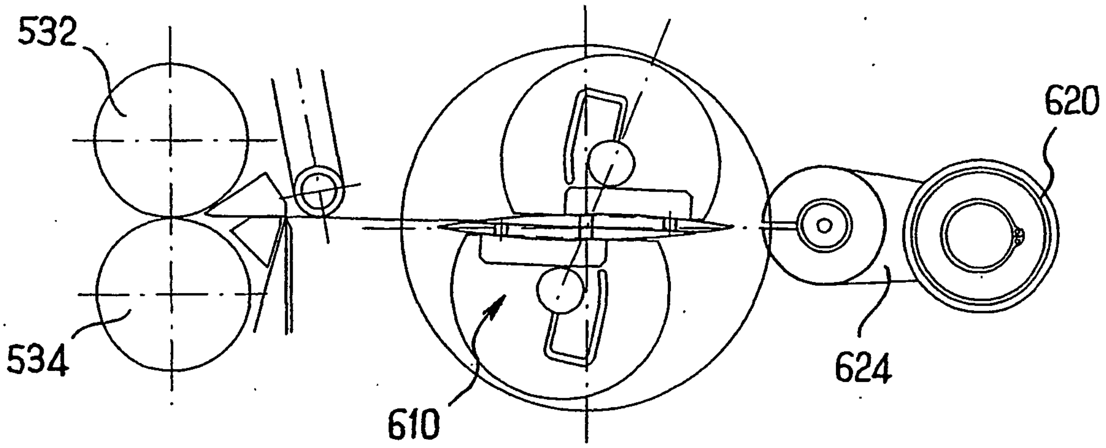

FIG_46A

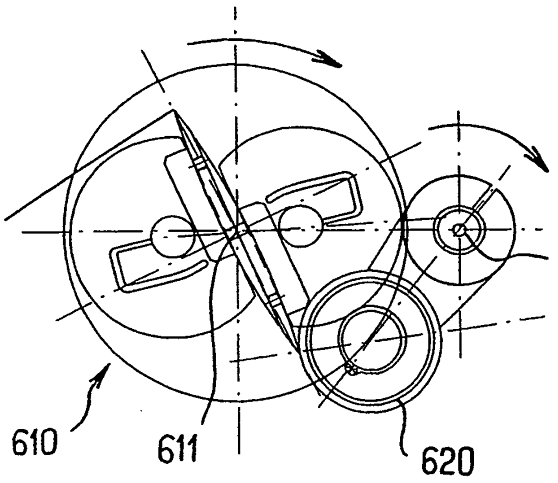


FIG_46B

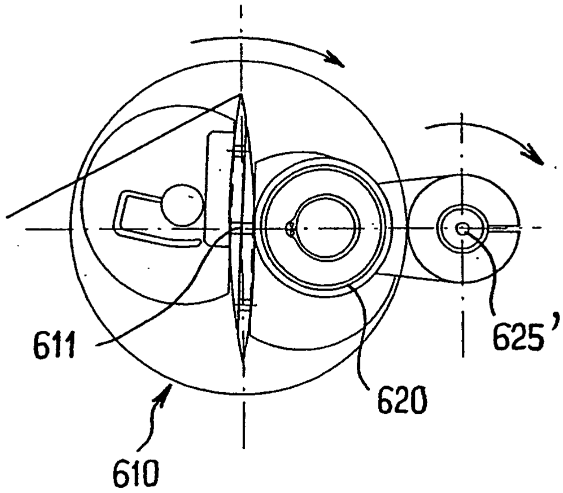


FIG_46C

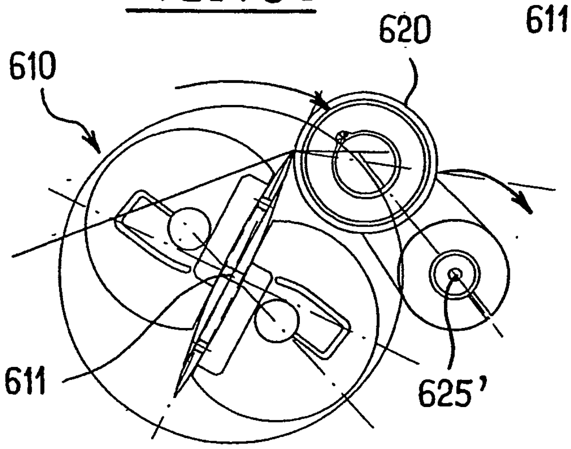


FIG_46D

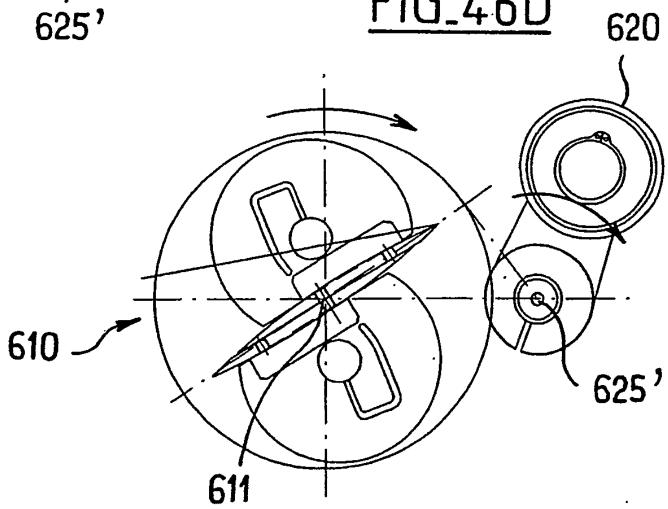

FIG_46E

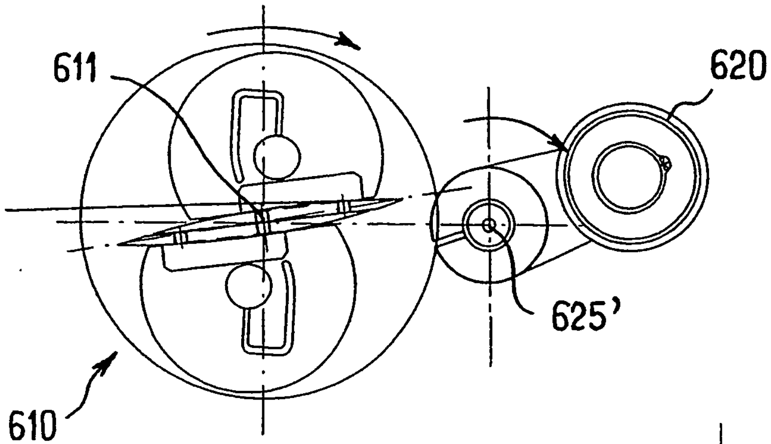


FIG_46F

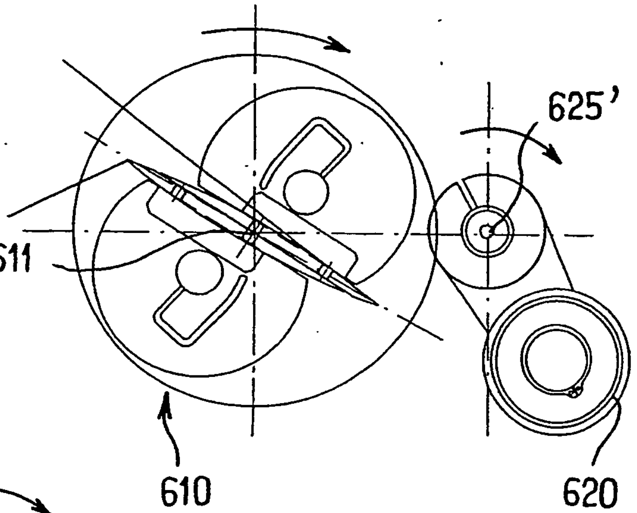


FIG_46G

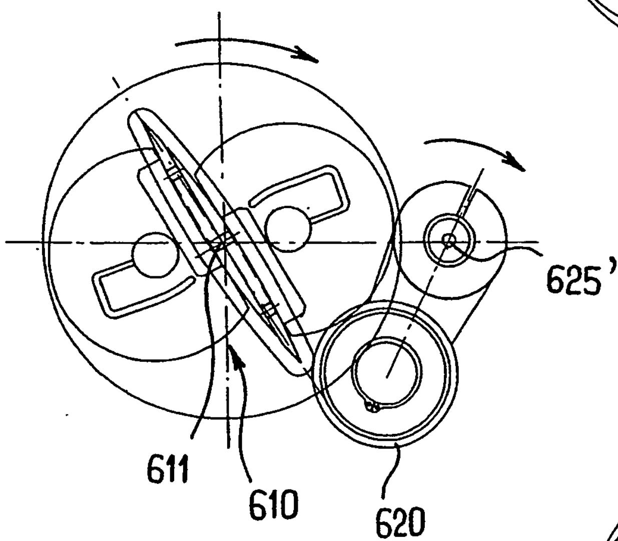


FIG_46H

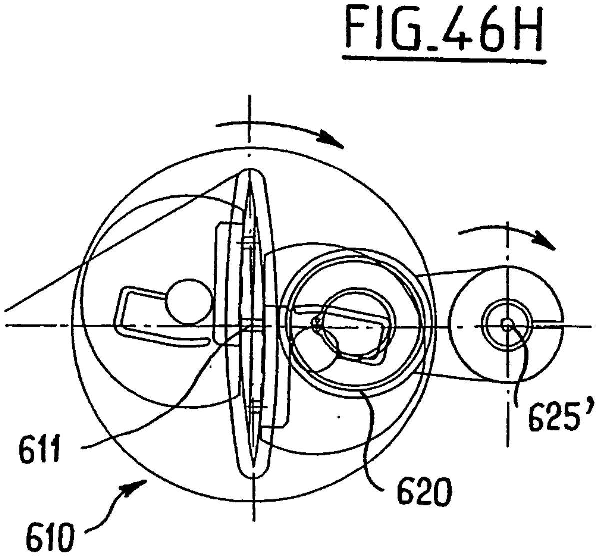

FIG_47A

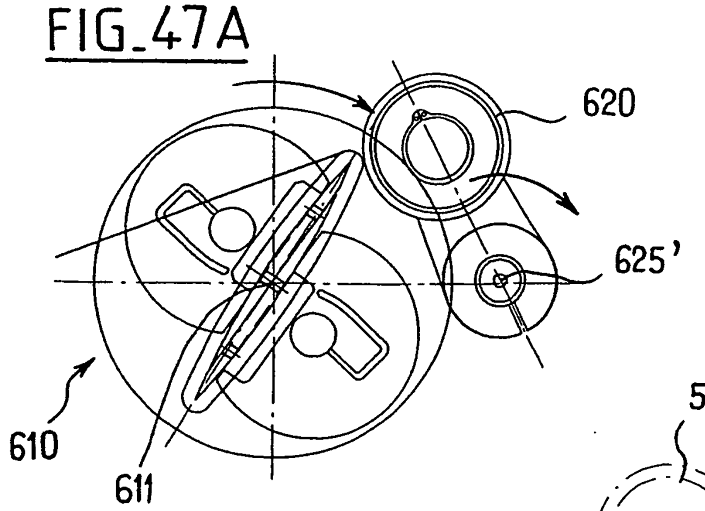


FIG_47B

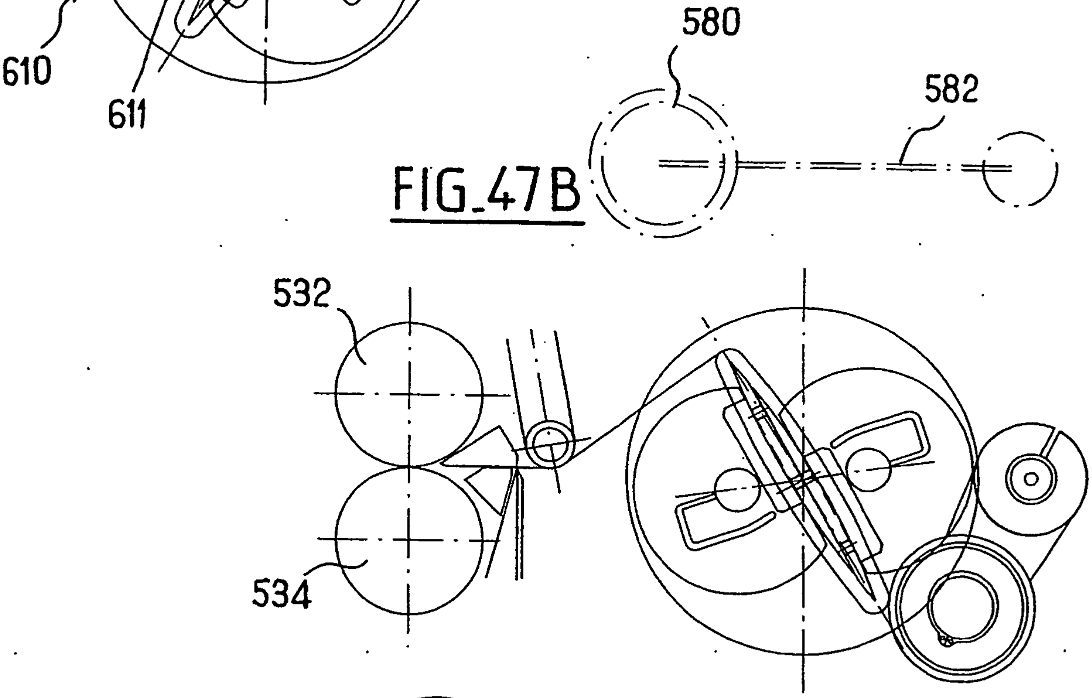


FIG_47C

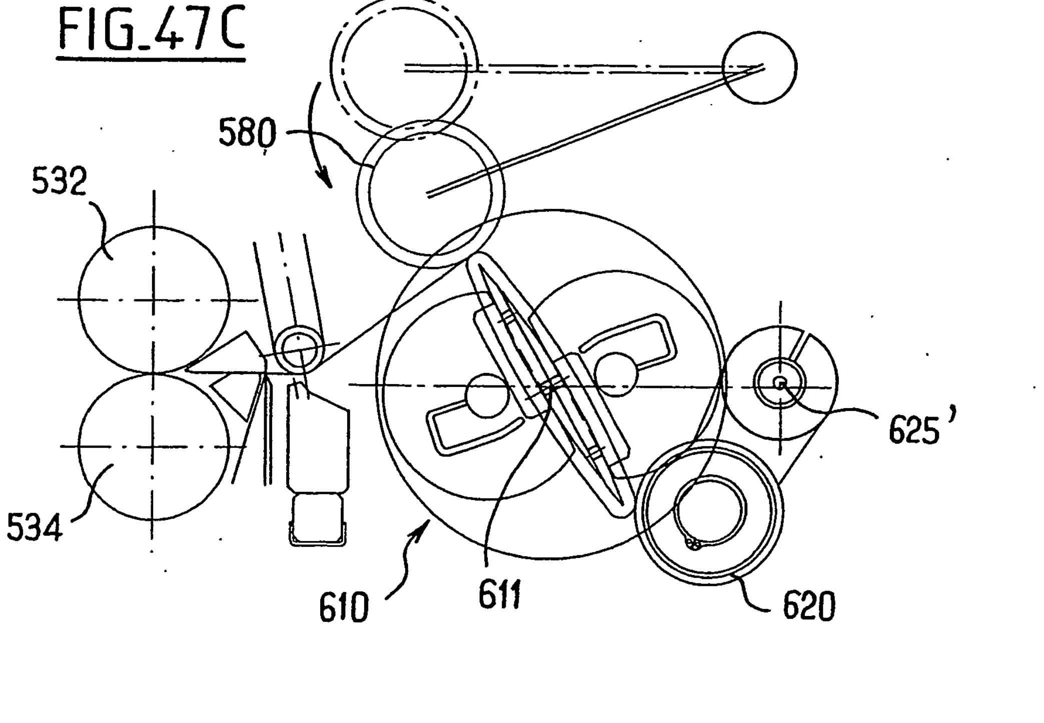

FIG_47D

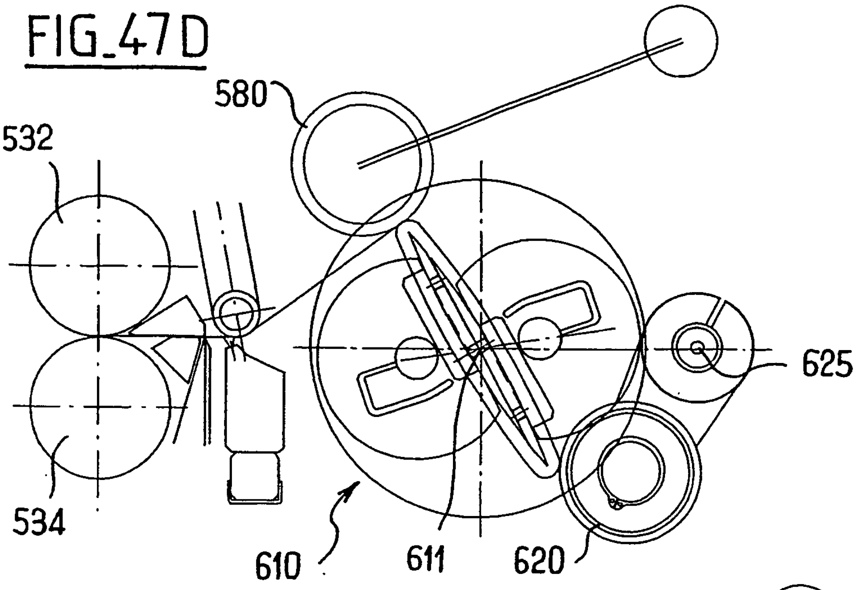


FIG_47E

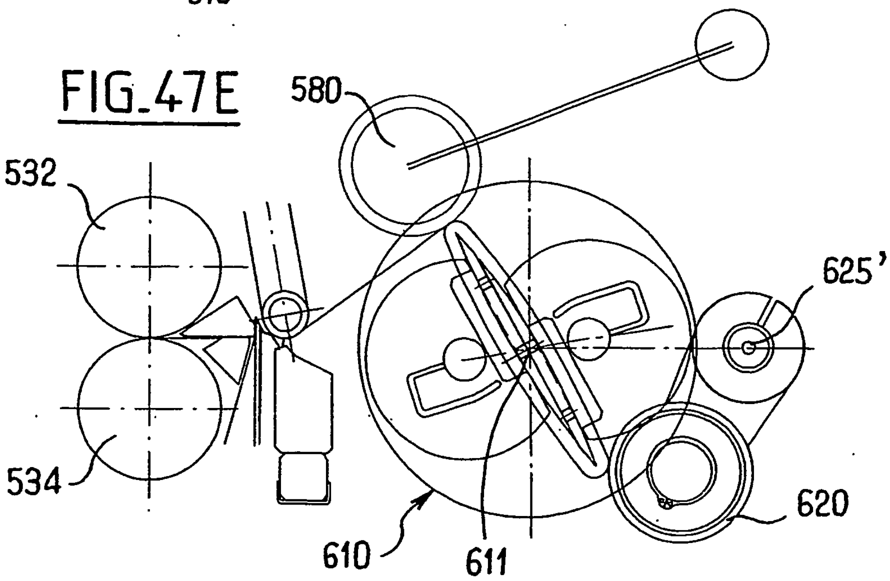


FIG_47F

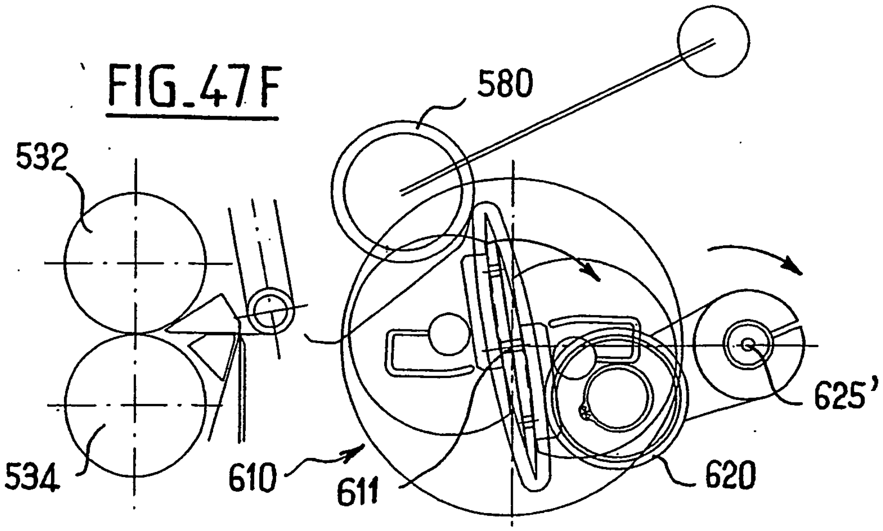

FIG_48

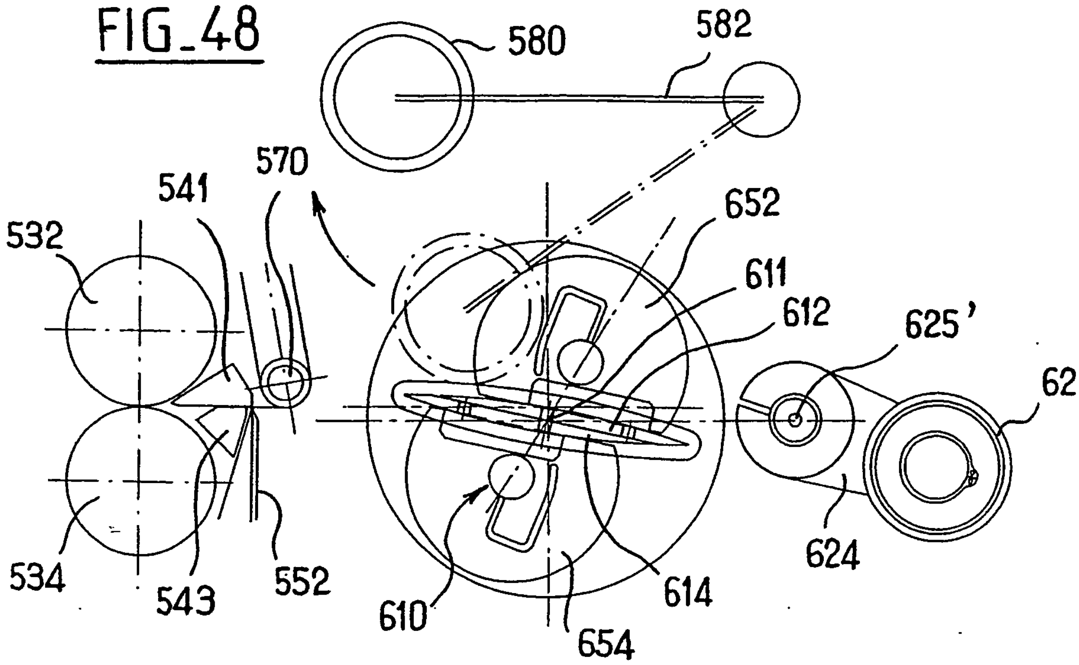


FIG_49

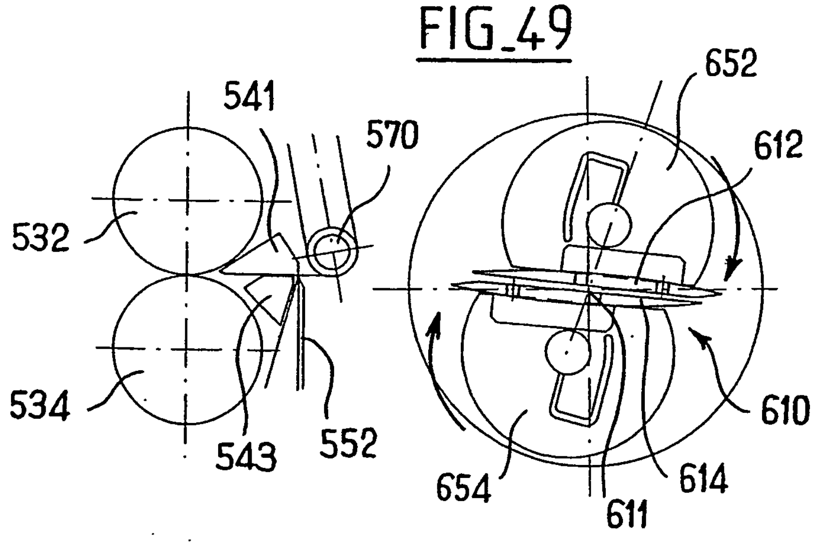


FIG_50

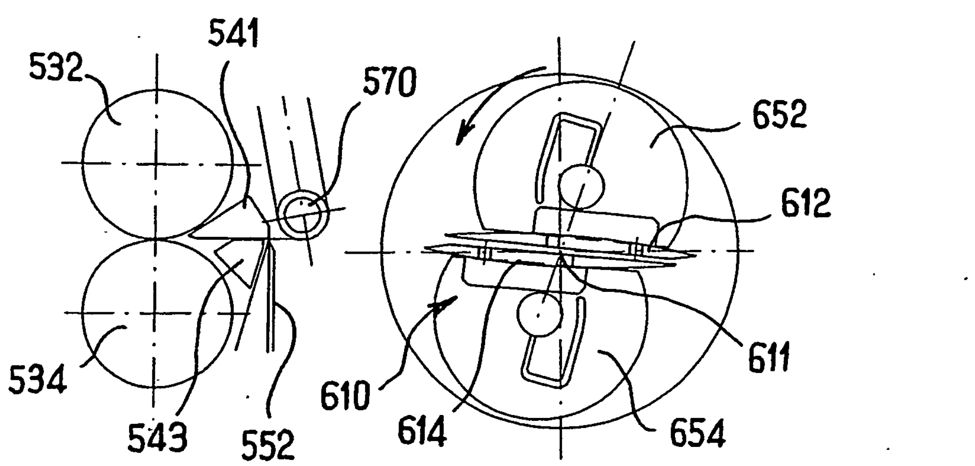

FIG_51A

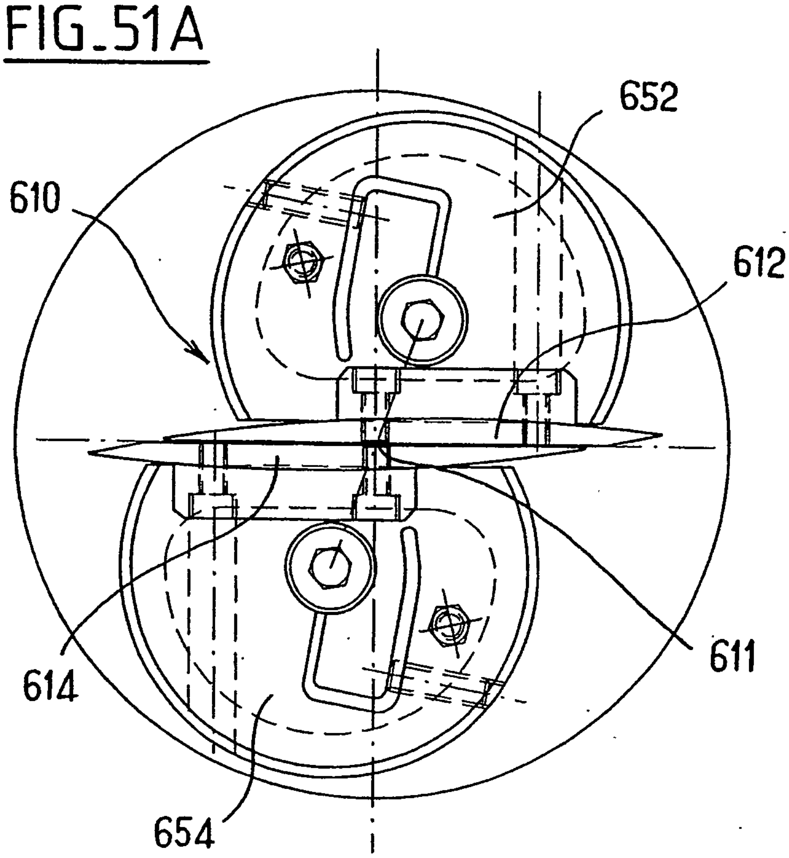


FIG_51B

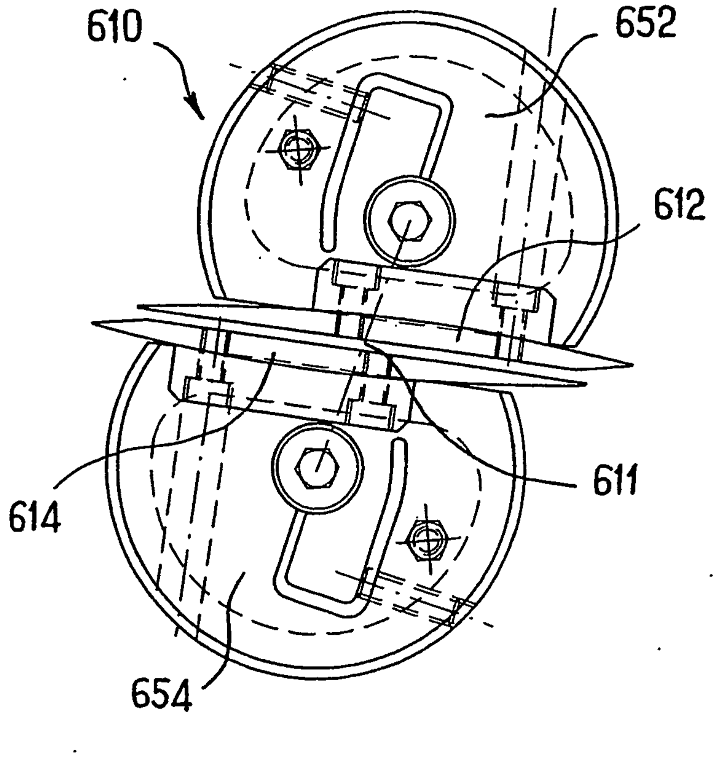

FIG_51C

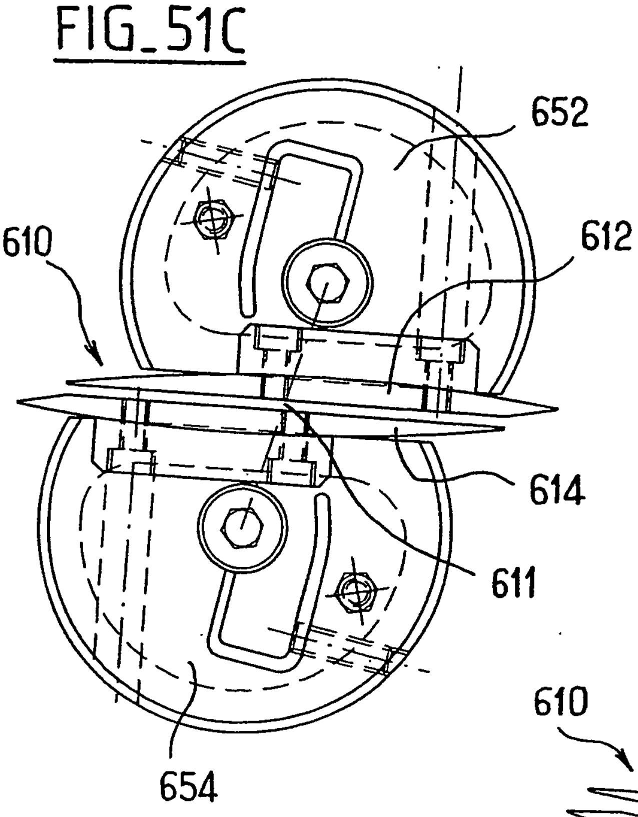


FIG_51D

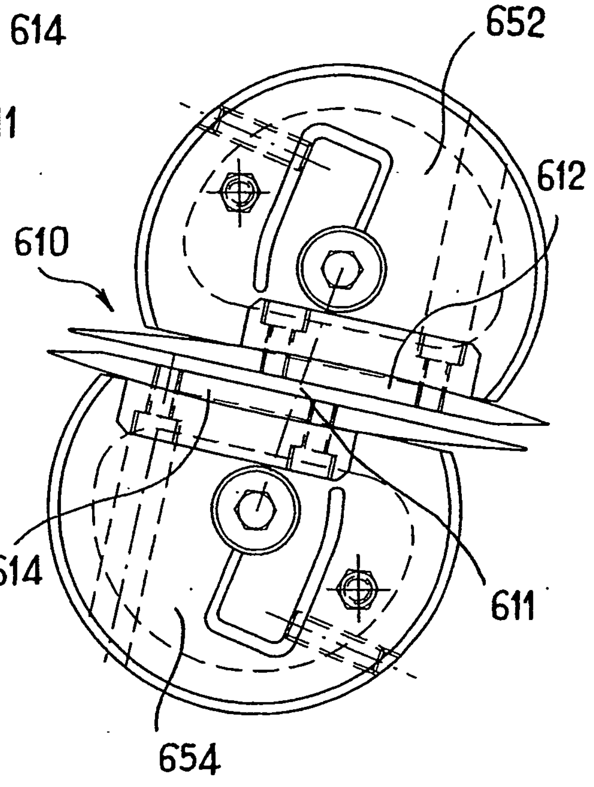


FIG_51E

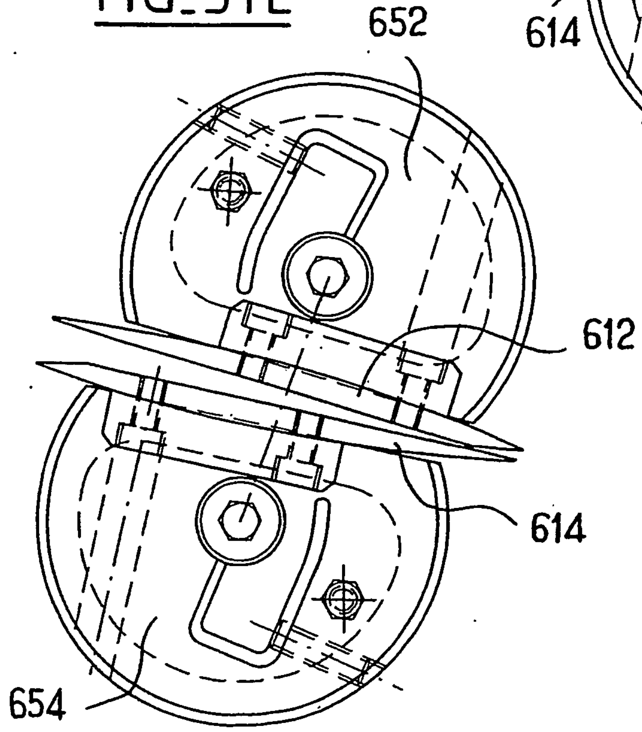

FIG.52A

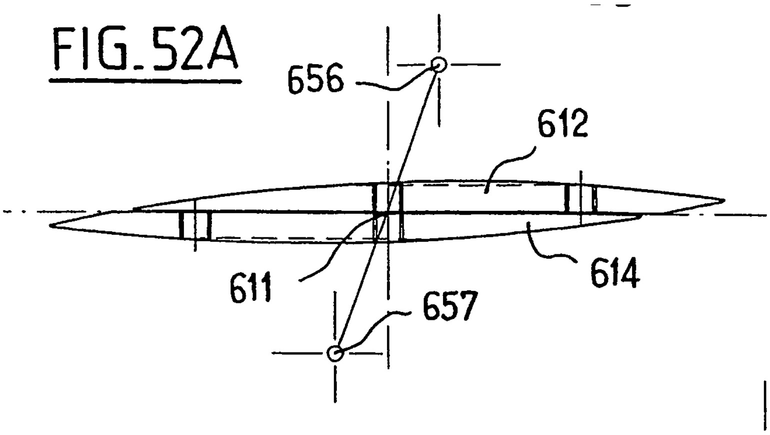


FIG.52B

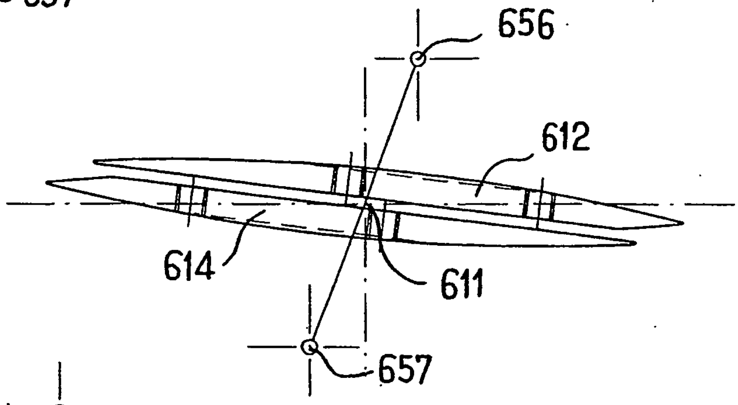


FIG.52C

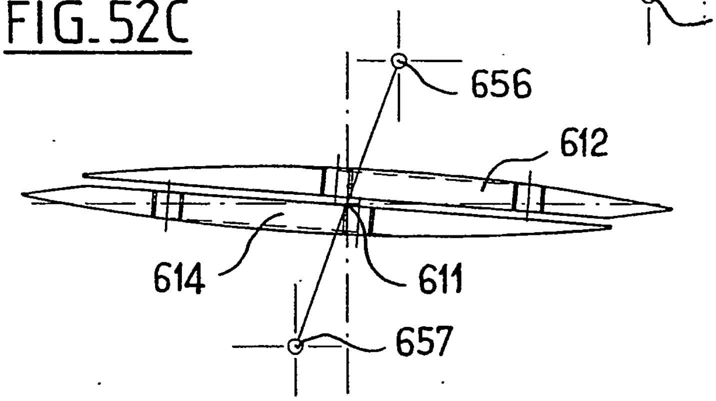


FIG.52D

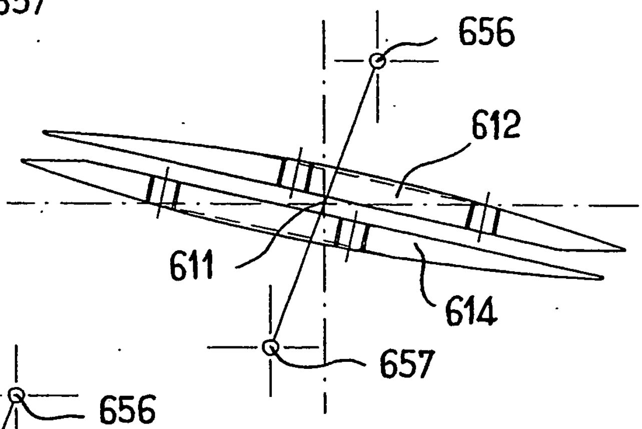


FIG.52E

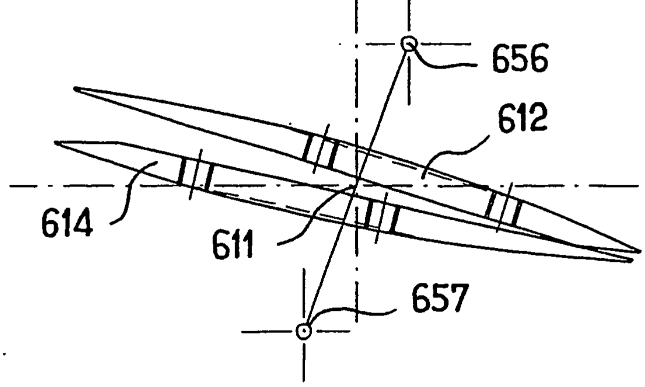

FIG.53A

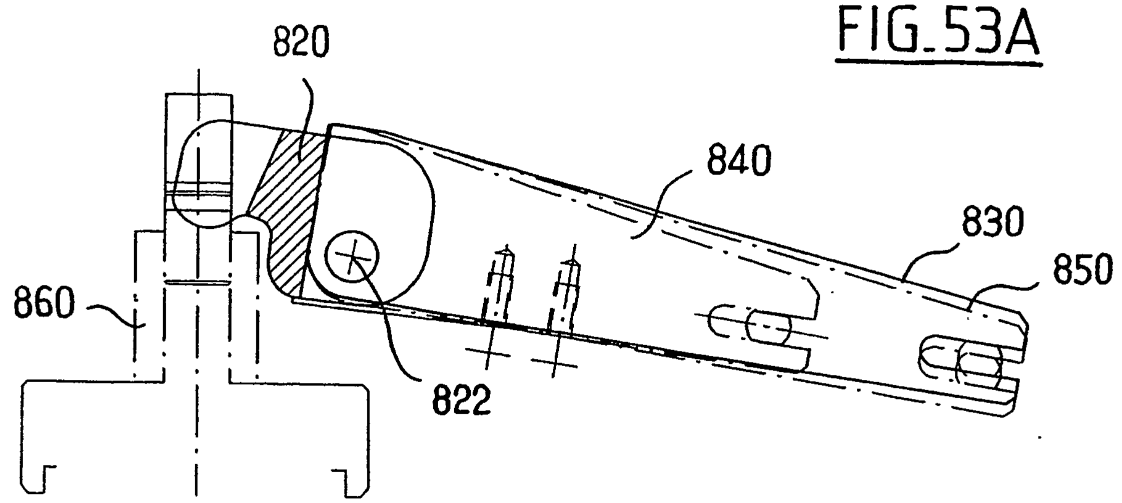


FIG.53B

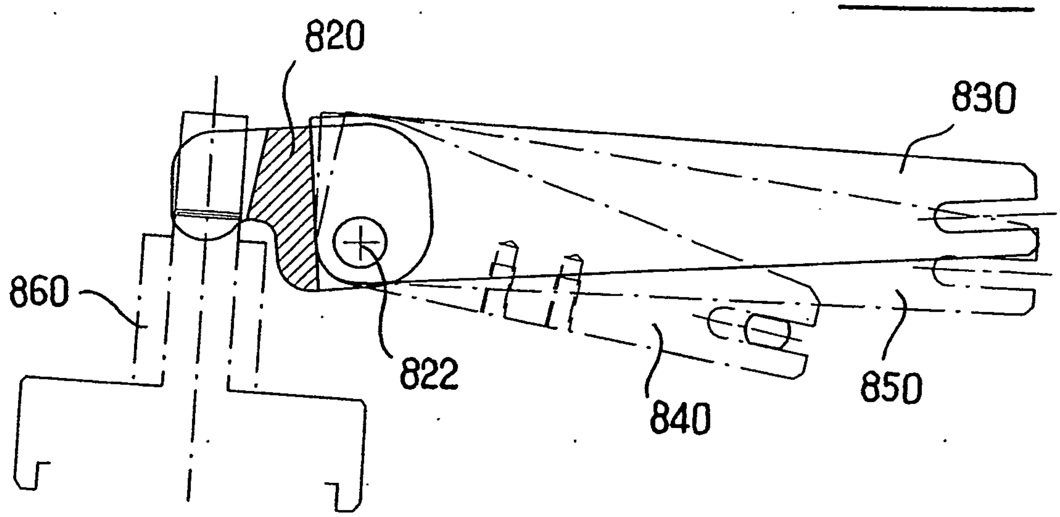


FIG.53C

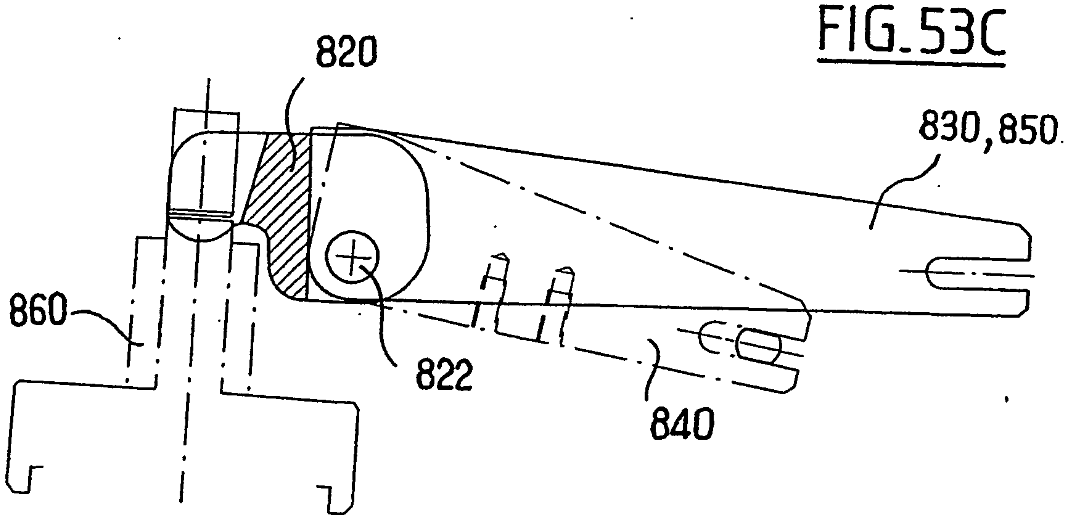

FIG.53D

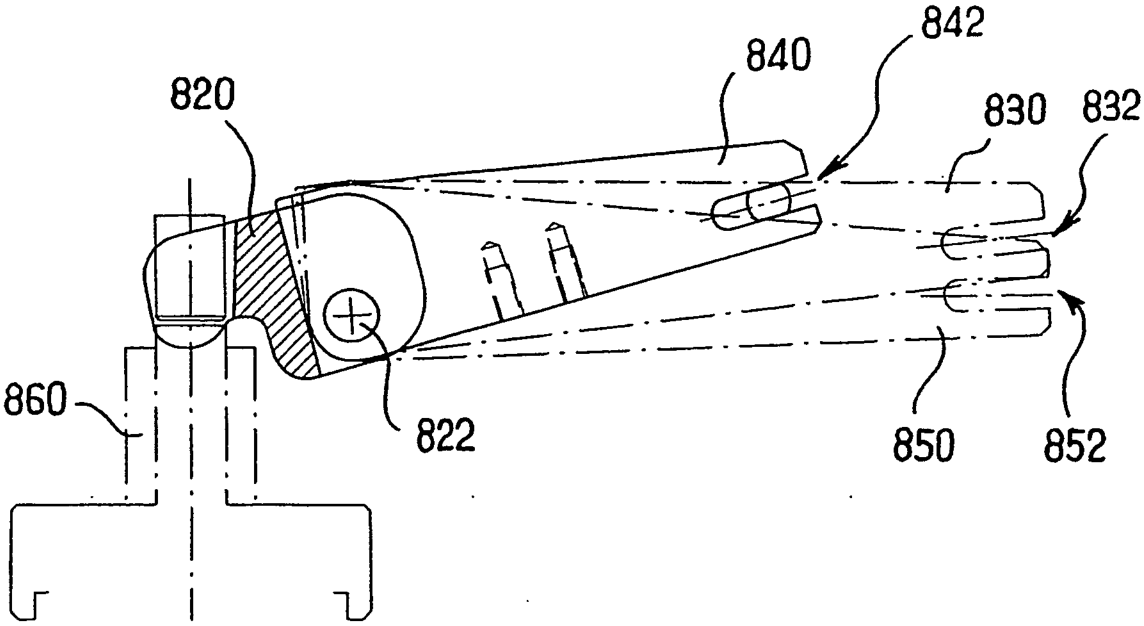


FIG.53E

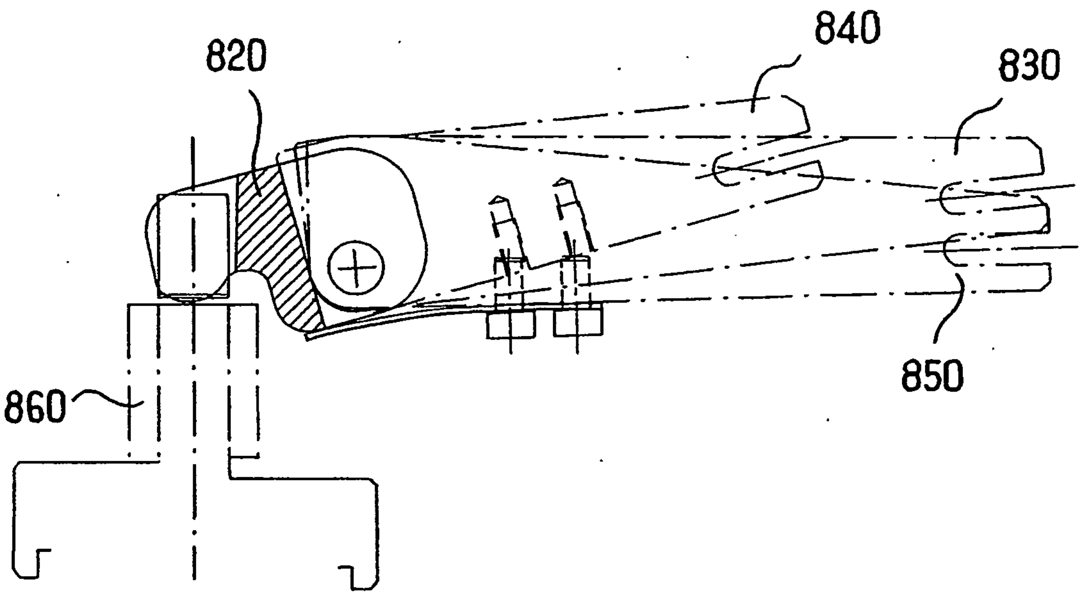

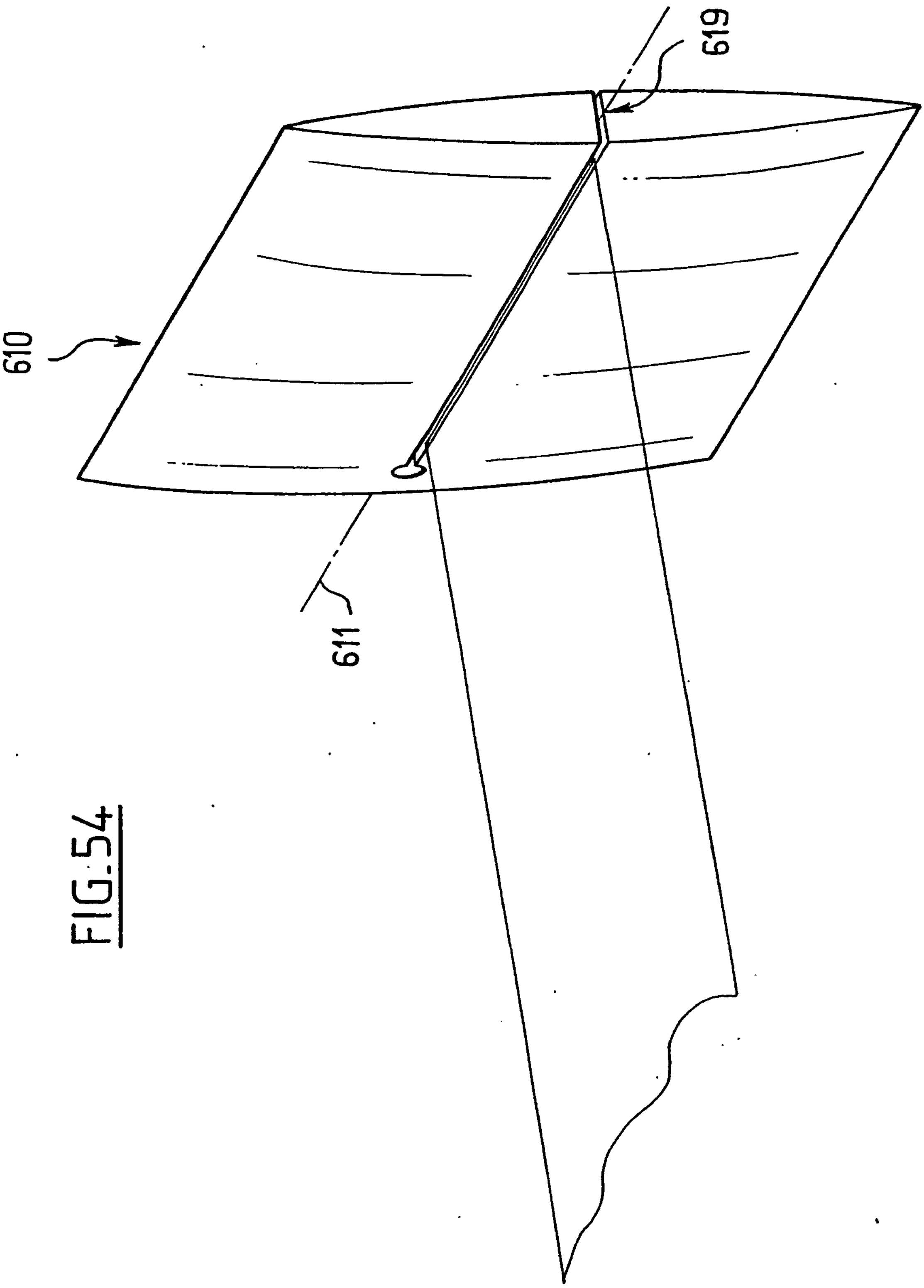


FIG.54

FIG.55A

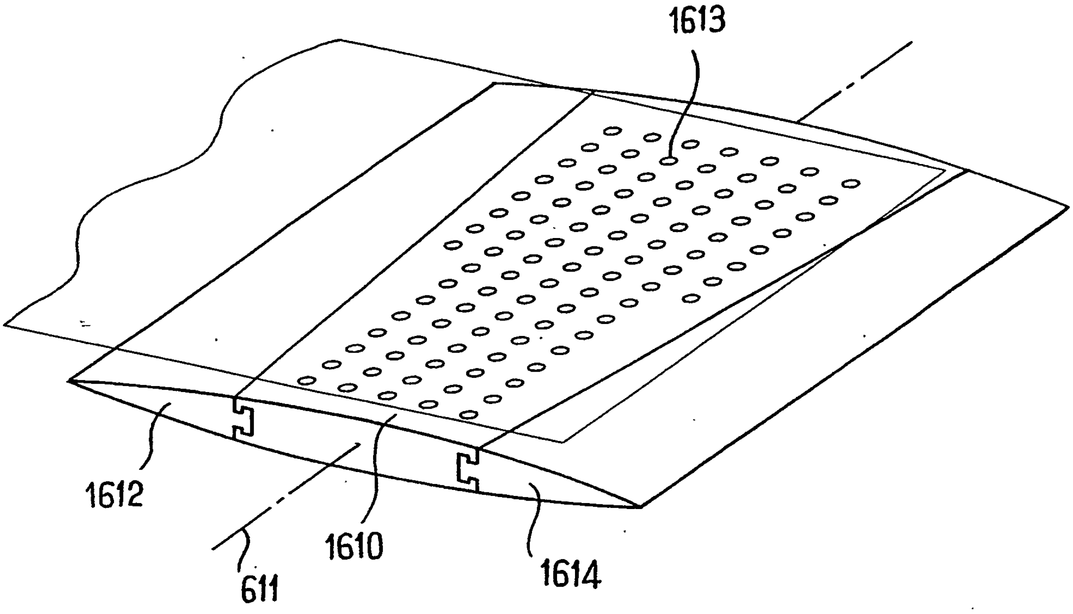


FIG.55B

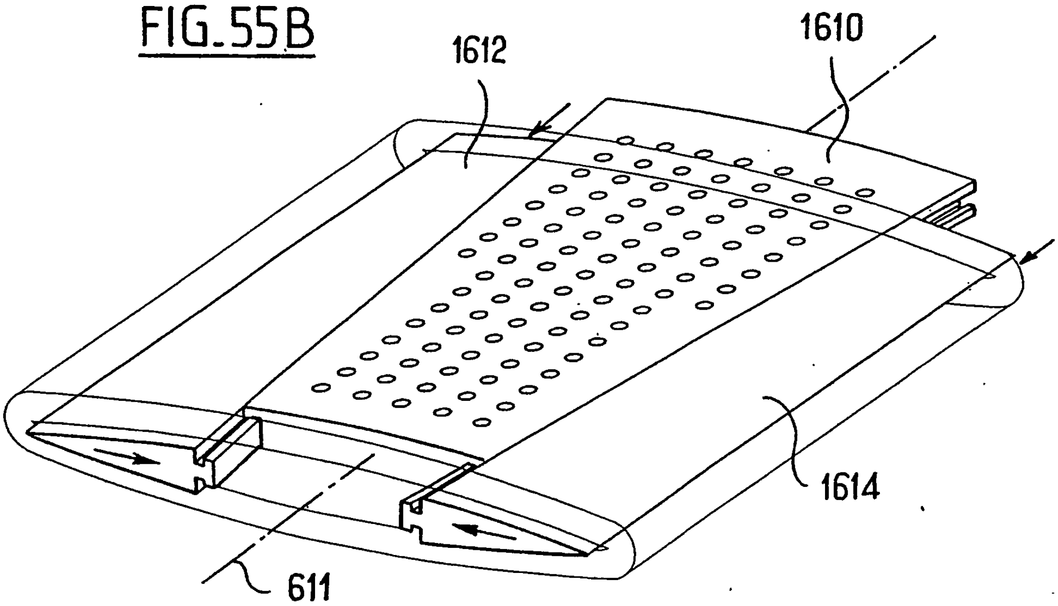

FIG.56C

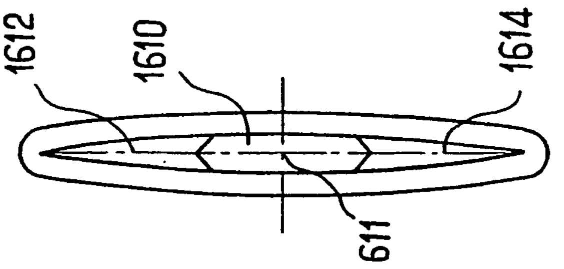


FIG.56B

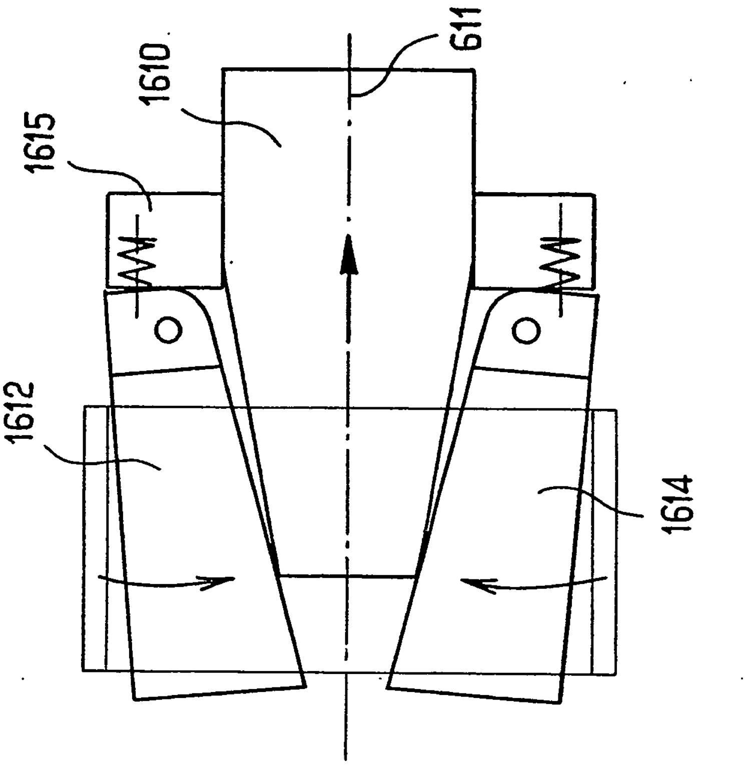


FIG.56A

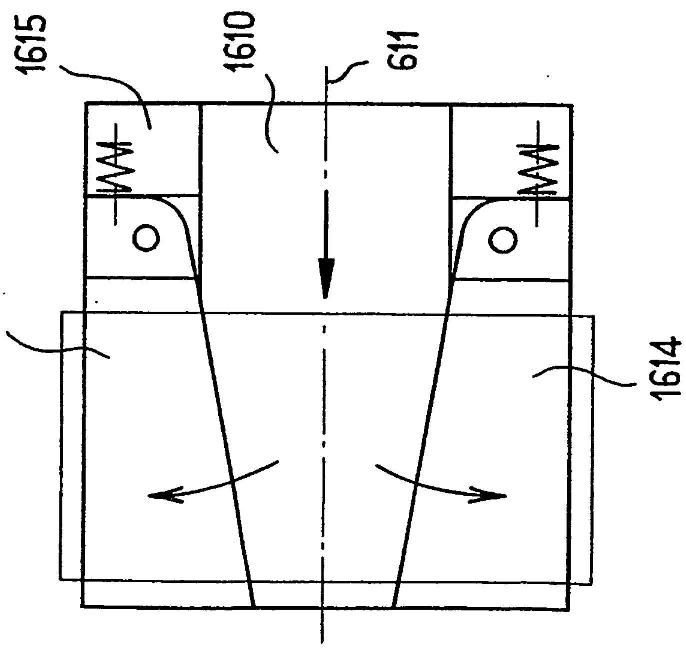

FIG_57

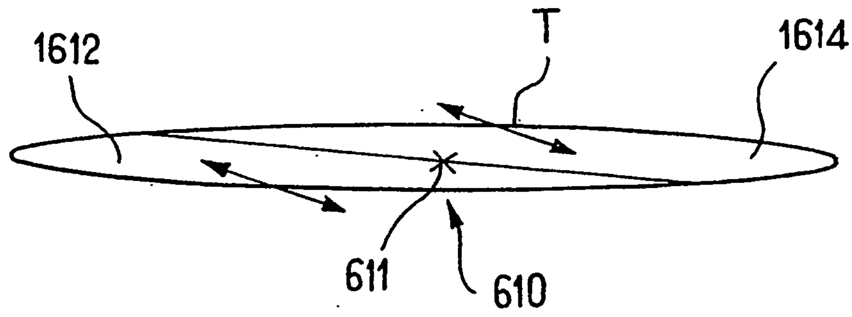


FIG_58

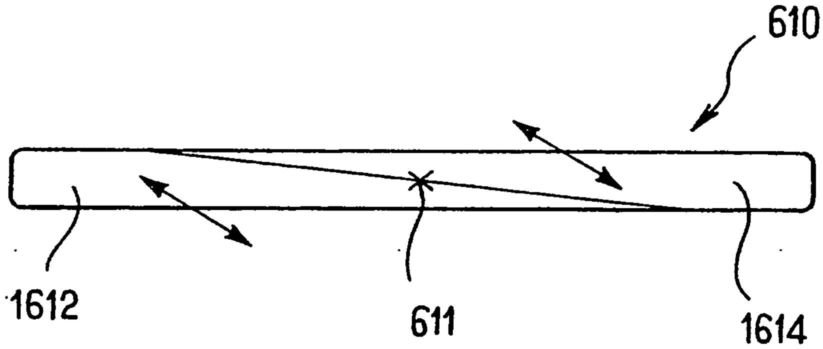


FIG_59

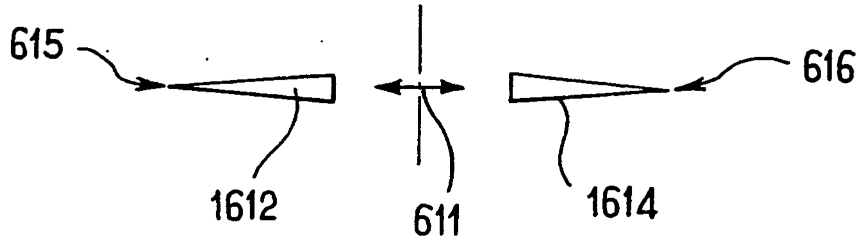

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2737339 A
- FR 2759087 A
- FR 2759211 A
- FR 2808622 A